# EUROPÄISCHE PATENTANMELDUNG

(11) **EP 4 421 417 A1**
(43) Veröffentlichungstag der Anmeldung: **28.08.2024**
(21) Anmeldenummer: 24158988.6
(22) Anmeldetag: 21.02.2024
(51) Int. Cl.: F25D 3/06, B65G 1/04, F25D 3/10, F25D 3/12, F25D 3/14, F25D 17/06, F25D 25/04, F25D 29/00

(54) **LAGERSYSTEM SOWIE VERFAHREN ZU DESSEN BETRIEB**

(30) Priorität: 24.02.2023 DE 102023104626
(71) Anmelder: Viessmann Refrigeration Solutions GmbH, 35108 Allendorf (DE); Knapp Nano Warehousing Beteiligungs GmbH, 80802 München (DE)
(72) Erfinder: Kurzay, Jörg, 65201 Wiesbaden (DE); Stein, Michael, 08538 Weischlitz (DE); Schier, Marcel, 55288 Partenheim (DE); Mayershofer, Christopher, 85235 Odelzhausen (DE); Prüglmeier, Marco, 80634 München (DE); Pertzborn, Till, 80336 München (DE); Sperl, Thomas, 80639 München (DE)
(74) Vertreter: Sperschneider, Alexandra

(57) **Zusammenfassung**

Die Erfindung betrifft ein Lagersystem sowie Verfahren zu dessen Betrieb.

## Beschreibung

Die vorliegende Erfindung betrifft ein Lagersystem nach Anspruch 1 sowie ein Verfahren zu dessen Betrieb nach Anspruch 9 oder 10.

### Hintergrund

Auch in der heutigen Zeit wird noch viel manuell kommissioniert, so dass Angestellte in Lagerhallen die entsprechenden Bestellungen zusammensuchen müssen. Hierdurch werden hohe Personalkosten bedingt. Zudem braucht eine solche manuelle Zusammenstellung stets deutlich länger, als wenn dieser Vorgang maschinell durchgeführt würde.

Erschwert wird dies, wenn es hierbei um Güter geht, welche bei bestimmten Umgebungsparametern, wie beispielsweise Temperatur, Luftfeuchtigkeit oder dergleichen gelagert werden müssen.

Bislang gestaltet es sich schwierig Güter mit unterschiedlichen Lager- und Transporttemperaturen effektiv in einem gemeinsamen Lager zusammen zu lagern. Einerseits ist die Kühlkette einzuhalten und andererseits soll in der heutigen Zeit nicht zu viel Energie, beispielsweise für die Kühlung oder Heizung gesamter Räume oder Hallen, aufgewendet werden.

In der Praxis sind aktive Kühlvorrichtungen bekannt, welche zum Kühlen immer eine Stromquelle benötigen, um den Kühlvorgang aufrechtzuerhalten. Fällt die Stromquelle aus, wird die Kühlkette unterbrochen und die Waren verderben bzw. werden unbrauchbar. Zudem sind derartige Aktivkühlungen technisch sehr komplex und bedingen ein hohes Gewicht bzw. einen großen Platzbedarf. Gleiches gilt auch für Heizvorrichtungen.

So ist es nahezu unmöglich derartige Temperierräume aufgrund der unzureichenden Deckenlast in Bestandsimmobilien zu integrieren. Zudem erweisen sich beispielsweise Aktivkühlungen als nachteilig, da sie stets nur einen einzigen engen Temperaturbereich abdecken. Sollen aber beispielsweise Waren mit unterschiedlichen Lagerungstemperaturen eingelagert oder transportiert werden, so bedarf es für jede Temperatur eines eigenen aktiv gekühlten Lagerraums bzw. eines aktiv gekühlten Transports. Dies ist logistisch und in Kostensicht nachteilhaft.

### Aufgabe

Daher ist es Aufgabe der vorliegenden Erfindung ein intelligentes Lagersystem bereitzustellen, mit welchem Personalkosten und auch insbesondere Energiekosten eingespart werden können.

### Lösung

Diese Lösung wird mit einem Lagersystem gemäß Patentanspruch 1 sowie dem nebengeordneten Verfahrensanspruch 9 und 10 gelöst.

Der Kern der vorliegenden Erfindung liegt in einem Lagersystem mit wenigstens drei physischen Einheiten,
a. wobei die erste physische Einheit als wenigstens eine Lager- und/oder Transporteinheit mit wenigstens einem austauschbaren, regenerierbaren Temperierelement ausgebildet ist,
b. wobei die zweite physische Einheit als wenigstens ein Regenerationsmagazin zur aktiven Regeneration von entladenen Temperierelementen aus Lager- und Transporteinheiten ausgebildet ist, und
wobei die dritte physische Einheit als wenigstens eine Wechselstation mit wenigstens einer Wechseleinheit zum Wechseln von Temperierelementen bei Lager- und Transporteinheiten ausgebildet ist.

Dies ist vorteilhaft, da hierdurch besonders effektive Arbeitsabläufe generiert werden können.

Weitere vorteilhafte Ausführungsformen ergeben sich aus den Unteransprüchen sowie der nachfolgenden Beschreibung.

Bei einer weiteren vorteilhaften Ausführungsform ist das Lagersystem intelligent ausgebildet. Es weist wenigstens einer übergeordneten Servereinheit, welche über wenigstens ein Kommunikationsnetzwerk Daten- und/oder Kommunikationsverbindungen mit wenigstens drei physischen Einheiten ausbildet, wobei die erste physische Einheit als wenigstens eine Lager- und/oder Transporteinheit mit wenigstens einem austauschbaren, regenerierbaren Temperierelement ausgebildet ist, wobei die zweite physische Einheit als wenigstens ein Regenerationsmagazin zur aktiven Regeneration von entladenen Temperierelementen aus Lager- und Transporteinheiten ausgebildet ist, und wobei die dritte physische Einheit als wenigstens eine Wechselstation mit wenigstens einer Wechseleinheit zum Wechseln von Temperierelementen bei Lager- und Transporteinheiten ausgebildet ist.

Vorteilhaft werden Daten oder auch allgemeine Informationen der physischen Einheiten über das Kommunikationsnetzwerk von der übergeordneten Servereinheit wenigstens erfasst, gespeichert, verarbeitet, extrapoliert und/oder bewertet sowie Kombinationen hieraus.

In Abhängigkeit der hieraus resultierenden Ergebnisse, werden Befehle und/oder Aktionen über das Kommunikationsnetzwerk an die physischen Einheiten ausgegeben, um diese zu aktivieren, zu steuern, zu regeln und/oder zu überwachen sowie Kombinationen hieraus.

Unter Datenverbindung wird die Übertragung von Daten der physischen Einheiten an die Servereinheit verstanden. Hierbei können die Daten aktiv von der jeweiligen physischen Einheit an die Servereinheit gesendet werden. Es ist aber auch denkbar, dass die physische Einheit die Daten lediglich, z.B. als Barcode oder mittels eines passiven RFID-Transponders, bereitstellt und die Servereinheit diese dann aktiv abfragt. Unter Daten können jegliche Art an Daten verstanden werden, beispielsweise Daten die physische Einheit betreffend, Umweltdaten aus der physischen Einheit, Positionsdaten von beweglichen Teilen der physischen Einheit oder Robotern, Gewichtsdaten und dergleichen. Über Kommunikationsverbindungen werden vorteilhaft Signale an die physischen Einheiten gesendet und/oder von diesen empfangen. Die Datenverbindungen und Kommunikationsverbindungen können drahtlos und/oder drahtgebunden ausgebildet sein.

Vorteilhaft sind zahlreiche Datenverbindungen und Kommunikationsverbindungen vorgesehen, welche zusammen das Kommunikationsnetzwerk ausbilden. Dieses stellt die Verbindung zwischen physischen Einheiten und Servereinheit her.

Im einfachsten Fall können im Kommunikationsnetzwerk paketbasierte Kommunikationsprotokolle Verwendung finden.

Die einzelnen physischen Einheiten können untereinander kommunikationslos ausgebildet sein. Dies bedeutet, dass sie nicht miteinander in irgendeiner Weise direkt verbunden sind. Alle anfallenden Aufgaben übernimmt die Servereinheit. Die Servereinheit bildet die Intelligenz des Lagersystems aus. Selbstverständlich sind dennoch weitere Kontrollgeräte vorhanden, an welchen Angestellte die Servereinheit überwachen und ihr Befehle vorgeben können.

Vorteilhaft sind die Begriffe Lager- und Transporteinheit und Lager- oder Transporteinheit synonym zu verwenden und bezeichnen vorteilhaft gleiche Einheiten.

Bei einer weiteren vorteilhaften Ausführungsform ist das Lagersystem vollautomatisiert ausgebildet ist. Dies ist vorteilhaft, da hierdurch Personalkosten eingespart werden können. Zudem kann das Lagersystem räumlich optimiert ausgebildet werden, da es keine breiten Laufwege für Angestellte braucht. Vorteilhaft weist die Servereinheit Lagerprozessroutinen auf, mit deren Ausführung die einzelnen physischen Einheiten ansteuerbar, kontrollierbar und/oder aktivierbar sind.

Bei einer weiteren vorteilhaften Ausführungsform des Lagersystem kann die Servereinheit cloud-basiert oder als Servereinheit im Nahbereich ausgebildet sein. Beispielsweise kann die Servereinheit im selben Gebäude oder Raum, wie das Lagersystem angeordnet sein. Die Servereinheit kommuniziert vorteilhaft drahtlos mit den physischen Einheiten sowie den im Lagersystem vorteilhaft vorgesehenen Robotern.

Dies ist aber nicht begrenzend zu verstehen, so dass es auch denkbar ist, dass die Servereinheit zumindest mit räumlich unbeweglichen physischen Einheiten drahtgebunden kommuniziert.

Die Kommunikation kann über Standardprotokolle wie z.B. WI-FI, Bluetooth^{®}, Zigbee, Z-Wave oder 6LowPAN erfolgen.

So kann in einer vorteilhaften Ausführungsform die Servereinheit Daten über die Waren der Lager- und Transporteinheiten, Positionen von Lager- und Transporteinheitträgern, Positionen von Lager- und Transporteinheiten und/oder Positionen von Temperierelementen im Lagersystem wenigstens erfassen und verarbeiten.

Auf der Servereinheit wird wenigstens eine Software, vorteilhaft eine selbstlernende Software, betrieben, die den Lagerungsprozess leitet und/oder die physischen Einheiten wenigstens steuert, kontrolliert und/oder überwacht.

Bei einer weiteren vorteilhaften Ausführungsform weist das Lagersystem eine vierte physische Einheit auf, welche als Vertikaltransporteinheit ausgebildet ist. Diese ist vorteilhaft, da hierdurch Temperierelemente aus den Lager- und Transporteinheiten automatisiert entnommen werden können. Die Vertikaltransporteinheit ist für das Öffnen der geschlossenen Lager- und Transporteinheit zuständig, indem sie diese entweder vertikal nach unten absenkt oder indem sie die Gehäusekorpusverschlusseinheit vertikal nach oben anhebt. Hierdurch wird das darin angeordnete Temperierelement zugänglich und kann über die Wechseleinheit ausgetauscht werden.

Bei einer weiteren vorteilhaften Ausführungsform weist die erste Einheit, welche als Lager- und Transporteinheit ausgebildet ist, wenigstens einen Gehäusekorpus sowie wenigstens eine Gehäusekorpusverschlusseinheit zum Verschließen des Gehäusekorpus auf, wobei die Gehäusekorpusverschlusseinheit wenigstens einen Träger sowie wenigstens eine daran angeordnete Positioniereinheit zur zumindest teilweisen Aufnahme wenigstens eines mobilen, regenerativen Temperierelements aufweist, wobei die Gehäusekorpusverschlusseinheit und/oder der Gehäusekorpus weiterhin wenigstens eine Erfassungseinrichtung aufweist.

Durch diese besondere Ausgestaltung der Lager- und Transporteinheit ist es erstmals möglich, das Temperiervolumen innerhalb der Lager- und Transporteinheit zu überwachen.

Der Gehäusekorpus dient der Aufnahme von wenigstens einem Gut zu dessen Transport und/oder Lagerung.

Die Gehäusekorpusverschlusseinheit ist derart ausgebildet, dass sie den Gehäusekorpus im Gebrauchszustand, also bei bestückter Lager- und Transporteinheit, verschließt. Die Gehäusekorpusverschlusseinheit kann vorteilhaft als Deckel bezeichnet werden. Der Abschluss der Gehäusekorpusverschlusseinheit und des Gehäusekorpus ist entsprechend dicht, beispielsweise gas- oder wasserdicht, ausgebildet, so dass das Temperiervolumen ein eigenes, vorbestimmbares Temperiervolumenklima aufweist. Vorteilhaft wird unter Temperieren eine Temperatur oder ein Temperaturbereich verstanden, welcher wärmer als die Umgebungstemperatur der Lager- und Transporteinheit oder alternativ kälter als die Umgebungstemperatur der Lager- und Transporteinheit ist. Somit kann unter Temperieren einerseits Kühlen und andererseits Warmhalten verstanden werden.

Unter Gebrauchszustand ist vorteilhaft der Zustand zu verstehen, bei welchem die Lager- und Transporteinheit wenigstens ein Gut bevorratet.

Bei einer weiteren vorteilhaften Ausgestaltung der ersten Einheit ist der Gehäusekorpus kistenartig ausgebildet. So kann vorteilhaft eine besonders leichte Stapelung der Lager- und Transporteinheit ausgebildet werden. Dies kann beispielsweise dann erfolgen, wenn die Lager- und Transporteinheit in einem nicht temperierten Lager platzsparend angeordnet wird. Auch erweist sich die Stapelfähigkeit beim Transport auf einem LKW oder der Bahn als platzsparend und effektiv.

Bei einer weiteren vorteilhaften Ausgestaltung der ersten Einheit ist unter Temperiervolumenwert wenigstens ein Wert zu verstehen, welcher dem Temperiervolumen entnommen werden kann. Vorteilhafte Beispiele für solche Werte sind wenigstens ein Temperaturwert des Temperiervolumens, wenigstens ein Präsenzwert zur Ermittlung der Güterpräsenz, wenigstens ein Luftfeuchtigkeitswert des Temperiervolumens, wenigstens ein Temperaturwert des Gehäusekorpus, wenigstens ein Temperaturwert des eingelagerten Gutes oder aber auch ein Temperaturwert eines Temperierelements im Fall der Ausbildung als Temperiersystem und/oder jegliche Kombinationen oder Mehrfacherfassungen hieraus.

Zur Ermittlung wenigstens eines dieser Werte weist die Lager- und Transporteinheit vorteilhaft wenigstens ein Sensorelement auf, welches mit einer Erfassungseinrichtung gekoppelt ist bzw. in regelmäßigem Kontakt mit dieser steht. Über das Sensorelement, beispielsweise einem Temperaturfühler, können vorbestimmbare, unterschiedliche Werte regelmäßig überwacht werden.

Bei einer weiteren vorteilhaften Ausgestaltung der ersten Einheit erfolgt die Überwachung wenigstens eines Temperiervolumenwerts regelmäßig, beispielsweise minütlich. Hierdurch kann sichergestellt werden, dass bereits eine langsame Änderung des Temperiervolumenwerts erfasst und erkannt wird. Durch die Anordnung wenigstens eines Sensorelements an der Trägerunterseite, welche dem Temperiervolumen zugewandt ist, kann insbesondere eine verlässliche Temperaturüberwachung betrieben werden, beispielsweise wenn im Gebrauchszustand der Träger wenigstens ein mobiles, regeneratives Temperierelement aufweist.

Bei einer weiteren vorteilhaften Ausgestaltung der ersten Einheit ist die Positioniereinheit an einer Unterseite des Trägers angeordnet, welche in einem geschlossenen Gebrauchszustand dem Temperiervolumen zugewandt angeordnet ist. Hierdurch kann ein darin eingeführtes Temperierelement, falls dieses zum Kühlen ausgelegt ist, das Temperiervolumen von oben nach unten passiv kühlen. Dies ist deutlich effektiver und gleichmäßiger, als wenn beispielsweise das Temperierelement an den Seiten oder dem Boden des Gehäusekorpus angeordnet ist. Bei diesen Varianten herrscht quasi eine stehende Kühlung, welche vorliegend gerade nicht gewünscht ist.

Bei einer weiteren vorteilhaften Ausgestaltung der ersten Einheit weist die Positioniereinheit wenigstens zwei voneinander beabstandete Führungselemente auf. Dies ist von Vorteil, da die wenigstens zwei Führungselemente derart angeordnet sind, dass sie ein mobiles Temperierelement aufnehmen und zumindest teilweise untergreifen oder unterlaufen können. Hierdurch wird eine sichere Halterung des mobilen Temperierelements sichergestellt. In diesem einfachen Ausführungsbeispiel wird das Temperierelement lediglich in die Positioniereinheit eingeschoben. Zur zusätzlichen Fixierung können an den Führungselementenden Führungsschrägen vorgesehen sein, welche ein ungewolltes Herausgleiten des Temperierelements bei Schrägstellung vermeiden.

Bei einer weiteren vorteilhaften Ausgestaltung der ersten Einheit können die Führungselemente als Lager oder auch Schienen verstanden werden. Die Führungselemente können hierbei jeweils wenigstens einen hervorstehenden Abschnitt aufweisen. Dieser dient dazu, in wenigstens eine seitlich, sich in Längsrichtung des Temperierelements erstreckende Vertiefung einzugreifen. Vorteilhaft sind Vertiefung und Abschnitt komplementär zueinander ausgebildet. Vorteilhaft ist ein Formschluss ausgebildet. Dies ist vorteilhaft, da hierdurch die Position des Temperierelements lösbar fixiert und sicher gehalten werden kann.

Weiterhin ergänzend hierzu oder auch alternativ ist denkbar, wenigstens ein Führungselement zumindest teilweise federnd auszubilden. In diesem Ausführungsbeispiel weist wenigstens ein Führungselement diese Eigenschaft auf. Durch die federnde Eigenschaft ist es möglich, dass das entsprechende Führungselement bei Kraftbeaufschlagung durch das Temperierelement, beispielsweise beim Einführen eines Temperierelements in die Positioniereinheit, aus seiner Ursprungsposition ausgelenkt wird. Durch diese federnde Eigenschaft kann das wenigstens eine Führungselement das dann eingeführte Temperierelement mit einer entgegengerichteten Druckkraft beaufschlagen und verspannen. Hierdurch wird das Temperierelement besonders stabil in der Positioniereinheit gehalten.

Je nach Ausführung ist denkbar, dass das Temperierelement hierzu noch entsprechende Vertiefungen aufweist, in welche das federnd ausgebildete Führungselement zumindest teilweise eingreift. Auch ist denkbar, dass das Führungselement lediglich das eingeführte Temperierelement untergreift und so verspannt.

Das Verspannen wird durch das wenigstens eine weitere Führungselement ausgebildet. Dieses kann starr ausgebildet sein. Zur leichteren Einführung eines Temperierelements ist aber auch denkbar, dieses ebenfalls federnd auszubilden.

Wird auf das Temperierelement eine entsprechende Zugkraft ausgeübt, beispielsweise von einem Bedienpersonal, dann wird die ausgeübte Spannkraft überwunden. Das Temperierelement ist durch Aufweitung des wenigstens einen, vorteilhaft beiden, Führungselementen aus der Positioniereinheit entnehmbar.

Weiterhin können die Führungselemente an dem Träger angeordnet, beispielsweise verschraubt sein. Dies ist natürlich nicht begrenzend zu verstehen, sodass auch denkbar ist, dass die Führungselemente einteilig mit dem Träger oder mit einem Trägerabschnitt ausgebildet sind. Dies kann beispielsweise über ein Spritzgussverfahren realisiert werden. Zudem ist denkbar, dass weitere Hilfselemente zur Kopplung von Führungselementen und Träger vorgesehen sein können.

Im einfachsten Fall können die wenigstens zwei Führungselemente als Leistenelemente ausgebildet sein. In diesem Ausführungsbeispiel sind vorteilhaft zwei Leistenelemente, aus Metall oder Kunststoff, vorgesehen. Zur besonders verlässlichen Halterung des optional benötigten Temperierelements weisen die Leistenelemente jeweils einen L-förmigen Querschnitt auf. So wird ausreichend Auflagefläche für das bei Bedarf einführbare Temperierelement ausgebildet. Der Bereich zwischen den Leistenelementen, welche einander gegenüberliegend und zugleich um die Geometrie des Temperierelements beabstandet zueinander angeordnet sind, ist offen und frei.

Bei einer weiteren vorteilhaften Ausgestaltung der ersten Einheit weisen die Führungselemente Strömungsrippen mit dazwischen liegenden Öffnungen auf. Dies ist besonders von Vorteil, wenn eine Kühlung des Temperiervolumens gewünscht ist. Die Kombination aus Strömungsrippen und dazwischen liegenden Öffnungen ermöglicht eine besonders effektive Strömung zur passiven Kühlung. Die durch das einführbare Temperierelement abgekühlte Luft wird durch die Öffnungen geführt und erhält durch die Strömungsrippen eine zusätzliche Führung und/oder Beschleunigung. Hierdurch kann beispielsweise eine kontrollierte Schleierbildung ausgebildet sein, so dass das Temperiervolumen gleichmäßig über den Kühlluftschleier kühlbar ist. Diese wird dadurch unterstützt, dass kalte Luft nach unten in Richtung Boden sinkt, wodurch ein Aufsteigen warmer Luft bedingt wird. Durch die gegenläufigen Bewegungen von warmer und kalter Luft wird eine Luftzirkulation hervorgerufen. Es braucht also vorliegend keine Ventilatoren oder andere Mittel, um die Luft aktiv innerhalb der Lager- und Transporteinheit zirkulieren zu lassen. Dies vereinfacht deutlich die Benutzung der Einheit und diese ist weniger wartungsanfällig und günstiger. Die hier vorgestellte Lager- und Transporteinheit kann auch als passiv gekühlte Lager- und Transporteinheit bezeichnet werden.

Durch die Öffnungen und die Strömungsrippen wird die entstehende gekühlte Luft gleichmäßig seitlich, vorteilhaft nach rechts und links, abgeführt. Daher sind die Führungselemente vorteilhaft so weit als möglich mittig der Trägerunterseite positioniert. Somit ist zu den Seitenwandungen des Gehäusekorpus ausreichend Platz, um die Strömung und somit die passive Kühlung nicht zu behindern.

Wenigstens eine Stirnseite verbleibt hierbei offen, also strömungsrippenfrei. Über diese Stirnseite kann das mobile Temperierelement bei Bedarf in die Positioniereinheit ein- und ausgeführt werden.

Die zweite Stirnseite kann ebenfalls die Anordnung der Strömungsrippen aufweisen. Hierdurch wird die passive Kühlung nochmals verbessert.

Dies ist aber nicht begrenzend zu verstehen, so dass auch denkbar ist, dass die zweite Stirnseite offen verbleibt. Zur Positionsbestimmung des einführbaren Temperierelements kann ein Stopper vorgesehen sein. Dieser verhindert ein Durchschieben und eine falsche bzw. ungünstige Positionierung des mobilen Temperierelements. Somit kann sichergestellt sein, dass dieses in der Endposition bestmöglich passive Kühlleistung ermöglicht.

Alternativ hierzu ist denkbar, die Führungselemente als Rollen und/oder gelagerte Walzen auszubilden. In diesem Ausführungsbeispiel der Ausbildung als Walzen ist denkbar, dass diese eine zylindrische Geometrie aufweisen. Vorteilhaft sind die Walzen an zwei oder mehreren Führungsstreben gelagert und vorteilhaft rotierbar angeordnet. Die Führungsstreben sind als Hilfselemente zu verstehen. Sie sind an der Trägerunterseite fest angeordnet, beispielsweise angeschraubt oder aber auch einteilig über Spritzguss mit diesem hergestellt. Die Führungsstreben können auch als Führungsnuten verstanden werden, in welchen die freien Enden der Walzen oder Rollen drehbar gelagert sind. Dies ermöglicht eine leichte Einführung des Temperierelements, sofern dieses benötigt wird.

Weiterhin sind die einzelnen Rollen oder Walzen voneinander beabstandet angeordnet, so dass sich hierdurch freie Zwischenräume ergeben, durch welche die gekühlte Luft strömen kann. Hier kann sich ein zentraler und/oder seitlich gerichteter Luftschleier ausbilden. Dies ist auch davon abhängig, ob ein zusätzliches Luftleitelement vorgesehen ist.

Bei einer weiteren vorteilhaften Ausgestaltung der ersten Einheit ist auch denkbar, dass die Führungsnuten, vergleichbar zu den Leistenelementen, Strömungsrippen und dazwischen liegende Materialöffnungen aufweisen. Hierdurch wird der Effekt der passiven Kühlung und der seitlichen Kühlluftschleierbildung nochmals verbessert.

Bei einer weiteren vorteilhaften Ausgestaltung der ersten Einheit weist die Lager- und Transporteinheit weiterhin ein Beabstandungselement auf, welches an einer innenliegenden Bodenfläche des Gehäusekorpus, beabstandet zu der Bodenfläche, positionierbar ist. Soll beispielsweise das Gut in der Lager- und Transporteinheit gekühlt werden, so ist das Beabstandungselement besonders vorteilhaft, da die von Richtung des Trägers in Richtung Gehäusekorpusboden strömende, gekühlte Luft durch das Beabstandungselement hindurchströmen kann. Somit werden in der Lager- und Transporteinheit angeordnete Güter auch direkt von der kühlen Luft zunächst seitlich umströmt und schließlich auch von unten her umströmt.

Die gekühlte Luft strömt zunächst an den zu kühlenden Gütern seitlich vorbei, durch das Beabstandungselement hierdurch auf den Gehäusekorpusboden. Dort sammelt sich die gekühlte Luft und steigt an. Folglich wird auch die Unterseite der Güter, welche auf dem Beabstandungselement aufliegt, effektiv gekühlt.

Im einfachsten Fall ist das Beabstandungselement als Gitter ausgebildet, welches selbst über Abstandshalter, beispielsweise Füße, vom eigentlichen Gehäusekorpusboden beabstandet angeordnet ist. Zur besseren Temperaturleitung hat es sich als vorteilhaft erwiesen, das Beabstandungselement aus Metall auszubilden.

Würden die Güter lediglich auf dem Gehäusekorpusboden direkt aufliegen, so stellt der Gehäusekorpusboden eine Barriere dar, die Strömung wird unterbrochen. Die kühlere Luft sammelt sich direkt an den Gütern, ohne jedoch deren Unterseite, also die Güterseite, welche mit der Gehäusekorpusbodenfläche eine gemeinsame Kontaktfläche ausbildet, überhaupt kühlen zu können. Durch dieses Beabstandungselement kann somit die Temperiereffektivität der Güter nochmals verbessert werden.

Bei einer weiteren vorteilhaften Ausgestaltung der ersten physischen Einheit kann weiterhin wenigstens ein Luftleitelement als Abgrenzung zum Temperiervolumen an den Führungselementen und/oder dem Träger angeordnet sein. Das Luftleitelement ist im einfachsten Fall aus Metall, beispielsweise aus Aluminium-Blech ausgebildet. Die Anordnung an den Führungselementen oder an dem Träger erfolgt vorteilhaft lösbar mittels Verschraubung. Durch das Vorsehen dieses Luftleitelements kann insbesondere bei Kühlung des Temperiervolumens die Strömung der vom Temperierelement ausgehenden kühleren Luft nochmals kontrollierter geführt werden. Durch das Begrenzen nach unten hin in Richtung Gehäusekorpusboden wird eine Kältereflexion ausgebildet. Zudem wird die gekühlte Luft zusätzlich seitlich gerichtet geführt, beispielsweise durch die Öffnungen und/oder entlang der Strömungsrippen zu strömen. Hier wird nochmals die Gleichmäßigkeit des gekühlten Luftschleiers, welcher vom Träger in Richtung Gehäusekorpusboden seitlich fällt, verbessert. Die Kühlung der Güter wird hierdurch nochmals effizient verbessert. Das Luftleitelement hat zudem den Vorteil, dass es die vom Temperierelement temperierte Luft in Richtung der Innenseitenwandungen des Gehäusekorpus führt. Die temperierte Luft wird somit seitlich abgelenkt. Somit wird verhindert, dass die temperierte Luft, ausgehend vom Temperierelement, direkt, also senkrecht nach unten, auf das wenigstens eine Gut auftrifft und dieses übertemperiert.

Unter übertemperieren wird vorteilhaft verstanden, dass das Gut zu schnell mit der temperierten Luft beaufschlagt wird und hierdurch verderben kann. Soll beispielsweise ein Kühlgut lediglich gekühlt werden, so würde eine direkte Beaufschlagung mit temperierter Luft ausgehend vom Temperierelement einen Frosteffekt bewirken. Das Kühlgut würde nicht nur gekühlt, sondern tiefgekühlt werden. Hierdurch kann es unbrauchbar werden. Das Luftleitelement dient also vorteilhaft zur gleichmäßigen Temperierung des Temperiervolumens über seitlich gerichtete Luftströme und des darin angeordneten wenigstens einen Gutes.

Gleiches gilt für das Warmhalten von Gütern. Soll ein Gut warmgehalten werden, so kann ein fehlendes Luftleitelement eine Überwärmung des Gutes bedingen und dieses verderben.

Daher ist es vorteilhaft bei Gütern, welche eine gleichbleibende Lager- und/oder Transporttemperatur benötigen, das Luftleitelement vorzusehen.

Bei Gütern, welche gegenüber Temperaturschwankungen unempfindlich sind, kann auch auf ein Luftleitelement verzichtet werden.

Dies ist natürlich nicht begrenzend zu verstehen, so dass es auch denkbar ist, dass das Luftleitelement in seiner Fläche geometrische Öffnungen aufweist oder gänzlich fehlen kann. Je nach Geometrie können Kreise, Sterne, Rauten oder andere polygonale Formen der Öffnungen denkbar sein. Insbesondere kann auch wenigstens ein Langloch vorgesehen sein. Dies ist dann von Vorteil, wenn das Temperierelement voll automatisiert über einen Roboter aus der Positioniereinheit herausgeschoben und ausgetauscht werden soll.

Bei einer weiteren vorteilhaften Ausgestaltung der ersten Einheit ist wenigstens der Gehäusekorpus und/oder wenigstens der Träger isoliert ausgebildet. Dies ist insbesondere dann von Vorteil, wenn die hier beschriebene Lager- und Transporteinheit als Kühlbox und/oder als Warmhaltebox ausgebildet ist. Für die Isolierung können bekannte Materialien verwendet werden, beispielsweise Dämmschäume. Bei der Isolierung des Trägers hat es sich als vorteilhaft erwiesen, die Isolierung sandwichartig einzubringen. Hierdurch resultiert ein mehrschichtiger Aufbau des Trägers. Die Isolierung ist hierbei von zwei Trägerabschnitten flächig eingeschlossen. Die hier beschriebene Lager- und Transporteinheit ist universell einsetzbar, so dass mit dieser sowohl zu kühlende Güter als auch warmzuhaltende Güter gelagert und/oder transportiert werden können. Die im Temperiervolumen von den darin enthaltenen Gütern vorgegebene Temperatur ist mit dem Temperierelement eingestellt.

Bei einer weiteren vorteilhaften Ausgestaltung der ersten Einheit weist der Träger an seiner, im Gebrauchszustand nach oben gerichteten Außenfläche wenigstens einen Greifabschnitt auf. Dieser ist von Vorteil, da hierdurch der Träger und somit auch die Gehäusekorpusverschlusseinheit vollständig von der Lager- und Transporteinheit abgehoben werden können. Es ist folglich kein Kipp- oder Schwenkmechanismus an der Gehäusekorpusverschlusseinheit vorgesehen, mittels welchem die Gehäusekorpusverschlusseinheit lediglich aufgeklappt werden kann. Vorliegend ist es für den Einsatz der Lager- und Transporteinheit als Kühleinheit von Vorteil, die Gehäusekorpusverschlusseinheit vollständig abheben zu können. Dies erweist sich insbesondere bei der Verwendung der Lager- und Transporteinheit als Bestandteil eines vollautomatisierten Lagersystems von Vorteil. Das Abheben kann einfach und schnell sowie platzsparend erfolgen. Zudem wird vermieden, dass beispielsweise das Temperierelement ungewollt aus seiner Position herausgleitet. Auch kann in einer geneigten Position der Gehäusekorpusverschlusseinheit das Temperierelement, sofern vorhanden, nur sehr umständlich automatisiert getauscht werden. Ein direktes, vollständiges Abheben der Gehäusekorpusverschlusseinheit in vertikaler Richtung erweist sich für alle Einsatzmöglichkeiten der hier beschriebenen Lager- und Transporteinheit als vorteilhaft.

Bei einer weiteren vorteilhaften Ausgestaltung der ersten Einheit kann diese auch als Temperiersystem mit wenigstens einer Lager- und Transporteinheit, wie oben ausführlich beschrieben, sowie wenigstens einem, der Lager- und Transporteinheit reversibel entnehmbaren Temperierelement ausgebildet sein.

Sind beispielsweise Güter zu kühlen oder gar Kühlketten einzuhalten, so erweist sich das hier beschriebene Temperiersystem als besonders vorteilhaft. Zum einen kann über die Erfassungseinrichtung wenigstens ein Temperiervolumenwert, beispielsweise die Temperatur des Temperiervolumens und/oder des Temperierelements erfasst werden.

Für eine genaue Absicherung der Temperaturüberwachung hat es sich als vorteilhaft erwiesen, wenigstens ein Sensorelement benachbart zu den Leistenelementen anzuordnen. Das derart angeordnete wenigstens eine Sensorelement erfasst direkt die vom Temperierelement ausgesandte Temperatur und die Erfassungseinrichtung erfasst diesen Wert. Je nach Ausführungsbeispiel kann die Erfassungseinrichtung aktiv den Wert verarbeiten und Aktionen veranlassen. Ist eine Servereinheit vorgesehen, so erledigt die Servereinheit alle Abfragen, Berechnungen und notwendige Aktionen, in Abhängigkeit des erfassten Wertes. Somit wird auch unmittelbar erkannt, wenn diese Temperatur ansteigt.

Ist das Temperierelement beispielsweise schon stundenlang in Benutzung, so nimmt mit der Zeit dessen Temperierleistung ab. Im eigentlichen Temperiervolumen ist hiervon noch nichts messbar. Das Sensorelement erfasst somit vorteilhaft den Temperaturwert des Temperierelements. Wird ein vorbestimmbarer Schwellwert überschritten, kann dieser über die Erfassungseinrichtung an die zentrale Servereinheit übermittelt und dort weiterverarbeitet werden. Die zentrale Servereinheit leitet dann den Austausch des Temperierelements in die Wege.

Dies ist selbstverständlich nicht begrenzend zu verstehen, so dass es auch denkbar ist, dass die Erfassungseinrichtung optische und/oder akustische Warnsignale einleitet, damit ein Bearbeiter das Temperierelement austauscht. Die Erfassungseinrichtung wird selbst aktiv. Sie kann daher auch als Steuereinheit verstanden werden. Daher ist es vorteilhaft, dass ein mobiles, also austauschbares, Temperierelement vorliegend Einsatz findet. Statische Temperierelemente, welche beispielsweise fest verklebt oder verbaut sind, laufen dem Erfindungsgedanken entgegen.

Alternativ oder ergänzend ist auch denkbar, dass das wenigstens eine Sensorelement thermisch getrennt von dem Temperierelement angeordnet ist. Dies hat den Vorteil, dass das wenigstens Sensorelement dann die Temperatur des Temperiervolumens erfasst, ohne von der Temperatur des Temperierelements beeinflusst zu werden. Dies ist dann relevant, wenn die Temperatur des Temperiervolumens überwacht und erfasst werden soll. Dies stellt eine alternative oder ergänzende Methode der Überwachung dar. Vorteilhaft hat es sich erwiesen, wenn dieses wenigstens eine Sensorelement an der im Gebrauchszustand innenliegenden Deckelfläche der Gehäusekorpusverschlusseinheit angeordnet ist. Dies ist selbstverständlich nicht begrenzend zu verstehen, so dass es auch denkbar ist, weitere Sensorelemente im Temperiervolumen vorzusehen. Dies kann genutzt werden, um Temperaturen positionsabhängig im Temperiervolumen zu erfassen. So kann beispielsweise in Gutnähe ein weiteres Sensorelement angeordnet sein.

Bei einer weiteren vorteilhaften Ausgestaltung weist das mobile Temperierelement wenigstens einen Greifabschnitt und/oder mehrere Durchgangsöffnungen auf. Der Greifabschnitt dient der leichteren Entnahme des Temperierelements aus der Positioniereinheit heraus. Im einfachsten Fall kann der Greifabschnitt eine Griffmulde aufweisen, falls das Temperierelement manuell entnommen und getauscht werden soll. Im anderen Fall ist denkbar, dass der Greifabschnitt wenigstens einen Positionsmarker aufweisen kann. Hierdurch kann der Positionsmarker in einem vollautomatisierten Ablauf von einem Roboter erkannt werden, so dass die Position des Temperierelements erfasst und dieses entnommen werden kann.

Darüber hinaus kann in einer vorteilhaften Ausgestaltung das Temperierelement durchgängig geschlossen ausgebildet sein. Dies ist der einfachste Ausführungsfall. Dies ist aber nicht begrenzend zu verstehen, da es sich für die Strömungseigenschaften der gekühlte, vom Temperierelement weg strömenden Luft als vorteilhaft erwiesen hat, wenn das Temperierelement wenigstens eine durchgängige Öffnung, vorteilhaft mehrere durchgängige Öffnungen aufweist. Die Durchgangsöffnungen sind derart ausgebildet, dass sie im Gebrauchszustand vom Träger in Richtung Gehäusekorpusboden durchgängig sind.

Weiterhin hat es sich als besonders vorteilhaft erwiesen, wenn die sich in Längserstreckung ausgebildete Oberfläche und Unterfläche über Durchgangsöffnungen verbunden sind. Diese Durchgangsöffnungen können beispielsweise rund, eckig oder in anderer polygonaler Form ausgebildet sein. Im einfachsten Ausführungsbeispiel sind die Öffnungen in der Draufsicht rund ausgebildet. Hierdurch wird eine zusätzliche Effektivität der Temperierung im Regenerationsmagazin erreicht. Durch diese Durchgangsöffnungen wird der Umspülungseffekt mit temperierter Luft verbessert, das Temperierelement wird schneller regeneriert als ein komplett geschlossenes Temperierelement. So kann das Temperierelement vorteilhaft wenigstens eine, vorteilhafter 2 bis 50 Durchgangsöffnungen aufweisen. Diese können linear oder hexagonal gepackt angeordnet sein.

Bei einer weiteren vorteilhaften Ausgestaltung ist denkbar, dass das Temperierelement an einem freien Ende wenigstens einen kraftbeaufschlagbaren Abschnitt aufweist. Dieser kann beispielsweise magnetisch ausgebildet sein. Dies ist von Vorteil für die Positionierung des Temperierelements in der Positioniereinheit. Durch die magnetische Kraft kann die gewünschte Endposition des Temperierelements in der Positioniereinheit festgelegt werden. Ein unerwünschtes Verrutschen wird dadurch verhindert. Zudem kann ein Temperierelement über den magnetischen Abschnitt von einer Wechseleinheit besonders leicht aufgenommen werden.

Weiterhin ist denkbar, dass der magnetische Abschnitt zur Detektion im vollautomatisierten Temperierelementaustausch von dem jeweiligen Roboter erkannt wird. Er ist somit als Positionsmarker zu verstehen. Die Detektion und die Steuerung des Roboters kann vorteilhaft von der Servereinheit übernommen sein.

Bei einer weiteren vorteilhaften Ausgestaltung ist das Temperiersystem als passives Temperiersystem ausgebildet. Die Kühlung innerhalb des Temperiervolumens erfolgt passiv unter Ausnutzung der kühleren Luftströmung und deren Verwirbelungen. Zudem nutzt die vorliegende Erfindung lediglich das Temperierelement zur Temperierung des Temperiervolumens. Nimmt die Kühlleistung des Temperierelements ab, so wird es gegen ein "frisches", also ein wieder vollaufgeladenes Temperierelement getauscht. Die Überwachung hierbei erfolgt über die Erfassungseinrichtung. Diese liefert auch die Daten, um zu belegen, dass beispielsweise die Kühlkettenerfordernisse dauerhaft eingehalten wurden.

Besonders vorteilhaft haben sich daher Temperierelemente erwiesen, welche wenigstens ein PCM-Material als Latentwärmespeicher aufweisen. Hierdurch kann sichergestellt werden, dass diese Temperierelemente immer wieder aufladbar sind. Somit wird Müll vermieden und die Effektivität gesteigert. Im einfachsten Fall kann als PCM (engl. phasechange material, Phasenwechselmaterial) innerhalb des Temperierelements Wasser eingesetzt werden. Dies ist natürlich nicht begrenzend zu verstehen so dass es auch denkbar ist, Wasser-Alkohol-Gemische, wässrige Salzlösungen oder dergleichen zu verwenden. Bei der vorliegend offenbarten Lager- und Transporteinheit ist das verwendete PCM innerhalb des Temperierelements lebensmittelecht ausgebildet. Dies ist relevant, da in der Lager- und Transporteinheit auch Lebensmittel transportiert oder gelagert werden. Vorteilhaft kann über die Wahl des PCM des Temperierelements dessen Temperierleistung festgelegt werden. Soll das Temperierelement beispielsweise das Temperiervolumen kühlen, so kann Wasser als PCM eingesetzt werden.

Vorteilhaft weist das Temperierelement eine Hülle aus Kunststoff, Metall oder dergleichen auf. Darin ist das Phasenwechselmaterial auslaufsicher angeordnet. Im einfachsten Fall kann die Hülle einteilig ausgebildet sein, so dass das Phasenwechselmaterial direkt bei der Herstellung des Temperierelements in die Hülle eingebracht und dauerhaft verschlossen wird. Dies ist aber nicht begrenzend zu verstehen, so dass auch denkbar ist, eine Nachfüllöffnung in der Hülle vorzusehen. Diese ist auslaufsicher ausgebildet.

Darüber hat es sich als vorteilhaft erwiesen, wenn das Temperierelement plattenartig ausgebildet ist. Hierdurch kann dieses platzsparend in der Positioniereinheit angeordnet werden.

Bei einer weiteren vorteilhaften Ausgestaltung ist das mobile Temperierelement in einem Gebrauchszustand der Lager- und Transporteinheit von den wenigstens zwei Führungselementen positionsstabil gehalten. Dies ist für die gleichmäßige Temperierwirkung, beispielsweise Kühlen oder Warmhalten, von Vorteil. Das Temperierelement wird zwischen die Führungselemente eingeführt und von diesen zumindest abschnittsweise untergriffen. Somit ergibt sich eine positionsstabile Halterung. In diesem einfachen Ausführungsbeispiel wird das Temperierelement lediglich in die Positioniereinheit eingeschoben. Zur zusätzlichen Fixierung können an den Führungselementenden Führungsschrägen vorgesehen sein, welche ein ungewolltes Herausgleiten des Temperierelements bei Schrägstellung vermeiden.

Ergänzend oder alternativ zu dem Untergreifen durch die beiden Führungselemente ist auch denkbar, dass die hervorstehende L-Form der Führungselemente als Vorsprünge genutzt werden, um diese in die hierzu komplementär ausgebildeten Vertiefungen des Temperierelements einzuführen. Hierdurch wird die Positionierung des Temperierelements gehalten und stabilisiert.

Bei einer weiteren vorteilhaften Ausführungsform können die Führungselemente als Lager oder auch Schienen verstanden werden. Die Führungselemente können hierbei jeweils wenigstens einen hervorstehenden Abschnitt aufweisen. Dieser dient dazu, in wenigstens eine seitlich, sich in Längsrichtung des Temperierelements erstreckende Vertiefung einzugreifen. Vorteilhaft sind Vertiefung und Abschnitt komplementär zueinander ausgebildet. Vorteilhaft ist ein Formschluss ausgebildet. Dies ist vorteilhaft, da hierdurch die Position des Temperierelements lösbar fixiert und sicher gehalten werden kann.

Weiterhin ergänzend hierzu oder auch alternativ ist denkbar, wenigstens ein Führungselement zumindest teilweise federnd auszubilden. In diesem Ausführungsbeispiel weist wenigstens ein Führungselement diese Eigenschaft auf. Durch die federnde Eigenschaft ist es möglich, dass das entsprechende Führungselement beim Kraftbeaufschlagung durch das Temperierelement, beispielsweise beim Einführen eines Temperierelements in die Positioniereinheit, aus seiner Ursprungsposition ausgelenkt wird. Durch diese federnde Eigenschaft kann das wenigstens eine Führungselement das dann eingeführte Temperierelement mit einer entgegengerichteten Druckkraft beaufschlagen und verspannen. Hierdurch wird das Temperierelement besonders stabil in der Positioniereinheit gehalten.

Je nach Ausführung ist denkbar, dass das Temperierelement hierzu noch entsprechende Vertiefungen aufweist, in welche das federnd ausgebildete Führungselement zumindest teilweise eingreift. Auch ist denkbar, dass das Führungselement lediglich das eingeführte Temperierelement untergreift und so verspannt.

Das Verspannen wird durch das wenigstens eine weitere Führungselement ausgebildet. Diese kann starr ausgebildet sein. Zur leichteren Einführung eines Temperierelements ist aber auch denkbar, dieses ebenfalls federnd auszubilden.

Wird auf das Temperierelement eine entsprechende Zugkraft ausgeübt, beispielsweise von einem Bedienpersonal, dann wird die ausgeübte Spannkraft überwunden. Das Temperierelement ist durch Aufweitung des wenigstens einen, vorteilhaft beiden, Führungselementen aus der Positioniereinheit entnehmbar.

Das Vorsehen der wenigstens einen Vertiefung an wenigstens einer Seitenfläche des Temperierelements ist nicht begrenzend zu verstehen, so dass es auch denkbar ist, dass anstelle der Vertiefung ein Vorsprung vorgesehen ist, welcher untergriffen und/oder verspannt werden kann.

Bei Einlagerung ist es dann möglich, die jeweils spezifischen Anforderungen der einzulagernden oder zu transportierenden Güter zu berücksichtigen und zu individualisieren. Dies ist schnell und effektiv. Eine aufwändige Prüfung nach freien Kapazitäten in Kühlzellen oder Kühltransporten entfällt vollständig. Es ist auch optional möglich, das Temperierelement wegzulassen, falls die darin angeordneten Güter keine Kühlung benötigen.

Unter Temperiervolumen kann in der gesamten Offenbarung dasjenige Volumen verstanden werden, welches vom Gehäusekorpus aufgespannt und vorteilhaft durch die Gehäusekorpusverschlusseinheit begrenzt wird. Das Temperiervolumen kann je nach Anforderung der in der Lager- und Transporteinheit zu platzierenden Güter Umgebungstemperatur, eine gegenüber der Umgebungstemperatur reduzierte Temperatur, auch als Kühltemperatur bezeichnet, oder auch eine gegenüber der Umgebungstemperatur erhöhte Temperatur, auch als Heiztemperatur oder Warmhaltetemperatur bezeichnet, aufweisen.

Soll wenigstens ein in der Lager- und Transporteinheit angeordnetes Gut gekühlt oder auch tiefgekühlt bleiben, so wird zusätzlich das Temperierelement vorgesehen und in der Gehäusekorpusverschlusseinheit eingeordnet. Es ergibt sich dann das Temperiersystem. Gleiches gilt für die alternative Ausführungsform, dass das in der Lager- und Transporteinheit angeordnete Gut warmgehalten werden soll. Dann wird ein Temperierelement mit einem entsprechenden Phasenwechselmaterial ausgewählt, welches ein langfristiges Warmhalten, beispielsweise auf 37 °C, ermöglicht. Ein hierfür geeignetes PCM kann beispielsweise ein Paraffin sein.

Darüber hinaus ist denkbar, auch das Temperierelement mit wenigstens einem Erkennungsmittel auszustatten. Ein derartiges Erkennungsmittel kann beispielsweise ein RFID-Tag sein.

Hierdurch ist es möglich, der Lager- und Transporteinheit mit dem entsprechend verwendeten Temperierelement Daten zuzuweisen, um diese dann in einer Datenbank zu erfassen und/oder zu verwalten. Beispielsweise ist denkbar, dass über das Erkennungsmittel Daten zu den gelagerten oder transportierten Gütern, deren benötigter Temperatur im Temperiervolumen oder einfach nur die Position der Lager- und Transporteinheit bestimmt werden können.

Bei einer weiteren vorteilhaften Ausführungsform weist die zweite Einheit, welche als Regenerationsmagazin zur aktiven Regeneration von entladenen Temperierelementen aus Lager- und Transporteinheiten ausgebildet ist, wenigstens ein Gehäuse, welches wenigstens eine Temperierelementzuführ- und/oder Temperierelementabführöffnung für Temperierelemente aufweist, wobei die wenigstens eine Temperierelementzuführ- und/oder Temperierelementabführöffnung mit wenigstens einem Verschlusselement verschließbar ausgebildet ist, und eine im Gehäuseinnenraum angeordnete Temperierelementaufnahmeeinheit, welche über die wenigstens eine Temperierelementzuführ- und/oder Temperierelementabführöffnung mit Temperierelementen bestückbar ausgebildet ist, sowie optional wenigstens eine Kontrolleinheit aufweist.

Das hier erstmals beschriebene Regenerationsmagazin weist zunächst vorteilhaft wenigstens ein Gehäuse auf. Das Gehäuse dient zum Schutz der innenliegenden Bauteile, wie beispielsweise der Temperierelementaufnahmeeinheit. Weiterhin kann das Gehäuse auch die Temperiereinheit aufnehmen. Diese ist dann als interne Temperiereinheit bezeichnet. Zur vorteilhaften Schwerpunktauslastung ist die interne Temperiereinheit bodennah im oder am Gehäuse angeordnet. Dies ist nicht begrenzend zu verstehen, so dass es auch denkbar ist, die Temperiereinheit oben am oder oberhalb des Gehäusedeckels anzuordnen. Vorteilhaft können auch Teile der Temperiereinheit im Gehäuseinnenraum angeordnet sein.

Dies ist selbstverständlich nicht begrenzend zu verstehen, sodass es auch denkbar ist, dass alternativ zu der internen Temperiereinheit eine externe Temperiereinheit an das Gehäuse angekoppelt werden kann. Dies ist beispielsweise der Fall, wenn die externe Temperiereinheit bereits vorhanden ist und das Regenerationsmagazin über geeignete Kopplungsmittel lediglich mit der externen Temperiereinheit funktionell verbunden ist.

Weiterhin weist das Gehäuse wenigstens eine Temperierelementzuführöffnung und/oder wenigstens eine Temperierelementabführöffnung auf. Über diese wenigstens eine Temperierelementzuführöffnung und/oder Temperierelementabführöffnung ist es möglich, zu regenerierende Temperierelemente in das Gehäuse hinein, vorteilhaft in die Temperierelementaufnahmeeinheit hinein, und/oder bereits regenerierte Temperierelemente aus dem Gehäuse, vorteilhaft aus der Temperierelementaufnahmeeinheit, herauszuführen.

Weiterhin weist das Regenerationsmagazin wenigstens eine Temperierelementaufnahmeeinheit auf, welche im Gehäuseinnenraum angeordnet ist. Diese Temperierelementaufnahmeeinheit erweist sich als vorteilhaft, da hiermit einzuführende Temperierelemente sicher und verlässlich positioniert werden können. Somit kann dauerhaft sichergestellt werden, dass der zur Temperierung der Temperierelemente notwendige Temperierluftstrom richtig geführt ist. Hierdurch kann besonders effektiv und schnell eine Regenration der Temperierelemente durchgeführt werden.

Schließlich kann das hier erstmals beschriebene Regenerationsmagazin wenigstens eine Kontrolleinheit aufweisen, welche zur Datenauswertung, Datenerfassung, Datenverarbeitung und/oder Datenweiterleitung ausgebildet ist. Die Daten können Daten des Regenerationsmagazins und/oder der Temperierelementaufnahmeeinheit und/oder von wenigstens einem Temperierelement sein. Diese können zumindest über die Kontrolleinheit erfasst werden. Vorteilhaft werden zumindest die erfassten Daten von der Servereinheit in regelmäßigen Zeitintervallen abgefragt. Alternativ ist denkbar, dass die Daten aktiv von Kontrolleinheit an die Servereinheit versendet werden. Dies ist von Vorteil, da hierdurch zum einen die Funktionsfähigkeit des Regenerationsmagazins überwacht werden kann. Die Kontrolleinheit kann beispielsweise Fehlerprotokolle bereitstellen, mittels welchen Temperaturkurven oder Leistungsparameter des Regenerationsmagazins auswertbar sind. Die Servereinheit erkennt anhand wenigstens einer internen Datenbank mögliche Fehler und kann entweder selbst Aktionen hierauf veranlassen und/oder ein Signal an einen Angestellten ausgeben. Dies ist nicht begrenzend zu verstehen, so dass es auch denkbar ist, die Kontrolleinheit nicht vorzusehen. In diesem Ausführungsbeispiel übernimmt die Servereinheit jegliche Daten- und/oder Kommunikationsverbindungen zu den einzelnen ansteuerbaren Bauteilen des Regenerationsmagazins. So können Verbindungen zu dem wenigstens einen Verschlusselement direkt zwischen Servereinheit und dem wenigstens einen Verschlusselement ausgebildet werden. Die Servereinheit steuert in Abhängigkeit der erfassten Daten die Bauteile und veranlasst entsprechende Aktionen.

Auch wenigstens die Datenerfassung und/oder Datenweiterleitung von Daten der Temperierelementaufnahmeeinheit ist vorteilhaft, da hiermit beispielsweise Beladungszustände der Temperierelementaufnahmeeinheit mit Temperierelementen von der Servereinheit erfasst und gespeichert werden können. Vorteilhaft steht die Servereinheit direkt mit der Temperierelementaufnahmeeinheit in Daten- und/oder Kommunikationsverbindungen und Datenaustausch.

Auch wenigstens die Datenerfassung und/oder Datenweiterleitung von Daten wenigstens eines Temperierelements ist vorteilhaft, da beispielsweise hierdurch dessen Regenerationszustand von der Servereinheit erfasst und gespeichert werden kann.

Somit kann insgesamt eine Überwachung und/oder Kontrolle des Beladezustands der Temperierelementaufnahmeeinheit mit Temperierelementen sowie des Regenerationszustands der einzelnen Temperierelemente sowie der Funktionsfähigkeit des Regenerationsmagazins bereitgestellt werden. Vorteilhaft fragt die Servereinheit diese Daten in vorbestimmbaren Zeitintervallen kontinuierlich ab.

Bei einer weiteren vorteilhaften Ausführungsform des Regenerationsmagazins kann die Temperiereinheit beispielsweise als Kompressionskältemaschine oder Absorptionskältemaschine ausgebildet sein. Durch deren kalte Seite kann temperierte, hier auf einen vorbestimmbaren Wert gekühlte, Luft, hier auch als Temperierluftstrom bezeichnet, den Gehäuseinnenraum durchströmen und somit kühlen. Im einfachsten Fall ist die Temperiereinheit Teil des Regenerationsmagazins. Sie wird dann als interne Temperiereinheit bezeichnet.

Ist eine externe Temperiereinheit vorgesehen, welche bauseits beispielsweise schon vorhanden ist, so kann der durch die Temperiereinheit gekühlte Luftstrom in das Gehäuse des Regenerationsmagazins hineingeführt und dort zirkuliert werden. Bei Bedarf kann der Temperierluftstrom dann auch wieder aus dem Gehäuse heraus und der externen Temperiereinheit zugeführt werden, um dort wieder heruntergekühlt zu werden. Das Gehäuse weist hierzu vorteilhaft wenigstens zwei Kopplungsabschnitte auf. Mittels diesen können Gehäuse und externe Temperiereinheit verbindbar sein und der Temperierluftstrom kann zirkulieren.

In einer anderen Ausführungsform ist denkbar die interne oder externe Temperiereinheit als Wärmepumpe auszubilden. Hierdurch ist es möglich, den Gehäuseinnenraum auf eine vorbestimmbare Temperatur, beispielsweise höher als Raumtemperatur von 20 °C, zu erwärmen.

Folglich ist die hier eingesetzte Temperiereinheit zum Kühlen gegenüber einer Raumtemperatur von 20 °C und/oder zum Wärmen gegenüber einer Raumtemperatur von 20° C ausgebildet.

Bei einer weiteren vorteilhaften Ausführungsform des Regenerationsmagazins ist die wenigstens eine Temperierelementzuführ- und/oder Temperierelementabführöffnung als eine Öffnung in einer vertikal ausgerichteten Seitenfläche des Gehäuses ausgebildet. Im einfachsten Fall ist die Seitenfläche die Frontseite des Regenerationsmagazins. Somit kann vorteilhaft immer sichergestellt sein, dass diese Seitenfläche zugänglich und leicht bedienbar ist. Im einfachsten Fall ist die Öffnung derart ausgestaltet, dass sie lediglich den Gehäuseinnenraum zugänglich macht, in welchem die Temperierelementaufnahmeeinheit angeordnet ist. Die restliche Frontseite des Regenerationsmagazins in Richtung Boden, wo beispielsweise Teile der internen Temperiereinheit angeordnet sind, wird von dieser Öffnung nicht erfasst.

Bei einer weiteren vorteilhaften Ausführungsform des Regenerationsmagazins kann das Verschlusselement zum Verschließen der Öffnung als zweiflügeliges Element ausgebildet sein. Dies ist von Vorteil, da im geschlossenen Zustand beide Flügelelemente auf Stoß zueinander angeordnet sind.

Wird das Verschlusselement nun manuell bedient oder sendet die Kontrolleinheit ein Signal zum Öffnen, so bewegen sich beide Flügelelemente auseinander und legen die Öffnung und somit auch den Zugang zum Gehäuseinnenraum frei. Soll der Gehäuseinnenraum wieder temperaturdicht verschlossen werden, so bewegen sich die Flügelelemente wieder zur Mitte, bis sie Stoß an Stoß aneinander anschlagen. Dies kann manuell oder auch wieder über die Servereinheit gesteuert erfolgen.

Im einfachsten Fall können die Flügelelemente motorisch bewegt, beispielsweise verschoben, sein. Hierbei kann jeder Flügel eine Antriebseinheit, beispielsweise einen Motor, aufweisen, welcher dann über einen Spindelantrieb, hydraulischen Antrieb, pneumatischen Antrieb oder dergleichen das jeweilige Flügelelement in seiner Position verändert. Allgemein ist hier ein elektrischer und/oder mechanischer Antrieb einsetzbar.

In einen automatisierten Regenerationsprozess ist es von Vorteil, wenn das wenigstens eine Verschlusselement, beispielsweise über die Servereinheit direkt angesteuert wird, so dass es sich automatisch öffnet und/oder automatisch schließt. Hier kann die Servereinheit beispielsweise wenigstens ein Signal an die Antriebseinheit senden, welche veranlasst, dass sich das wenigstens eine Verschlusselement öffnet. Zugleich ist es im Anschluss denkbar, dass die Servereinheit über wenigstens ein weiteres Signal wieder das Verschließen auslöst.

Ergänzend oder alternativ ist es auch denkbar, dass die optionale Kontrolleinheit, welche beispielsweise Mikrokontroller und/oder wenigstens einen Prozessor aufweisen kann, die Signalauslösung zur Öffnung und/oder Schließung des wenigstens einen Verschlusselements von einer übergeordneten Servereinheit, welche auch als Zentralenservereinheit oder auch als übergeordnete Steuerungseinheit bezeichnet werden kann, erhält. Die Zentralenservereinheit ist als übergeordnete Steuerungseinheit zu verstehen.

So erfasst beispielsweise die Servereinheit, wenn sich ein zu regenerierendes Temperierelement auf dem Weg zum Regenerationsmagazin befindet. Dies kann beispielsweise über das RFID-Tag des Temperierelements oder andere Erkennungsmittel erfolgen. Somit kann besonders zeiteffektiv das wenigstens eine Verschlusselement zum Einführen des zu regenerierenden Temperierelements bereits kurz vor dessen Ankunft geöffnet werden. Ist dieses Temperierelement dem Regenerationsmagazin zugeführt, so kann dies von der Zentralenservereinheit erfasst werden. Zugleich kann das Verschlusselement zur Entnahme eine regenerierten Temperierelements automatisch von der Servereinheit angesteuert und dessen Öffnung veranlasst werden.

Alternativ ist auch denkbar, dass Kontrolleinheit und Zentralservereinheit parallel im automatisierten Prozess eingebunden sind.

Dies ist selbstverständlich nicht begrenzend zu verstehen, so dass es in einer weiteren alternativen Ausführungsform denkbar ist, dass das wenigstens eine Verschlusselement als rollladenartige Abdeckung ausgebildet ist. In diesem Ausführungsbeispiel erfolgt das Öffnen des Verschlusselements in vertikaler oder auch in horizontaler Richtung unter Auf- oder Abwicklung eines gliederförmigen Abdeckungsmittels unter Steuerung der Servereinheit. Vorteilhaft ist diese Ausführungsform motorisch angetrieben. Auch kann das Verschlusselement mehrteilig, beispielsweise als zweigeteilte rollladenartige Abdeckung ausgebildet sein.

Schließlich ist in einer weiteren alternativen Ausführungsform denkbar, das Verschlusselement nicht als physikalische Türe, sondern als temperierten Luftschleier auszubilden. Vorteilhaft kann wenigstens ein Kaltluftschleier, vorteilhaft zusätzlich noch ein darüber strömender Warmluftschleier, vorgesehen sein, welcher die im Gehäuseinnenraum vorbestimmte Temperatur von der Umgebungstemperatur isoliert. Durch die Kombination von Kaltluftschleier und Warmluftschleier wird die Mischluft reduziert. Die Öffnung ist durch die Schleierkombination temperaturstabil, vorteilhaft thermisch isoliert, verschlossen ausgebildet. Allerdings kann die Wechseleinheit leicht durch die Schleierkombination in den Gehäuseinnenraum greifen und das Temperierelement in diesen Einführen oder Ausführen. Ein zusätzlicher Öffnungsmechanismus entfällt.

Bei einer weiteren vorteilhaften Ausführungsform des Regenerationsmagazins weist die Temperierelementaufnahmeeinheit wenigstens einen Halterahmen auf, in welchem eine Vielzahl an Luftführungselementen angeordnet sind. Der Halterahmen ist vorteilhaft im Gehäuseinnenraum angeordnet. Er kann direkt an der Innenwandung des Gehäuses angeordnet sein.

Ferner ist vorteilhaft, wenn der Halterahmen zu der Innenwandung des Gehäuseinnenraums beabstandet angeordnet ist. Dies kann beispielsweise über Abstandshalter erfolgen. Dies ermöglicht eine kontrollierte Führung des Luftstroms, welcher zur Temperierung der Temperierelemente in der Temperierelementaufnahmeeinheit eingesetzt ist und welcher von der Temperiereinheit erzeugt wird.

Der Halterahmen kann aus Metall ausgebildet sein. Dies ist von Vorteil, da Metall eine sehr gute Wärmeleitfähigkeit aufweist und hierdurch die zeiteffektive Temperierung der Temperierelemente nochmals unterstützt werden kann.

Damit die Temperierelemente kontrolliert und gleichmäßig im Gehäuseinnenraum angeordnet werden können, weist der Halterahmen mehrere Luftführungselemente auf. Diese können zum einen für die Führung des temperierten Luftstroms, auch als Temperierluftstrom bezeichnet, sowie für die Aufnahme der Temperierelemente ausgebildet sein.

Vorteilhaft sind die Luftführungselemente aus Metall ausgebildet. Dies ist von Vorteil, da Metall eine sehr gute Wärmeleitfähigkeit aufweist und hierdurch die zeiteffektive Temperierung der zumindest teilweise darauf aufliegenden Temperierelemente nochmals unterstützt werden kann.

Bei einer weiteren vorteilhaften Ausführungsform sind die hier eingesetzten Luftführungselemente zumindest teilweise V-förmig ausgebildet. Vorteilhaft ist die Fläche, welche sich unterhalb des darauf angeordneten Temperierelements befindet, V-förmig ausgebildet. Die V-Form läuft mittig unter dem Temperierelement zusammen, so dass eine Rinne ausgebildet wird.

Vorteilhaft weist diese Rinne wenigstens eine Öffnung, vorteilhaft mehrere Öffnungen auf. Diese Öffnungen erweisen sich als vorteilhaft, um mögliches Kondensat, welches beim Regenerieren der Temperierelemente entstehen kann, von diesen gezielt nach unten abzuführen.

Weiterhin ist denkbar, dass die V-förmige Geometrie des Luftführungselements dessen Bodenabschnitt ausbildet. Zusätzlich ist denkbar, dass der Bodenabschnitt wenigstens eines Luftführungselements, vorteilhaft aller Luftführungselemente der Temperierelementaufnahmeeinheit, seitliche Begrenzungsleitelemente aufweist, welche sich gegenüber dem Bodenabschnitt zumindest teilweise vertikal nach oben oder schräg geneigt zu diesem erstrecken. Vorteilhaft können die Begrenzungsleitelemente Durchgangsöffnungen aufweisen. Hierdurch kann der Temperierluftstrom in einem Gebrauchszustand des Regenerationsmagazins zusätzlich kontrolliert geführt werden.

Unter Gebrauchszustand ist hier der Zustand zu verstehen, in welchem der Temperierluftstrom im Gehäuse zirkuliert und darin angeordnete Temperierelemente regeneriert, beispielsweise gekühlt oder erwärmt werden.

Alternativ ist auch denkbar, auf den Halterahmen zu verzichten. Dann sind die Luftführungselemente direkt an den Gehäuseinnenraumwandungen fixiert.

Bei einer weiteren vorteilhaften Ausführungsform des Regenerationsmagazins sind die Luftführungselemente in vertikaler Richtung übereinander oder in horizontaler Richtung nebeneinander beabstandet zueinander angeordnet. Hierdurch bilden sich vorteilhaft räumliche Abgrenzungen aus, welche zusammen mit dem Halterahmen und/oder der Gehäuseinnenraumwandung auch als Regenerationsfächer bezeichnet werden können. Vorteilhaft ist die räumliche Abgrenzung zwischen zwei Luftführungselementen derart, dass ein Temperierelement zwischen diesen beiden Luftführungselementen positionierbar ist. In einer möglichen Ausführungsform können die Abstände zwischen zwei zueinander benachbart angeordneten Luftführungselementen wenigstens 5 bis 25 % größer gewählt sein als die Dicke des dazwischen anzuordnenden Temperierelements.

Weist das Temperierelement beispielsweise eine Dicke von 5 cm auf, ist der Abstand zwischen zwei Luftführungselementen im Bereich von 5,5 cm bis 6,25 cm. Dies stellt zum einen eine hohe Platzeffizienz sicher. Zudem stellt dieser Abstand weiterhin sicher, dass der von der Kühleinheit erzeugte und durch den Gehäuseinnenraum geführt Luftstrom auch die in den Regenerationsfächern angeordneten Temperierelemente zumindest teilweise umspülen, also umfließen kann. Vorteilhaft erfolgt das Umfließen wenigstens an der Oberfläche der Temperierelemente entlang. Vorteilhafter erfolgt das Umfließen an der Oberfläche und zumindest teilweise an der dem Luftführungselement zugewandten Unterfläche entlang. Noch vorteilhafter ist denkbar, dass der Luftstrom zusätzlich noch senkrecht zu diesen beiden ersten Flussrichtungen führbar ist.

Hierdurch kann eine hocheffiziente, also besonders schnelle Regeneration, also Wieder-Herstellung des Gebrauchszustands der Temperierelemente, erfolgen.

Bei einer weiteren vorteilhaften Ausführungsform des Regenerationsmagazins kann jedem Regenerationsfach ein Verschlusselement zugewiesen sein. Dies ist vorteilhaft, da hiermit Energie gespart werden kann, da beim Öffnen lediglich kleine Öffnungen im Gehäuse ausgebildet werden. Im einfachsten Fall sind die Verschlusselemente mittels Schwenk- oder Klappmechanismus versehen und motorisch angetrieben. Hierdurch kann die Servereinheit die einzelnen Verschlusselemente separat aktivieren und beispielsweise deren Öffnung oder Verschließen veranlassen. Zudem kann die Servereinheit zugleich den Belegzustand der einzelnen Regenerationsfächer erfassen, ob diese also leer oder mit einem Temperierelement befüllt sind.

Bei einer weiteren vorteilhaften Ausführungsform des Regenerationsmagazins sind die Luftführungselemente in vertikaler Richtung übereinander oder in horizontaler Richtung nebeneinander beabstandet zueinander angeordnet. Dies ist vorteilhaft, da hiermit flexibel auf die räumlichen Anforderungen eingegangen werden kann.

Bei einer weiteren vorteilhaften Ausführungsform des Regenerationsmagazins weist jedes Regenerationsfach wenigstens ein Sensorelement auf, welches mit der Kontrolleinheit und/oder der Servereinheit gekoppelt ist, wobei das wenigstes eine Sensorelement eine Temperatur in dem jeweiligen Regenerationsfach und/oder dessen Beladezustand und/oder Daten des darin angeordneten Temperierelements erfasst. Dies ist vorteilhaft, da hiermit Daten für den Regenerationszustand der Temperierelemente, Daten des Regenerationsmagazins sowie Daten der Temperiereinheit erfasst und von der Servereinheit verarbeitet werden können. Dies ist insbesondere von großem Nutzen, wenn das Regenerationsmagazin in einem automatisierten Lagersystem eingesetzt wird.

Das Sensorelement ist vorteilhaft als kapazitiver Sensor, induktiver Sensor oder als Gewichtssensor ausgebildet. Hierdurch kann der Beladezustand des Regenerationsfaches von der Servereinheit zumindest erfasst und verarbeitet werden.

Zusätzlich ist denkbar, dass mit dem Beladen des Regenerationsfaches, wenn also ein zu regenerierendes Temperierelement darin angeordnet wird, und das jeweilige Sensorelement die Beladung detektiert, ein Zeitlauf in Gang gesetzt wird. Dies kann über die Servereinheit erfolgen. Somit wird in der Servereinheit erfasst und gespeichert, wie lange ein Temperierelement bereits im Regenerationsmagazin angeordnet ist. Aufgrund dieser Zeiterfassung kann wenigstens eine Extrapolationsroutine durchgeführt werden. Diese liefert das Ergebnis, wann dieses Temperierelement vollständig regeneriert und wieder einsatzbereit ist.

Weiterhin ist denkbar, dass das Sensorelement als optisches oder optoelektronisches Erkennungsmittel ausgebildet ist. Im einfachsten Fall kann das Sensorelement als Lichtschranke oder Lichttaster ausgebildet sein. Wird beispielsweise ein Temperierelement in das entsprechende Regenerationsfach eingeführt, wird die Lichtschranke unterbrochen und die Servereinheit erfasst, dass das Regenerationsfach belegt ist. Mit Unterbrechung der Lichtschranke kann ein Zeitlauf gestartet werden. Hierfür ist die Servereinheit zuständig, um den Zeitlauflauf zu erfassen und zu verarbeiten. Somit wird in der Servereinheit erfasst und gespeichert, wie lange ein Temperierelement bereits im Regenerationsmagazin angeordnet ist. Aufgrund dieser Zeiterfassung kann wenigstens eine Extrapolationsroutine durchgeführt werden. Diese liefert das Ergebnis, wann dieses Temperierelement vollständig regeneriert und wieder einsatzbereit ist.

Auch ist weiterhin denkbar, dass das Sensorelement als federgelagerter Pin ausgebildet ist. Wird ein Temperierelement in die Temperierelementaufnahmeeinheit eingeführt, so kann der Pin mit einer entsprechenden Kraft während des Einführens betätigt werden. Die Auslenkung des Pins ist als Signal zum positiven Beladezustand des Regenerationsfaches zu verstehen und wird vorteilhaft ebenfalls von der Servereinheit erfasst. Wird das Temperierelement über die Wechseleinheit entnommen, wird der Pin wieder in seine Ausgangsposition geführt. Das Regenerationsfach wird als "leer" hinterlegt und entsprechend von der Servereinheit gespeichert.

Bei einer weiteren vorteilhaften Ausführungsform des Regenerationsmagazins sind die Temperierelementzuführöffnung und die Temperierelementabführöffnung in einer vertikal ausgerichteten Seitenfläche des Gehäuses vorgesehen, wobei Temperierelementzuführöffnung und Temperierelementabführöffnung in vertikaler Richtung voneinander beabstandet angeordnet sind. Dies ist insbesondere energetisch von Vorteil, da hierbei stets nur kleine Bereiche geöffnet werden. Somit kann die im Gehäuseinnenraum vorbestimmte Temperatur verlässlich, trotz Öffnung oder Öffnungen, gehalten werden.

Durch die hierdurch ausgebildete wesentliche Begrenzung des Zuführ- und/oder Abführbereichs von Temperierelementen an der Seitenfläche des Regenerationsmagazins wird der Falschlufteintrag, beispielsweise die Umgebungsluft, deutlich reduziert. Dies ist vorteilhaft, da hierdurch die Reifbildung am Verdampfer signifikant reduziert werden kann.

Als besonders vorteilhaft hat es sich erwiesen, wenn Temperierelementzuführöffnung oberhalb der vertikal versetzt hierzu angeordneten Temperierelementabführöffnung ausgebildet ist. Somit können zu regenerierende Temperierelemente von oben in den Gehäuseinnenraum, vorteilhafter in die Temperierelementaufnahmeeinheit, eingeführt werden. Wird ein regeneriertes Temperierelement benötigt, so kann dieses über die Temperierelementabführöffnung aus der Temperierelementaufnahmeeinheit entnehmbar bereitgestellt werden.

Je nach Ausführung ist denkbar, dass Temperierelementabführöffnung und Temperierelementzuführöffnung an der gleichen Seitenfläche, beispielsweise der Frontseite angeordnet sind. Dies ist aber nicht begrenzend zu verstehen, so dass es auch denkbar ist, dass Temperierelementabführöffnung und Temperierelementzuführöffnung an zwei verschiedenen Seitenflächen angeordnet sind.

Bei einer weiteren vorteilhaften Ausführungsform des Regenerationsmagazins ist sowohl die Temperierelementzuführöffnung als auch die Temperierelementabführöffnung jeweils mit einem Verschlusselement zum Verschließen der jeweiligen Öffnung verschließbar ausgebildet. Dies ist vorteilhaft, da beide Verschlusselemente unabhängig voneinander geöffnet werden können, so dass die vorbestimmte Temperatur im Gehäuseinnenraum von der Öffnung wenig beeinflusst wird. Der Falschlufteintrag in den Gehäuseinnenraum wird deutlich beschränkt.

Bei einer weiteren vorteilhaften Ausführungsform des Regenerationsmagazins weist die Temperierelementaufnahmeeinheit wenigstens einen Halterahmen auf, welcher eine Vielzahl an Trennelementen zur vereinzelten Anordnung der Temperierelemente aufweist.

Der Halterahmen dient zur Aufnahme der Temperierelemente, welche im Regenerationsmagazin wieder regeneriert, also wieder aufgeladen, werden sollen.

In diesem Ausführungsbeispiel sind seitlich, in vertikaler Erstreckung versetzt zueinander, Trennelemente am Halterahmen angeordnet. In diesem Ausführungsbeispiel bilden zumindest Trennelemente und Halterahmen die Temperierelementaufnahmeeinheit aus. Die Trennelemente sind als Vorsprünge ausgebildet. Sie dienen der abschnittsweisen Ablage und/oder Untergreifung der zumindest teilweise darauf anordenbaren Temperierelementen.

Bei einer weiteren vorteilhaften Ausführungsform des Regenerationsmagazins sind die Trennelemente an wenigstens zwei einander gegenüberliegenden Innenwänden des Halterahmens, versetzt zueinander, angeordnet. Hierdurch bildet sich vorteilhaft ein zickzackförmiger Bewegungspfad der in der Temperierelementaufnahmeeinheit zu regenerierenden Temperierelemente aus. Die Temperierelemente rutschen in zickzack-Form in der Temperierelementaufnahmeeinheit, ausgehend von der Temperierelementzuführöffnung nach unten in Richtung Temperierelementabführöffnung durch. Wird beispielsweise ein Temperierelement in die obere Temperierelementzuführöffnung eingeführt, so rutscht dieses im geometrisch vorbestimmten Zwischenraum durch, bis es Kontakt zu einem weiteren Temperierelement ausbildet.

Die Trennelemente sind derart ausgebildet, dass lediglich ein Abschnitt eines Temperierelements auf dem jeweiligen Trennelement angeordnet werden kann. Das Temperierelement selbst liegt somit schräg gegenüber dem Halterahmen.

Wird von unten durch die Temperierelementabführöffnung ein Temperierelement entnommen, so rutschen die noch verbleibenden Temperierelemente nach unten durch. Dies erfolgt auf einem zickzackförmigen Bewegungspfad. Dieser wird über die Trennelemente vorgegeben. Durch das kontinuierliche Nachrutschen werden zugleich mögliche Vereisungen der im Zwischenraum angeordneten Temperierelemente aufgebrochen. Dies ist natürlich nur der Fall, wenn die Temperierelemente als Kühlelemente ausgebildet sind und im Regenerationsmagazin gekühlt werden, um wieder zu regeneriert zu werden.

Bei einer alternativen Ausführungsform hierzu wird auf Trennelemente verzichtet. Hier weist die Temperierelementaufnahmeeinheit wenigstens einen Halterahmen auf, dessen wenigstens zwei einander gegenüberliegende Innenflächen in vertikaler Erstreckung jeweils wenigstens einen C-förmigen, S-förmigen oder mehrfach S-förmig gewundenen Verlauf aufweisen. Diese geometrische Ausbildung gibt den Bewegungspfad der Temperierelemente vor.

Sind beispielsweise zwei einander gegenüberliegende Seitenflächen des Halterahmens S-förmig gewunden ausgebildet, so wird zugleich ein ebenfalls S-förmig gewundener Zwischenraum zwischen diesen beiden Seitenflächen bedingt. Vorteilhaft sind die beiden Seitenflächen derart voneinander beabstandet, dass der von ihnen aufgespannte Zwischenraum ausreichend groß ist, um vertikal ausgerichtete Temperierelemente aufzunehmen. Diese können beispielsweise in diesem Zwischenraum gestapelt werden. Im einfachsten Fall werden die Temperierelemente übereinander gestapelt.

Wird beispielsweise ein Temperierelement in die obere Temperierelementzuführöffnung eingeführt, so rutscht dieses im geometrisch vorbestimmten Zwischenraum durch, bis es Kontakt zu einem weiteren Temperierelement ausbildet.

Wird über die Temperierelementabführöffnung hingegen ein Temperierelement entnommen, so rutschen die weiteren, im Zwischenraum angeordneten Temperierelemente nach. Durch die vorteilhafte geometrisch C-Form, S-Form und/oder mehrfache S-Form des Zwischenraums wird ein Verkanten der nachrutschenden Temperierelemente verhindert. Als besonders vorteilhaft hat es sich erwiesen, wenn das unterste Temperierelement, welches also als nächstes aus der Temperierelementabführöffnung entnommen werden kann, von dem darüber angeordneten Temperierelementstapel zumindest teilweise entkoppelt ist. Dies wird dadurch erreicht, dass das letzte Temperierelement direkt vor der Temperierelementabführöffnung angeordnet ist, um so einfach aus dieser entnommen werden zu können. Das hierzu benachbart angeordnete Temperierelement, also das sozusagen vorletzte Temperierelement des Temperierelementstapel, ist gegenüber dem letzten Temperierelement verkippt, also schräg, angeordnet. Hierdurch wird die Reibung über die Flächenlast signifikant reduziert. Somit ist das letzte, unterste Temperierelement stets leicht und ohne großen Kraftaufwand aus dem System entnehmbar. Diese Schrägstellung des vorletzten Temperierelements wird vorteilhaft durch die geometrische Ausbildung wenigstens eines Seitenabschnitts des Halterahmens ausgebildet. Dies kann beispielsweise dadurch erfolgen, dass dieser einen seitlichen Versatz aufweist. So ist bei dem Nachrutschen des Temperierelementstapels diese Schrägstellung des vorletzten zu entnehmenden Temperierelements ausgebildet. Der seitliche Versatz kann beispielsweise als Krümmung oder Knick ausgebildet sein, welcher den Zwischenraum im unteren Bereich nahe der Temperierelementabführöffnung verjüngt. Hierdurch wird die Schrägstellung des vorletzten Temperierelements bedingt. Wird dann das unterste Temperierelement entnommen, rutscht das schräggestellte, vorletzte Temperierelement nach und nimmt die Position des letzten, entnommenen Temperierelements ein.

Durch das kontinuierliche Nachrutschen werden zugleich mögliche Vereisungen der im Zwischenraum angeordneten Temperierelemente aufgebrochen. Dies ist natürlich nur der Fall, wenn die Temperierelemente als Kühlelemente ausgebildet sind und im Regenerationsmagazin gekühlt werden, um wieder zu regeneriert zu werden.

Dies ist selbstverständlich nicht beschränkend zu verstehen, so dass es auch denkbar ist, dass der Zwischenraum ergänzend oder alternativ zu der C-Form, S-Form und/oder mehrfache S-Form schräg geneigt, also rutschenartig, ausgebildet ist. Auch diese Geometrie ist vorteilhaft für die Entnahme der zu regenerierenden Temperierelemente. So ist beispielsweise denkbar, dass bei geöffneter Temperierelementabführöffnung direkt ein Temperierelement herausgleitet. Ein aktives Entnehmen fällt hierbei weg. Hierbei kann die Freigabe des untersten Temperierelements direkt mit der Öffnung des entsprechenden Verschlusselementes erfolgen. Alternativ ist aber auch denkbar, dass das unterste Temperierelement über ein Haltemittel in der Position gehalten wird, bis das Verschlusselement der Temperierelementabführöffnung vollständig geöffnet ist. Das Freigeben des Temperierelements kann dann unter Rückfahren des Halteelements erfolgen. Dies wird vorteilhaft direkt über die Servereinheit oder von der optional vorgesehenen Kontrolleinheit gesteuert.

Alternativ kann auch ein rechteckiger Temperierelementstapel in einem rechteckig aufgespannten Halterahmen ausgebildet sein. In diesem Ausführungsbeispiel kann das unterste Temperierelement, welches bereit liegt, um durch die Temperierelementabführöffnung aus dem Regenerationsmagazin herausgefördert zu werden, mittels Antriebseinheit bewegt werden. Die Antriebseinheit kann beispielsweise als Motor ausgebildet sein und mit einem Schiebelement verbunden sein. Mit motorischem Antrieb kann dann das unterste Temperierelement aus diesem Stapel aus dem Regenerationsmagazin herausbefördert werden. Aufgrund der notwendigen Kraft und der Verkippungsgefahr wird hier ein motorischer Antrieb gegenüber der manuellen Bedienung durch Bedienpersonal vorgezogen. Hierdurch kann vorteilhaft die Reibung, welche über die Flächenlast erzeugt wird, überwunden werden.

Bei einer weiteren vorteilhaften Ausführungsform ist denkbar, dass sich direkt an die Temperierelementabführöffnung ein Führungselement anschließt. Dieses kann ebenfalls geneigt nach unten in Richtung Boden ausgebildet sein. Somit kann ein freigegebenes, regeneriertes Temperierelement von der Temperierelementabführöffnung abgeführt werden, um beispielsweise in eine Positioniereinheit einer Lager- und Transportvorrichtung hinzugleiten.

Bei einer weiteren vorteilhaften Ausführungsform des Regenerationsmagazins weist dieses an der Temperierelementabführöffnung und/oder an der Temperierelementzuführöffnung wenigstens ein Sensorelement auf. Dieses kann optional mit der Servereinheit gekoppelt ausgebildet sein. Vorteilhaft erfasst das wenigstens eine Sensorelement, wenn ein Temperierelement durch die Temperierelementzuführöffnung dem Regenerationsmagazin zugeführt und/oder wenn ein Temperierelement durch die Temperierelementabführöffnung dem Regenerationsmagazin entzogen wird. Somit kann vorteilhaft immer sichergestellt werden, dass ersichtlich ist, ob freie Beladungspositionen im Regenerationsmagazin vorhanden sind.

Sind beispielsweise 20 Beladungspositionen vorgesehen, so können 20 Temperierelemente aufgenommen werden.

Hierdurch kann der Beladezustand des Zwischenraumes und somit der Temperierelementaufnahmeeinheit von der Servereinheit zumindest erfasst und verarbeitet werden.

Weiterhin ist denkbar, dass das wenigstens eine Sensorelement als optisches oder optoelektronisches Erkennungsmittel ausgebildet ist. Im einfachsten Fall kann das Sensorelement als Lichtschranke oder Lichttaster ausgebildet sein. Wird beispielsweise ein Temperierelement in die Temperierelementzuführöffnung eingeführt, wird die Lichtschranke unterbrochen. Die Servereinheit erfasst, dass ein zu regenerierendes Temperierelement eingeführt wird. Somit ist eine Beladungsposition belegt. Mit Unterbrechung der Lichtschranke kann ein Zeitlauf gestartet werden. Hierfür ist die Servereinheit zuständig, um den Zeitlauf zu erfassen und zu verarbeiten.

Weiterhin kann in einer vorteilhaften Ausführungsform an der Frontseite, über welche die Beladung des Gehäuseinnenraumes mit Temperierelementen erfolgt, und/oder allgemein mit dem Gehäuse verbunden, eine Anzeigeeinrichtung vorgesehen sein. Diese Anzeigeeinrichtung kann als Bildschirm ausgebildet sein, welcher den Beladezustand des Regenerationsmagazins und/oder den Regenerationszustand der einzelnen Temperierelemente, wie von der Kontrolleinheit erfasst, anzeigt. Wird der Beladezustand geändert und/oder ändert sich der Regenerationszustand, so wird das von der Servereinheit erfasst und auf dem Bildschirm aktualisiert und angezeigt.

Bei einer weiteren vorteilhaften Ausführungsform ist das Gehäuse und/oder das wenigstens eine Verschlusselement thermisch isoliert ausgebildet. Für die Isolierung können bekannte Materialien verwendet werden, beispielsweise Dämmschäume oder Vakuumpaneele. Bei der Isolierung hat es sich als vorteilhaft erwiesen, die Isolierung sandwichartig einzubringen. Hierdurch resultiert ein mehrschichtiger Aufbau des Gehäuses und/oder des wenigstens einen Verschlusselements.

Die Isolierung ist hierbei von Gehäuseflächenteilen und/oder Verschlusselementflächen flächig eingeschlossen. Die im Gehäuseinnenraum vorgegebene Temperatur über die Temperiereinheit eingestellt.

Bei einer weiteren vorteilhaften Ausführungsform ist denkbar, das Gehäuse des Regenerationsmagazin stapelbar auszubilden. So können zahlreiche Temperierelemente bereitgestellt und zugleich auch regeneriert werden. Im einfachsten Fall kann diese Stapelbarkeit über einen Nut-Feder-Mechanismus ausgebildet sein. Hiermit können Regenerationsmagazins nebeneinander und/oder übereinander und/oder untereinander miteinander verkoppelt und somit gestapelt werden.

Bei einer weiteren vorteilhaften Ausführungsform kann der Zwischenboden, welcher vorteilhaft unterhalb des Verdampfers angeordnet ist, und welcher beispielsweise den Kompressor vom restlichen Gehäuse abtrennt, modifiziert sein. Besonders vorteilhaft ist der Zwischenboden beheizbar ausgebildet. Hierzu ist wenigstens ein Heizelement im Zwischenboden eingebettet und/oder auf diesem und/oder unter diesem angeordnet. Das Heizelement kann als Heizkabel ausgebildet sein. Dies ist vorteilhaft, da hierdurch der Zwischenboden erwärmbar ist, so dass mögliches Tropfwasser, ausgehend von den darüber angeordneten Temperierelementen, gerade nicht auf dem Zwischenboden anfriert und sich dicke Eisschichten dort ausbilden. Hierdurch würde nach einer Zeit auch wenigstens die Funktion des Verdampfers eingeschränkt werden. Daher ist es wichtig, das Tropfwasser auch flüssig abzuführen. Dies wird erfolgreich mit der Erwärmung des Zwischenbodens erreicht. Im einfachsten Fall ist der Zwischenboden geschäumt ausgebildet. So kann auch das wenigstens eine Heizelement einfach eingebracht werden. Vorteilhaft ist das wenigstens eine Heizelement durch die Servereinheit regel- und steuerbar.

Somit kann ein besonders energieeffizienter Prozess bereitgestellt werden.

Bei einer weiteren vorteilhaften Ausführungsform kann die Temperierelementaufnahmeeinheit wenigstens einen unterbrochenen Seitenabschnitt aufweisen. Die seitlichen, sich in vertikaler Richtung erstreckenden Seitenabschnitte der Temperierelementaufnahmeeinheit sind in diesem Fall nicht voll ausgebildet. Sie sind aus mehreren Streifen ausgebildet, so dass sich vertikale Längsöffnungen bedingen. Diese können durchgängig in vertikaler Richtung sein und/oder aber in vertikaler Richtung unterbrochen sein. Vorteilhaft sind diese Streifen aus Metall, beispielsweise aus Blech ausgebildet. Die Anordnung der Bleche in Kombination mit den Längsöffnungen schaffen einen einheitlichen Druckverlust und damit ein einheitliches Umspülen der Temperierelemente über die Höhe der Auslagen gewährleisten sollen. Vorteilhaft können die Längsöffnungen und die Streifen variabel ausgebildet sein, so dass sich in Druckabhängigkeit des Temperierluftstrom unterschiedliche Durchströmbereiche zwischen den Streifen ausbilden lassen.

Zur verbesserten Fixierung kann das Temperierelement in seiner Längserstreckung, an wenigstens einer Seitenfläche, vorteilhaft an beiden Seitenflächen, wenigstens eine Vertiefung aufweisen. Alternativ zu der wenigstens einen Vertiefung ist auch wenigstens ein entsprechender Vorsprung denkbar.

Bei einer weiteren vorteilhaften Ausführungsform kann das Temperierelement an seiner Ober- und/oder Unterfläche wenigstens ein Abstandselement aufweisen. Dieses Abstandselement ist vorteilhaft, da hierdurch ein zusätzlicher Luftstromvolumen zwischen Luftführungselement und Temperierelement geführt werden kann. Somit kann die temperierte Luft nochmals besser das Temperierelement umspülen, also umfließen. Die Regeneration ist effektiver und zeitlich kürzer. Vorteilhaft sind wenigstens drei, vier oder sechs Abstandelemente vorgesehen. So kann ein Verkippen des Temperierelements verhindert werden. Die Abstandselemente können beispielsweise eine zylindrische Form aufweisen. Die Abstandselemente können als Füßchen verstanden werden.

Weiterhin wird auch der Betrieb eines Regenerationsmagazins offenbart mit wenigstens den folgenden Schritten:
a. Erzeugen eines gerichteten Temperierluftstroms über eine Temperiereinheit;
b. wobei der Temperierluftstrom auf einem Strömungspfad durch den Gehäuseinnenraum geführt wird, um im Gehäuseinnenraum gerichtet zu zirkulieren;
c. wobei hierbei der Temperierluftstrom wenigstens teilweise jedes Temperierelement in jedem Regenerationsfach umspült; und
d. wobei die optional vorgesehene Kontrolleinheit und/oder die Servereinheit wenigstens das Beladen eines Regenerationsfaches und/oder Entladen eines Regenerationsfaches erfasst und/oder verarbeitet.

Weiterhin kann der Luftstrom, welcher im Regenerationsmagazin erzeugt wird, als aktiver Luftstrom oder auch aktiver, teilbarer Strömungspfad verstanden werden. Die Temperiereinheit führt die Luft aktiv von unten her in den Gehäuseinnenraum ein. Im Gehäuseinnenraum ist die Temperierelementaufnahmeeinheit angeordnet. Vorteilhaft wird die temperierte, beispielsweise gekühlte Luft, von einer Luftstromführungseinrichtung, beispielsweise einem Ventilator, aktiv nach oben in Richtung Temperierelementaufnahmeeinheit geführt. Dies kann durch aktives Blasen oder Saugen ausgebildet sein. Insbesondere durch aktives Saugen können die Wärmetauscherflächen effektiver beaufschlagt werden. Aufgrund der kontinuierlichen Nachführung von Luft wird der Temperierluftstrom im Gehäuseinnenraum an der Temperierelementaufnahmeeinheit entlang und durch diese hindurchgeführt. Folglich teilt sich der Strömungspfad hier auf. Hierdurch werden die Temperierelemente, welche von der Temperierelementaufnahmeeinheit aufgenommen sind, regeneriert und neu temperiert, beispielsweise gekühlt oder auch erwärmt.

Der Luftstrom erwärmt sich hierbei und strömt auf der anderen Seite der Temperierelementaufnahmeeinheit wieder aus dieser heraus, Richtung Verdampfer. Dort wird der Luftstrom wieder neu temperiert und der Kreislauf beginnt erneut.

Folglich ist hier eine aktive, kontinuierliche Zirkulation des Temperierluftstroms innerhalb des Regenerationsmagazins ausgebildet. Der Temperierluftstrom ist aktiv geführt und zirkuliert dauerhaft im Regenerationsmagazin. Die aktive Führung wird vorteilhaft wenigstens durch Teile der Temperiereinheit, beispielsweise Verdampfer und Luftströmungsführungseinrichtung ausgebildet. Somit können auch die im Regenerationsmagazin angeordneten Temperierelemente aktiv temperiert, beispielsweise gekühlt oder erwärmt werden. Vorteilhaft sind die Temperierelemente derart ausgebildet, dass sie diesen Regenerationsvorgang im hier beschriebenen Regenerationsmagazin immer wieder durchlaufen können.

Weiterhin kann der Temperierluftstrom innerhalb des Gehäuses mittels der Temperiereinheit aktiv durch den Gehäuseinnenraum geblasen oder durch den Gehäuseinnenraum gesaugt werden. Hierdurch kann die Luftströmungsrichtung angepasst und verändert werden. Zudem wird eine kontinuierliche Zirkulation und auch Regeneration des Temperierluftstroms sichergestellt.

Somit können die Temperierelemente effektiv und schnell, beispielsweise in 2 Stunden oder weniger, regeneriert werden.

Als besonders vorteilhaft hat es sich erwiesen, wenn das gesamte Regenerationsmagazin von der Servereinheit überwacht wird. Zudem ist vorteilhaft, wenn die Servereinheit einzelne Bauteile des Regenerationsmagazin steuert, aktiviert und/oder regelt.

Bei einer weiteren vorteilhaften Ausführungsform weist
die dritte Einheit, welche als Wechseleinheit ausgebildet ist, wenigstens eine Greifeinheit, um eine Lager- und Transporteinheit oder einen Teil einer Lager- und Transporteinheit, insbesondere eine Gehäusekorpusverschlusseinheit, zu greifen und eine erste Verschiebeeinheit, um das Temperierelement eine erste Strecke in einer Positioniereinheit an der Lager- und Transporteinheit oder der Gehäusekorpusverschlusseinheit ein- oder herauszuschieben, auf.

Es wird daher eine Wechseleinheit für ein intelligentes Lagersystem zum Wechseln von Temperierelementen bei Lager- und Transporteinheiten vorgeschlagen mit einer Greifeinheit, um eine Lager- und Transporteinheit oder ein Teil der Lager- und Transporteinheit, insbesondere eine Gehäusekorpusverschlusseinheit, zu greifen und mit einer ersten Verschiebeeinheit, um das Temperierelement eine erste Strecke in eine Halterung für das Temperierelement an der Lager- und Transporteinheit oder Teil der Lager- und Transporteinheit ein- oder herauszuschieben.

In Ausführungsformen umfasst die Wechseleinheit eine zweiten Verschiebeeinheit, um das Temperierelement eine zweite Strecke in der Halterung, welche auch synonym für Positioniereinheit verstanden werden kann, für das Temperierelement an der Lager- und Transporteinheit oder einem Teil der Lager- und Transporteinheit ein- oder herauszuschieben.

Wenigstens ein Regenerationsmagazin, welches auch als Vorratsbehälter verstanden werden kann, kann mit Plätzen für die Temperierelemente ausgestattet sein und ein oder mehrere Temperierelemente enthalten. Aus dem Regenerationsmagazin können die Temperierelemente mit der Wechseleinheit entnommen werden und mit der Wechseleinheit in die Halterung an der Lager- und Transporteinheit oder des Lager- und Transporteinheitteils eingeschoben werden. Aus der Halterung der Lager- und Transporteinheit oder des Lager- und Transporteinheitteils können die Temperierelemente mit der Wechseleinheit in das Regenerationsmagazin bewegt werden. Die Überwachung sowie Steuerung und Regelung der Wechseleinheit wird vorteilhaft von der Servereinheit durchgeführt. Diese steht mit der Wechseleinheit in entsprechender Daten- oder Kommunikationsverbindung.

Um das Temperierelement zu wechseln, kann es dann notwendig sein die Lager- und Transporteinheit zu öffnen. Das Temperierelement kann aber auch am Lager- und Transporteinheitäußeren angebracht sein.

Eine Greifeinheit kann die Lager- und Transporteinheit oder das Lager- und Transporteinheitteil für eine stabile Positionierung greifen. Mit einer Greifeinheit kann auch eine Gehäusekorpusverschlusseinheit angehoben werden oder ein Lager- und Transporteinheit kann gegenüber der gegriffenen Gehäusekorpusverschlusseinheit abgesenkt werden, sodass die Innenseite der Gehäusekorpusverschlusseinheit zugänglich ist.

Mit den Verschiebeeinheiten kann das Temperierelement aus oder in eine Halterung ein- oder herausgeschoben werden. Um in einem modularen Lagersystem kompakt eingesetzt werden zu können, ist es hilfreich, wenn die Wechseleinheit so gestaltet ist, dass innerhalb der modularen Struktur des Lagersystems positioniert werden kann, hierfür kann es vorteilhaft sein zwei Verschiebeeinheiten vorzusehen, die beide das Temperierelement jeweils um eine Teilstrecke in die Halterung hinein oder heraus schieben. Die erste Strecke und die zweite Strecke können sich hierbei addieren, sodass das Temperierelement vollständig in die Halterung eingeschoben oder aus der Halterung herausgeschoben werden kann.

Mit zwei Verschiebeeinheiten wird ein kompaktes Baumaß für die Wechseleinheit ermöglicht, bei dem auch Temperierelemente gewechselt werden können, deren Länge über 50 %, insbesondere über 60 % der Innenlänge der Lager- und Transporteinheit ist. Die horizontale Ausdehnung der Wechseleinheit liegt dabei innerhalb der Größe der Fläche der Lager- und Transporteinheit oder überschreitet die Lager- und Transporteinheitfläche nur um maximal 20 %, insbesondere nur um maximal 10 % in jede Richtung.

In Ausführungsformen ist die Greifeinheit mit Greifhaken ausgestattet, die in Aussparungen an der Lager- und Transporteinheit oder Lager- und Transporteinheitteil eingreifen können. Die Haken können L-fömig ausgestaltet sein, um sie in Aussparungen an der Lager- und Transporteinheit oder Gehäusekorpusverschlusseinheit einzuführen und durch Verschieben der Greifhaken, insbesondere Zusammenschieben, einen Hinterschnitt zu erzeugen. Hierdurch kann eine stabile Positionierung der Lager- und Transporteinheit oder Lager- und Transporteinheitteil für das Ein- oder Herausschieben des Temperierelements erreicht werden. Alternativ kann die Greifeinheit die Lager- und Transporteinheit oder Gehäusekorpusverschlusseinheit auch mit einem oder mehreren Elektromagneten oder mit einem oder mehreren Vakuumgreifern greifen.

In Ausführungsformen umfasst die erste Verschiebeeinheit und/oder die zweite Verschiebeeinheit einen Schwenkarm und eine Linearverschiebeeinheit. Der Schwenkarm kann während des Greifens mit der Greifeinheit aus dem Greifbereich geschwenkt sein und im nach unten zeigen, sodass der Schwenkarm an einer Lager- und Transporteinheit außen vorbei geführt werden kann. Nach einem Anheben der Gehäusekorpusverschlusseinheit oder einem Absenken der Lager- und Transporteinheit gegenüber der Gehäusekorpusverschlusseinheit kann der Schwenkarm dann an die Innenseite der Gehäusekorpusverschlusseinheit geschwenkt werden. Mit einer Linearverschiebeeinheit kann die erste und/oder die zweite Verschiebeeinheit dann das Temperierelement in oder aus der Positioniereinheit verschieben.

In Ausführungsformen kann die Linearverschiebeeinheit mit einem Spindelantrieb oder einem Zahnstangenantrieb ausgeführt sein.

In Ausführungsformen weist die erste Verschiebeeinheit und/oder die zweite Verschiebeeinheit einen Magnetgreifer auf, insbesondere einen flexibel gelagerten Magnetgreifer, der insbesondere am Schwenkarm angeordnet ist. Alternativ kann ein Vakuumgreifer oder ein mechanischer Greifer am Schwenkarm angeordnet sein.

Durch einen Magnetgreifer kann ein Schwenkarm das Temperierelement in Zugrichtung verschieben. Um Toleranzen in der Position des Temperierelements auszugleichen, kann der Magnetgreifer flexibel gelagert sein, sodass z.B. eine Drehbewegung des Magnetgreifers möglich ist. Der Magnetgreifer kann als Permanentmagnet oder als Elektromagnet ausgeführt sein.

Weiterhin wird eine Wechselstation vorgeschlagen, wobei die Wechselstation eine, insbesondere die beschriebene, Wechseleinheit und eine Vertikaltransporteinheit für die Wechseleinheit umfasst.

Soll ein Temperierelement der Lager- und Transporteinheit gewechselt werden, so kann die Gehäusekorpusverschlusseinheit gegriffen und angehoben oder der Lager- und Transporteinheit unter der Gehäusekorpusverschlusseinheit abgesenkt werden. Für das Anheben der Gehäusekorpusverschlusseinheit kann die Wechseleinheit mit einer Vertikaltransporteinheit vertikal angehoben werden.

In Ausführungsformen hat die Vertikaltransporteinheit der Wechselstation eine bewegliche Fördereinheit, eine Antriebseinheit zum Heben und Senken der Fördereinheit und vier Vertikalträger, an denen die Antriebseinheit oberhalb der Fördereinheit angeordnet ist und die Wechseleinheit ist an der Fördereinheit angeordnet.

Bei einer weiteren vorteilhaften Ausführungsform des Lagersystems kann dieses mindestens zwei horizontale Roboterebenen aufweisen, wobei die Roboterebenen jeweils durch mindestens drei Bodenplatten gebildet werden, mindestens acht Vertikalträger, die senkrecht zu den Roboterebenen stehen und die Roboterebenen tragen, mindestens einen Roboter, der sich auf den Roboterebenen bewegen kann, und wenigstens eine Wechseleinheit.

In dieser Ausführungsform des Lagersystems kann die Wechseleinheit Teil einer Wechselstation sein. Die Wechseleinheit kann so ausgeführt sein, dass ihre Fläche nicht größer ist als die Fläche der Bodenplatten des Lagersystems. Dadurch kann die Wechselstation mit der Wechseleinheit im Lagersystem einfach positioniert werden und auch nachgerüstet werden.

In Ausführungsformen umfasst das Lagersystem mindestens einen Lager- und Transporteinheitträger, der durch den mindestens einen Roboter auf den Roboterebenen bewegt werden kann, wobei der Lager- und Transporteinheitträger Füße zum Abstellen des Lager- und Transporteinheitträgers auf den Bodenplatten aufweist, deren Höhe größer als die Höhe des Roboters ist, wobei der Lager- und Transporteinheitträger und der Roboter so geformt sind, dass der Roboter unter den Lager- und Transporteinheitträger fahren kann und unter dem Lager- und Transporteinheitträger drehen kann, wobei der Roboter eine Hebeeinheit aufweist, mit der der Roboter den Lager- und Transporteinheitträger anheben und durch Verfahren des Roboters in den Roboterebenen versetzten kann.

In Ausführungsformen kann das Lagersystem auch eine Befülleinheit umfassen, insbesondere eine Befülleinheit zur Befüllung von Lager- und Transporteinheiten mit Gasen wie z.B. Kohlendioxid oder Bananenreifegas (5 % Ethen und 95 % Stickstoff). Eine solche Befülleinheit kann z.B. ein Lager- und Transporteinheit mit abgenommenen oder angehobenen Lager- und Gehäusekorpusverschlusseinheit mit Gas befüllen, z.B. zur Haltbarmachung oder Reifung von Lebensmitteln. Insbesondere Gase, die schwerer als Luft sind, können so einfach einer Lager- und Transporteinheit zugeführt werden.

Es wird zudem ein Verfahren zum Wechseln von Temperierelementen in einem Lagersystem vorgeschlagen, insbesondere mit der beschriebenen Wechseleinheit und/oder der beschriebenen Wechselstation, umfassend die Schritte: Greifen einer Lager- und Transporteinheit oder Lager- und Transporteinheitteil, insbesondere einer Gehäusekorpusverschlusseinheit und Verschieben des Temperierelements, insbesondere mit einer ersten Verschiebeeinheit, um eine erste Strecke.

In Ausführungsformen umfasst das Verfahren zum Wechseln von Temperierelementen den weiteren Schritt des Verschiebens des Temperierelements, insbesondere mit einer zweiten Verschiebeinheit, um eine zweite Strecke.

Im Schritt des Greifens einer Lager- und Transporteinheit oder Lager- und Transporteinheitteil, insbesondere mit einer Greifeinheit, wird dieser oder dieses stabil positioniert, insbesondere relativ zur ersten Verschiebeeinheit und/oder zur zweiten Verschiebeeinheit. Das Greifen eines Lager- und Transporteinheitteils kann auch zum Abheben einer Gehäusekorpusverschlusseinheit von der Lager- und Transporteinheit dienen.

Beim Verschieben um eine erste Strecke kann das Temperierelement teilweise in eine Halterung hinein oder aus der Halterung heraus geschoben werden. Beim Verschieben um eine zweite Strecke kann das Temperierelement vollständig in die Halterung hinein oder aus der Halterung heraus geschoben werden. Ein zweistufiger Prozess des linearen Verschiebens ermöglicht eine kompakte Bauform der Wechseleinheit.

In Ausführungsformen umfasst das Verfahren zum Wechseln von Temperierelementen die Schritte Einschwenken eines Schwenkarms der ersten Verschiebeeinheit, insbesondere um mehr als 60°, insbesondere mehr als 80°, und Einschwenken eines Schwenkarms der zweiten Verschiebeeinheit, insbesondere um mehr als 60°, insbesondere mehr als 80°.

In Ausführungsformen umfasst das Verfahren zum Wechseln von Temperierelementen weiterhin einen Schritt des Anhebens oder Absenkens der Wechseleinheit, insbesondere mit gegriffenem Lager- und Transporteinheitteil, insbesondere mit gegriffener Gehäusekorpusverschlusseinheit. Der Schritt des Anhebens oder Absenkens kann mit der Vertikaltransporteinheit ausgeführt werden.

Weiterhin wird ein Verfahren zum Abnehmen einer Gehäusekorpusverschlusseinheit von einer Lager- und Transporteinheit in einem Lagersystem vorgeschlagen, umfassend ein Greifen der Gehäusekorpusverschlusseinheit und ein Anheben der Gehäusekorpusverschlusseinheit und/oder Absenken der Lager- und Transporteinheit. Ebenso wird ein Verfahren zum Auflegen einer Gehäusekorpusverschlusseinheit auf eine Lager- und Transporteinheit eines Lagersystems vorgeschlagen, umfassend die Schritte Absenken der Gehäusekorpusverschlusseinheit und/oder Anheben der Lager- und Transporteinheit und Freigeben der Gehäusekorpusverschlusseinheit. Die Verfahren können insbesondere mit der beschriebenen Wechseleinheit und der beschriebenen Wechselstation unter Weglassen oder Entfernen der Verschiebeeinheiten ausgeführt werden und/oder Merkmale des Verfahrens zum Wechsel von Temperierelementen umfassen.

Bei diesen vorteilhaften Ausführungsformen steht die Servereinheit wenigstens in Kommunikation mit der Wechseleinheit und/oder der Wechselstation. Hierdurch können diese von der Servereinheit überwacht und gemäß vorgegebenen oder auch erlernbaren Routinen angesteuert und aktiviert werden.

Bei einer weiteren vorteilhaften Ausführungsform weist
die vierte Einheit, welche als Vertikaltransporteinheit ausgebildet ist, wenigstens eine bewegliche Fördereinheit, eine Antriebseinheit zum Heben und Senken der Fördereinheit, vier Vertikalträger an denen die Antriebseinheit oberhalb der Fördereinheit angeordnet ist, wobei die Antriebseinheit die Fördereinheit durch vier Tragseile heben und senken kann, wobei die vier Tragseile jeweils an der Fördereinheit befestigt sind, wobei die vier Tragseile zum Heben oder Senken auf Rollen der Antriebseinheit auf oder abgewickelt werden und wobei die Fördereinheit an einem oder mehreren der Vertikalträger geführt ist, auf.

Es wird daher eine Vertikaltransporteinheit als vierte physischen Einheit vorgeschlagen. Diese weist wenigstens eine bewegliche Fördereinheit, eine Antriebseinheit zum Heben und Senken der Fördereinheit und vier Vertikalträger an denen die Antriebseinheit oberhalb der Fördereinheit angeordnet ist, auf. Die Antriebseinheit kann die Fördereinheit durch vier Tragseile, heben und senken. Der Begriff Tragseil umfasst hierbei Seile aus Natur- oder Kunstfasern, Drahtseile, Drähte, Riemen, Bänder, Gurte oder Ketten. Die Tragseile weisen insbesondere eine dem Gewicht der vertikal bewegten Lasten angepasste Zugfestigkeit auf und sind insbesondere aufwickelbar. Insbesondere werden Drahtseile verwendet. Die vier Tragseile sind jeweils an der Fördereinheit befestigt. Die vier Tragseile werden zum Heben oder Senken auf Rollen der Antriebseinheit auf- oder abgewickelt. Die Fördereinheit ist an einem oder mehreren der Vertikalträger geführt.

Die Fördereinheit kann in Ausführungsformen eine Platte umfassen, z.B. eine Bodenplatte wie sie im Lagersystems verwendet wird oder eine verkleinerte Bodenplatte, die umlaufend in der Horizontalebene um 1 bis 5 mm gegenüber der Bodenplatte des Lagersystems verkleinert ist und insbesondere eine bearbeitete Bodenplatte des Lagersystems ist. Wird eine Bodenplatte des Lagersystems verwendet, so erlaubt dies nur sehr geringe Toleranzen in horizontaler Richtung. Wird eine Bodenplatte des Lagersystems verwendet, die, z.B. mittels Schleifen, Hobeln oder Sägen, umlaufend um 1 bis 5 mm verkleinert wurde, so sind in horizontaler Richtung größere Toleranzen des Lagersystems möglich bei denen die verkleinerte Bodenplatte in Vertikalrichtung zwischen den Vertikalträgern bewegt werden kann. Wird eine Bodenplatte aus dem modularen Lagersystem in der Fördereinheit verwendet, so kann die Teilevielfalt reduziert werden, auch wenn es sich um eine bearbeitete Bodenplatte handelt. Eine Bodenplatte aus dem modularen Lagersystem zeigt auch Merkmale, die für das Bewegen auf der horizontalen Ebene des modularen Lagersystems notwendig sind, sodass eine Bewegung, z.B. eines Roboters, Transportbehälters oder Transportfahrzeugs, in die Vertikaltransporteinheit erleichtert wird.

Die Antriebseinheit kann einen Elektromotor umfassen, der, insbesondere über ein Getriebe, vier Rollen antreibt, wobei die vier Rollen auf einer, zwei oder vier Wellen angebracht sein können. Auf jeder der vier Rollen kann ein Tragseil auf- und abgewickelt werden, wobei jedes der vier Tragseile jeweils an der Fördereinheit befestigt ist. Durch eine Halterung der Fördereinheit mit Hilfe von Tragseilen mit der Antriebseinheit oberhalb der Fördereinheit kann die Fördereinheit auf einer Höhe gehalten werden. Durch gleichmäßiges Auf- oder Abwickeln der vier Tragseile auf den vier Rollen kann die Fördereinheit auf oder ab bewegt werden. In Ausführungsformen können die vier Rollen durch einen Roboter des Lagersystems angetrieben werden. Z.B. können über eine Reibkupplung ein oder mehrere angetriebene Räder des Roboters, insbesondere über das Getriebe, die vier Rollen antreiben. Der Roboter kann hierfür an der Antriebseinheit befestigt sein. Der Roboter kann auch Schnittstellen an einem oder mehreren Rädern umfassen, die einer Ankopplung des Getriebes an den Roboter ermöglichen. Wird ein Roboter des modularen Lagersystems in der Antriebseinheit verwendet, so kann dieser leicht ausgetauscht werden.

Die Antriebseinheit kann an vier Vertikalträgern angeordnet sein, insbesondere an vier Vertikalträgern die auch Teil des modularen Lagersystems sind. Wird die Antriebseinheit an vier Vertikalträgern die auch Teil des modularen Lagersystems sind angeordnet, z.B. an deren oberem Ende befestigt, so sind keine oder weniger zusätzlichen Stützen für die Lastaufnahme durch die Antriebseinheit notwendig.

Sind die vier Tragseile jeweils am äußeren Bereich der Bodenplatte befestigt, wie sie im Lagersystem verwendet wird und/oder an einer verkleinerten Bodenplatte, so kann aus allen vier Richtungen in der Ebene zwischen den Vertikalträgern der Roboter, der Transportbehälter oder das Transportfahrzeug zwischen den Tragseilen hindurchbewegt werden. Insbesondere verlaufen die Tragseile zumindest teilweise in Richtung der Vertikalträger. Bei einer verkleinerten Bodenplatte kann die Größe so gewählt werden, dass die Lücken zwischen der verkleinerten Bodenplatte der Fördereinheit und den Bodenplatten des modularen Lagersystems so klein sind, dass Roboter auch mit Behälterträgern und Behältern und/oder Produkten den Spalt überqueren können. Insbesondere kann der Spalt kleiner 5 mm oder kleiner 3 mm gewählt werden.

Gemäß einer Ausführungsform der Vertikaltransporteinheit wird die Fördereinheit an einem oder mehreren, insbesondere an allen vieren, der Vertikalträger durch Rollen und/oder Gleitlager geführt. Hierdurch kann auch eine stabile horizontale Positionierung der mit der Fördereinheit verbundenen Wechseleinheit erreicht werden.

Die Führung der Fördereinheit kann ein horizontales Pendeln der Fördereinheit verhindern oder reduzieren, wenn die Fördereinheit nur durch Tragseile in der Vertikalrichtung beschränkt ist. Bevorzugt wird die Fördereinheit an allen vier Vertikalträgern durch jeweils zwei Räder geführt, sodass die horizontale Position der Fördereinheit durch die Führungen festgelegt ist. Die jeweils zwei Räder können in Vertikalrichtung versetzt an der Fördereinheit angebracht sein.

In Ausführungsformen umfasst die Vertikaltransporteinheit einen oder mehrere Endkontaktschalter zur Höhenkalibrierung, insbesondere bei vollständig gesenkter und/oder vollständig angehobener Fördereinheit. Insbesondere umfasst die Vertikaltransporteinheit einen Endkontaktschalter angeordnet an der Antriebseinheit, der eine Position der angehobenen Fördereinheit melden kann.

Ein oder zwei Endkontaktschalter können dabei helfen die Steuerung für die genaue Höhe der Fördereinheit zu ermöglichen. Z.B. einem Endschalter, der anzeigt, dass die Fördereinheit vollständig angehoben ist. Über eine Messung der Absenkung kann dann die Position festgestellt werden. Ein zweiter Endkontaktschalter, der anzeigt, dass die Fördereinheit vollständig abgesenkt ist, kann auch Informationen über die Differenz zwischen höchster und niedrigster Position der Fördereinheit geben. Zudem kann über die Endkontaktschalter verhindert werden, dass die Fördereinheit zu hoch gezogen wird oder die Tragseile soweit abgewickelt werden, dass über ein Weiterdrehen der Rollen ein erneutes Aufwickeln erzeugt wird und eine undefinierte Höhe der Fördereinheit entsteht.

In Ausführungsformen umfasst die Vertikaltransporteinheit eine Fördereinheit mit mindestens zwei Transportebenen. Die beiden Transportebenen können dabei jeweils eine bearbeitete und/oder verkleinerte Bodenplatte umfassen. Die beiden Transportebenen können starr miteinander verbunden sein, z.B. mit Metallstäben oder Gewindestangen. Die beiden Transportebenen können einen Abstand aufweisen wie zwei Roboterebenen des Lagersystems, für das die Vertikaltransporteinheit gedacht ist. Die in vertikaler Richtung obere Transportebene kann mit den Tragseilen verbunden sein. An die in vertikaler Richtung untere Transporteben kann die Wechseleinheit angebracht sein.

In Ausführungsformen umfasst die Vertikaltransporteinheit einen Sensor, insbesondere einen Seilzugsensor, zur Messung der vertikalen Position der Fördereinheit.

Durch eine Messung der vertikalen Position der Fördereinheit mit einem oder mehreren, insbesondere vom Elektromotor der Antriebseinheit unabhängigen, Sensoren kann eine gewünschte oder benötigte Genauigkeit bei der Messung der vertikalen Position der Fördereinheit erreicht werden. Diese kann notwendig sein, damit die Fördereinheit z.B. so positioniert werden kann, dass ein Roboter aus dem modularen Lagersystem auf die Platte der Fördereinheit ohne oder mit einem geringen Vertikalversatz fahren kann. Der Vertikalversatz soll hierbei kleiner 3 mm, insbesondere kleiner 1 mm sein. Hierbei können Laserabstandsmesser eingesetzt werden; mit Hilfe von Fotodioden kann mit einer Skala an den Vertikalträgern eine Höhe bestimmt werden; es können Wicklungen an einer oder mehrerer Rollen oder Drehungen des Elektromotors gemessen werden, z.B. mit Hilfe eines Hall-Sensors.

In einer Ausführungsform wird zur Messung der vertikalen Position der Fördereinheit ein Seilzugsensor eingesetzt, bei dem, z.B. mit einem Potentiometer für analoge Signale oder einem Encoder für digitale Signale, das Auf- oder Abwickeln eines Fadens gemessen wird. Hierzu wird z.B. ein Seilzugwegaufnehmer an der Antriebseinheit angeordnet und ein Faden verläuft vom Seilzugwegaufnehmer zur Fördereinheit zumindest teilweise in der vertikalen Richtung, in der sich die Fördereinheit hebt oder senkt. Hebt oder senkt sich die Fördereinheit, so wird mit dem Seilzugwegaufnehmer die Wegstrecke, die die Fördereinheit zurücklegt, gemessen. Seilzugsensoren sind insbesondere auch als Seilzugwegaufnehmer oder Seillängengeber bekannt.

In einer Ausführungsform ist die Antriebseinheit dazu ausgebildet die Tragseile mit Rollen, insbesondere Scheibenspulen, übereinander, insbesondere in einer Ebene, aufzuwickeln. Häufig werden Bei Aufzugsystemen die Wicklungen gezielt nebeneinander auf einer Rolle gesetzt. Bei dieser Konfiguration ändert sich bei gleichbleibender Winkelgeschwindigkeit die Lineargeschwindigkeit des Tragseils nicht. Wird, z.B. aus Platzgründen, die Wicklung auf der Rolle enger ausgeführt, so werden spätere Wicklungen des Tragseils auf den ursprünglichen Wicklungen aufgewickelt, hierdurch kann sich bei gleichbleibender Winkelgeschwindigkeit die Lineargeschwindigkeit des Tragseils ändern und die aufgewickelte Seillänge kann sich je bei einer gleichen Anzahl von Wicklungen je nachdem, wie die Wicklungen übereinanderliegen unterscheiden. Werden die Tragseile gezielt übereinander aufgewickelt, sodass nach einer 360° Umdrehung der Rolle das Tragseil auf dem bereits aufgewickelten weitergewickelt wird, so ändert sich zwar bei gleichbleibender Winkelgeschwindigkeit die Lineargeschwindigkeit des Tragseils, werden jedoch die gleichen Seil-Rollen-Kombinationen verwendet, so ist diese Änderung bei allen Rollen gleich. Der Effekt durch zufälliges Aufrollen, bei dem Wicklungen neben- oder übereinander liegen können wird hierdurch vermieden.

In einer Ausführungsform werden die Tragseile mit Scheibenspulen auf- oder abgewickelt, wobei die Scheibenspulen Scheiben umfassen, die im Bereich der Aufwicklung und ihres geringsten Abstands als Abstand maximal das 1,3 fache, bevorzugt maximal das 1,1 fache der Dicke des Tragseils aufweisen. Bei einem Seil in der Form eines Riemens, Bandes, Gurtes oder einer Kette entspricht die Breite des Riemens, Bandes, Gurtes oder der Kette der Dicke des Seiles. Ist der Abstand der Scheiben der Scheibenspulen hinreichend klein gegenüber der Dicke des aufgewickelten Tragseils bzw. der Breite bei einem Tragseil in Form eines Riemens, Bandes, Gurtes oder einer Kette, so wird übereinander aufgewickelt und es können nicht mehrere Wicklungen nebeneinander entstehen.

Vorgeschlagen wird ein Verfahren zum Vertikaltransport in einem modularen Lagersystem, insbesondere für die beschriebene Vertikaltransporteinheit, umfassend die Schritte: Auf- oder Abwickeln von vier Tragseilen mit einer Antriebseinheit zum Heben oder Senken einer Fördereinheit, wobei die vier Tragseile durch jeweils eine Rolle auf- oder abwickelt werden und Messen der Position einer beweglichen Fördereinheit mit einem Sensor, insbesondere einem Seilzugsensor. Durch ein solches Verfahren kann in einem Lagersystem eine kostengünstige und einfach zu realisierende Möglichkeit zum vertikalen Verlagern von Gütern zwischen mehreren Ebenen eines Lagersystems geschaffen werden. Durch das Verfahren kann auch eine Wechseleinheit vertikal positioniert werden.

In einer Ausführungsform werden die vier Tragseile jeweils übereinander, insbesondere in jeweils einer Ebene, auf- oder abwickelt.

Bei einer weiteren vorteilhaften Ausführungsform des Lagersystems kann dieses mindestens zwei horizontalen Roboterebenen, wobei die Roboterebenen jeweils durch mindestens drei Bodenplatten gebildet werden, mindestens acht Vertikalträgern, die senkrecht zu den Roboterebenen stehen und die Roboterebenen tragen, mindestens einem Roboter, der sich auf den Roboterebenen bewegen kann und der beschriebenen Vertikaltransporteinheit insbesondere mit ihren verschiedenen Ausführungsformen, aufweisen. Insbesondere kann der Roboter durch die Vertikaltransporteinheit zwischen den Roboterebenen bewegt werden. Insbesondere kann der Roboter zusammen mit einem Lager- und Transporteinheitträger, der Roboter mit dem Lager- und Transporteinheitträger und einer Lager- und Transporteinheit und/oder Gütern vertikal zwischen den Roboterebenen bewegt werden.

Bei einer weiteren vorteilhaften Ausführungsform des Lagersystems kann dieses mehrere Vertikaltransporteinheiten umfassen. Eine der mehreren Vertikaltransporteinheiten kann hierbei alle Roboterebenen des Lagersystems verbinden oder nur einen Teil der Roboterebenen. Die Vertikaltransporteinheiten können nebeneinander oder beabstandet im Lagersystem angeordnet sein. Eine der Vertikaltransporteinheiten kann in der Wechselstation zum vertikalen Positionieren der Wechseleinheit dienen, auch mehrere Wechselstationen mit Vertikaltransporteinheit sind möglich.

Bei einer weiteren vorteilhaften Ausführungsform des Lagersystems kann dieses mindestens einen Lager- und Transporteinheitträger, der durch den Roboter bewegt werden kann, aufweisen. Der Lager- und Transporteinheitträger weist Füße zum Abstellen der Lager- und Transporteinheitträger auf den Bodenplatten auf, deren Höhe größer als die Höhe des Roboters ist. Der Lager- und Transporteinheitträger und der Roboter sind so geformt, dass der Roboter unter den Lager- und Transporteinheitträger fahren kann und unter dem Lager- und Transporteinheit-trägern drehen kann. Der Roboter weist eine Hebevorrichtung auf, mit denen die Roboter einen Lager- und Transporteinheitträger anheben und durch Verfahren der Roboter in der Roboterebene versetzten kann. Insbesondere kann die Vertikaltransporteinheit den Roboter und/oder die Lager- und Transporteinheit zwischen den Roboterebenen bewegen.

Die Bodenplatten sind gemäß einer Ausführungsformen im Wesentlichen rechteckig. Im Wesentlichen rechteckig kann ein Rechteck sein oder z.B. ein Rechteck, das Aussparungen an den vier Ecken hat und/oder dessen Ecken abgerundet sind. Durch Aussparungen können die Bodenplatten an die Vertikalträger angepasst werden. Für die Fördereinheit der Vertikaltransporteinheit können Bodenplatten wie beschrieben bearbeitet werden und z.B. verkleinert sein.

Für verschiedene Anwendungsgebiete des Lagersystems, z.B. im Bereich des Quick-Commerce, haben die Bodenplatten eine Größe von zwischen 300 mm x 300 mm und 1000 mm x 1500 mm.

Gemäß einer Ausführungsform haben die Bodenplatten eine Größe von zwischen 600 mm x 400 mm und etwa 800 x 600 mm. Platten in dieser Größe können leicht transportiert und auch durch nur eine Person leicht verbaut werden.

Gemäß einer Ausführungsform haben Bodenplatten im Lagersystem eine Tragfähigkeit von mindestens 40 kg oder mindestens 60 kg.

Gemäß einer Ausführungsform sind Bodenplatten aus Metall gefertigt, z.B. 4 bis 8 mm dicke Aluminiumbleche oder aus Stahlblechen.

Gemäß einer Ausführungsform sind Bodenplatten aus Holz oder Holzwerkstoff gefertigt. Z.B. sind Bodenplatten aus, insbesondere beschichteter, MDF-Platte, aus Sperrholz oder Multiplexplatte gefertigt. Gemäß einer Ausführungsform liegt die Dicke der Bodenplatten aus Holz oder Holzwerkstoff zwischen 15 und 30 mm. Holz und Holzwerk-stoffe können Vorteile bei der Dämpfung von Schall, der im Lagersystem erzeugt wird, bringen.

Gemäß einer Ausführungsform sind die Bodenplatten aus Kunststoff oder Verbund-werkstoffen gefertigt. High Pressure Laminate oder auch Kunststoff-Metall-Verbünde können verwendet werden.

Das hier beschriebene Lagersystem weist mindestens zwei Roboterebenen auf. Gemäß einer Ausführungsform weist das Lagersystem zwischen drei und zehn Roboterebenen auf, wobei mindestens zwei Ebenen durch die Vertikaltransporteinheit verbunden sind, sodass Roboter und/oder Lager- und Transporteinheit zwischen den Ebenen transportiert werden können.

Bei einer weiteren vorteilhaften Ausführungsform des Lagersystems liegen die Abstände zwischen den Roboterebenen zwischen 300 und 1000 mm, insbesondere liegen die Abstände zwischen den Roboterebenen zwischen 350 und 700 mm.

Je nach Größe des Lagersystems und der Häufigkeit des Umschlags von Waren im Lagersystem können ein oder mehrere Roboter auf jeder Roboterebene verwendet werden. Gemäß einer Ausführungsform weist das Lagersystem zwei oder drei Roboter auf jeder Roboterebene auf. Durch die Vertikaltransporteinheit kann das Lagersystem auch so gestaltet sein, dass ein Roboter auf mehreren Ebenen eingesetzt werden kann. Hierdurch ist es auch möglich, dass sich, zumindest zeitweise, auf einer Roboterebene kein Roboter befindet.

Bei einer weiteren vorteilhaften Ausführungsform des Lagersystems kann ein Roboter einen anderen Roboter auch verschieben. Ein defekter Roboter kann so an eine geschickte Position im Lagersystem, z.B. auch in die Vertikaltransporteinheit, befördert werden.

Bei einer weiteren vorteilhaften Ausführungsform des Lagersystems wiegen die Roboter weniger als 20 kg, insbesondere weniger als 15 kg.

Bei einer weiteren vorteilhaften Ausführungsform des Lagersystems kann dieses mindestens drei Bodenplatten auf einer Roboterebene auf sowie mindestens acht Vertikalträger, die senkrecht zu den Roboterebenen stehen und die Roboterebenen tragen. Das Lagersystem kann in der horizontalen Ebene erweiterbar sein durch Ergänzung weiterer Bodenplatten und weiterer Vertikalträger.

Bei einer weiteren vorteilhaften Ausführungsform des Lagersystems kann dieses zwischen 50 und 400 Bodenplatten auf einer Roboterebene und zwischen 64 und 450 Vertikalträger aufweisen. Es kann auch mehrere Vertikaltransporteinheiten umfassen.

Bei einer weiteren vorteilhaften Ausführungsform des Lagersystems kann die Grundfläche der Lager- und Transporteinheitträger zwischen der halben Grundfläche der Bodenplatte und der Fläche der Bodenplatte liegen, wobei Größe und Form der Lager- und Transporteinheitträger so gewählt sind, dass die Lager- und Transporteinheitträger zwischen den Vertikalträgern und den Tragseilen der Vertikaltransporteinheit hindurchbewegt werden können.

Bei einer weiteren vorteilhaften Ausführungsform des Lagersystems befindet sich im Lagersystem auf oder über einer Bodenplatte maximal ein Lager- und Transporteinheitträger. Bei dieser Ausführungsform muss die Anzahl der Lager- und Transporteinheitträger geringer als die Anzahl der Bodenplatten sein, damit ein Umlagern der Lager- und Transporteinheitträger im Lagersystem möglich ist.

Gemäß einer Ausführungsform sind die Lager- und Transporteinheitträger aus Kunststoff, z.B. im Spritzgussverfahren, gefertigt.

Bei einer weiteren vorteilhaften Ausführungsform des Lagersystems umfassen die Vertikalträger mehrere, miteinander in eine zu den Roboterebenen senkrechten Richtung verbundenen, Pfeiler. Gemäß einer Ausführungsform werden die Pfeiler ineinandergesteckt und/oder miteinander verschraubt. Gemäß einer Ausführungsform entspricht die Höhe der Pfeiler dem Abstand der Roboterebenen.

Es kann sich bei den Vertikalträgern und Pfeilern um Voll- oder Hohlprofile handeln. Z.B. können Vierkantrohre verwendet werden, deren Ecken auch abgerundet sein können. Das Profil kann um jeweils 90° entlang seiner Längsachse gedreht eingebaut werden und in einer Ausführungsform weisen die Vertikalträger und die Pfeiler einen im Wesentlichen quadratischen Querschnitt auf.

Bei einer weiteren vorteilhaften Ausführungsform des Lagersystems kann dieses durch Ergänzen weiterer Pfeiler und Einfügen einer oder mehrerer weiterer Roboterebenen mit Bodenplatten in die Höhe erweiterbar ausgebildet sein.

Bei einer weiteren vorteilhaften Ausführungsform des Lagersystems sind jeweils zwei Pfeiler eines Vertikalträgers jeweils von allen vier Seiten mit je einem Winkelprofil zusammen verschraubt. Je vier Vertikalträger sind durch eine Bodenplatte auf jeder Roboterebene verbunden, wobei die Bodenplatte an Winkelprofilen, die an den vier Vertikalträgern verschraubt sind, verschraubt ist. Im Bereich der Vertikaltransporteinheit können die Pfeiler so verschraubt sein, dass die Fördereinheit, insbesondere umfassend eine Bodenplatte, vertikal zwischen den Roboterebenen angehoben und abgesenkt werden kann, z.B. mit flachen Profilen anstelle der Winkelprofile zum Anschrauben der Bodenplatten.

Bei einer weiteren vorteilhaften Ausführungsform des Lagersystems weisen die, insbesondere im Wesentlichen rechteckigen, Bodenplatten Linien in Längs- und/oder Querrichtung der Bodenplatten zur Führung der Roboter durch das Lagersystem auf. Insbesondere weist auch die Fördereinheit eine solche Bodenplatte auf.

Bei einer weiteren vorteilhaften Ausführungsform des Lagersystems weisen die im Wesentlichen rechteckigen Bodenplatten Linien entlang der Mittelachsen der Bodenplatten zur Führung der Roboter durch das Lagersystem auf. Insbesondere weist auch die Fördereinheit eine solche Platte mit Linien auf.

Bei einer weiteren vorteilhaften Ausführungsform des Lagersystems weisen die, insbesondere im Wesentlichen rechteckigen, Bodenplatten Markierungen zur Positionierung und insbesondere zur Zentrierung der Roboter auf einer Bodenplatte auf. Insbesondere weist auch die Fördereinheit eine solche Platte mit Markierungen auf.

Bei einer weiteren vorteilhaften Ausführungsform des Lagersystems weisen die Roboter optische Sensoren zur Erkennung der Linien und/oder der Markierungen auf, insbesondere Infrarot-Line-Arrays.

Bei einer weiteren vorteilhaften Ausführungsform des Lagersystems weisen die Bodenplatten RFID-Tags zur Bestimmung der absoluten Position und Ausrichtung eines Roboters im Lagersystem auf. Insbesondere weist auch die Fördereinheit eine solche Platte mit RFID-Tags auf.

Bei einer weiteren vorteilhaften Ausführungsform des Lagersystems können die Linien und Markierungen zur Positionierung auf die Bodenplatten farblich aufgebracht, eingefräst oder aufgeklebt sein. Insbesondere weist auch die Fördereinheit eine Platte mit solchen Linien und Markierungen auf, insbesondere eine verkleinerte und/oder bearbeitete Bodenplatte.

Bei einer weiteren vorteilhaften Ausführungsform des Lagersystems weisen die Bodenplatten RFID-Tags, insbesondere die im Wesentlichen rechteckigen Bodenplatten vier RFID-Tags, zur Bestimmung der absoluten Position und Ausrichtung eines Roboters im Lagersystem auf, wobei die vier RFID-Tags auf einem Kreis um die Mitte der Bodenplatte um jeweils 90° versetzt angebracht sind. Insbesondere weist auch die Fördereinheit eine Platte derart mit RFID-Tags ausgerüstet auf, insbesondere eine verkleinerte und/oder bearbeitete Bodenplatte.

Bei einer weiteren vorteilhaften Ausführungsform des Lagersystems weisen die Lager- und Transporteinheitträger Füße auf, die höher als die Höhe der Roboter sind. Die Lager- und Transporteinheitträger mit den Füßen und die Roboter sind so geformt, dass Roboter unter die Lager- und Transporteinheitträger fahren können und unter den Lager- und Transporteinheitträgern drehen können. Dies kann erreicht werden, indem jeder Querschnitt des Roboters senkrecht zur Roboterebene kleiner ist als jeder Querschnitt zwischen den Füßen des Lager- und Transporteinheitträgers senkrecht zur Roboterebene. Der Begriff Füße schließt hier verschiedene Arten von Abstützungen ein, mit denen der Lager- und Transporteinheitträger auf den Bodenplatten der Roboterebene abgestellt werden kann, sodass der Lager- und Transporteinheitträger von den Robotern unterfahren werden kann und auch ohne Roboter unter dem Lager- und Transporteinheitträger stabil auf den Bodenplatten der Roboterebene steht.

Die Roboter können Hebevorrichtungen aufweisen, mit denen die Roboter einen Lager- und Transporteinheitträger mit Lager- und Transporteinheiten und Waren anheben und in der Roboterebene versetzten können.

Durch die Kombination der Hebevorrichtung der Roboter mit den Füßen der Lager- und Transporteinheitträger können die Bodenplatten der Roboterebene gleichzeitig die Last der Lager- und Transporteinheitträger aufnehmen und es kann auf eine weitere Ebene bzw. auf Vorrichtungen, um die Last der Lager- und Transporteinheitträger auf dieser weiteren Ebene aufzunehmen, z.B. weitere Platten, Halterungen oder Schienen, verzichtet werden.

Die Roboter und insbesondere die Hebevorrichtung der Roboter muss so ausgelegt sein, dass sie in der Lage ist den Lager- und Transporteinheitträger, den Lager- und Transporteinheit und die möglicherweise in der Lager- und Transporteinheit befindlichen Waren anzuheben und zu verfahren.

Bei einer weiteren vorteilhaften Ausführungsform des Lagersystems weisen die Roboter mindestens ein Allseitenrad und/oder ein Mecanumrad auf. Bei Allseitenrädern, auch omnidirektionale Räder genannt, besteht die Lauffläche des Rades aus Rollen, deren Drehachsen im rechten Winkel zur Drehachse des Hauptrades liegen. Dies erlaubt ein reibungsarmes Verschieben des Rades auch in axialer Richtung. Das Mecanum-Rad ist ein Rad, das einem Fahrzeug omnidirektionale Fahrmanöver erlaubt, ohne mit einer mechanischen Lenkung ausgestattet zu sein. Im Gegensatz zum Allseitenrad stehen beim Mecanum-Rad die Rollen in einem Winkel zur Hauptachse.

Insbesondere weisen die Roboter zwei angetrieben Räder und zwei Allseitenräder auf. Die angetriebenen Räder können hierbei unabhängig voneinander angetrieben werden, z.B. auch gegeneinander, die Allseitenräder dienen als Abstützung. Die angetriebenen Räder können auf einer Achse angeordnet sein und ein Allseitenrad befindet sich jeweils vor und hinter dieser Achse, insbesondere auf der Mittelsenkrechten der Verbindung der beiden angetriebenen Räder. Ein Elektromotor des Roboters kann auch für die Antriebseinheit der Vertikaltransporteinheit genutzt werden. Z.B. kann über ein Rad und eine Reibkupplung oder eine Schnittstelle ein Roboter so an der Antriebseinheit angeordnet sein, dass der Elektromotor des Roboters, insbesondere über ein Getriebe, die Rollen der Antriebseinheit drehen kann.

Bei einer weiteren vorteilhaften Ausführungsform des Lagersystems wird oberhalb mindestens einer Roboterebene eine Trägerplattenebene durch Trägerplatten gebildet. Die Trägerplatten weisen entlang der zur Roboterebene senkrechten Projektion der Mittelachsen der im Wesentlichen rechteckigen Bodenplatten auf die Trägerplattenebene einen Abstand zueinander auf. Die Lager- und Transporteinheitträger liegen auf den Trägerplatten auf und können in der Trägerplattenebene verschoben werden. Roboter koppeln an die Lager- und Transporteinheitträger an, wobei die Koppelung, durch den Abstand zwischen den Trägerplatten hindurchgreift. Mit der Kopplung können Roboter die Lager- und Transporteinheitträger verschieben, ohne die Last der Lager- und Transporteinheitträger anzuheben.

Bei einer weiteren vorteilhaften Ausführungsform des Lagersystems kann dieses Balkone zur Entnahme oder Einlagerung von Waren, Lager- und Transporteinheiten, Lager- und Transporteinheitträgern und/oder Robotern umfassen. Balkone können realisiert werden, indem eine, insbesondere modifizierte, Bodenplatte übersteht und nach oben nicht bedeckt ist. Alternativ kann auch durch den Rücksprung um eine Bodenplatte von einer Roboterebene zur nächsten eine Möglichkeit geschaffen werden, von oben auf eine Ware, Lager- und Transporteinheiten, Lager- und Transporteinheitträger oder Roboter zuzugreifen.

Alternativ oder in Ergänzung zur Entnahme und Einlagerung von und auf Balkonen oder an Rücksprüngen kann die Entnahme und Einlagerung von Waren, Lager- und Transporteinheiten, Lager- und Transporteinheitträgern und/oder Robotern in äquivalenter Weise auch in horizontaler Richtung am Lagersystem vorgenommen werden.

Die für die vorgeschlagene Vorrichtungen beschriebenen Ausführungsformen und Merkmale gelten für die vorgeschlagenen Verfahren entsprechend.

Weiterhin betrifft die vorliegende Erfindung auch ein Verfahren zum Betrieb eines Lagersystem, wobei die wenigstens drei physischen Einheiten miteinander wenigstens ein Kommunikationsnetzwerk mit Daten- und/oder Kommunikationsverbindungen ausbilden und in Abhängigkeit der über die Daten- und/oder Kommunikationsverbindungen erfassten und verarbeiteten Daten des Lagersystems und/oder der einzelnen physischen Einheiten Aktionen bei wenigstens einer der physischen Einheiten ausgelöst werden.

Weiterhin betrifft die vorliegende Erfindung auch ein Verfahren zum Betrieb eines intelligenten Lagersystem mit wenigstens einer übergeordneten Servereinheit, welche über wenigstens ein Kommunikationsnetzwerk Daten- und/oder Kommunikationsverbindungen mit wenigstens drei physischen Einheiten unterhält, wobei die übergeordnete Servereinheit alle Einheiten wenigstens überwacht, steuert, regelt und in Abhängigkeit der über die Daten- und/oder Kommunikationsverbindungen erfassten und verarbeiteten Daten Aktionen bei wenigstens einer der Einheiten auslöst.

Optional kann weiterhin vorgesehen sein, dass die Aktionen der einzelnen Einheiten aufeinander abgestimmt werden. Dies ist vorteilhaft, da hierdurch automatisiert besonders effiziente Prozessabläufe bereitgestellt werden können.

So kann beispielsweise die Servereinheit ein Signal oder ein Datensatz einer ersten physischen Einheit abfragen. Die Servereinheit verarbeitet diesen Datensatz. Entspricht dieser Datensatz den in einer Datenbank der Servereinheit hinterlegten Parametern, so bleibt die Servereinheit passiv. Wird jedoch seitens der Servereinheit durch Abgleich ermittelt, dass ein vorbestimmter Schwellwert überschritten oder unterschritten ist, so wird die Servereinheit aktiv.

Die Servereinheit sendet dann beispielsweise Befehle an einen Roboter diese erste "fehlerhafte" physischen Einheit zu der dritten physischen Einheit, welche vorteilhaft als Wechseleinheit ausgebildet ist, zu bringen. Dies kann auch mittels eines bestimmten Lager- und Transporteinheitträgers erfolgen, welcher auf einer Roboterebene zu einer Entnahmestelle, z.B. einem Balkon, oder zu einer Vertikaltransporteinheit verbracht wird.

Unter "fehlerhaft" kann vorteilhaft verstanden werden, dass vorbestimmte Lagerparameter der in der Lager- und Transporteinheit angeordneten Waren nicht mehr den in der Servereinheit hinterlegten Anforderungen entsprechen. Ist beispielsweise eine zu kühlende Ware in einer Lager- und Transporteinheit gelagert, so weist diese Lager- und Transporteinheit wenigstens ein Temperierelement auf. Über dessen passive Kühlung wird die Waren auf die notwendige Temperatur in der geschlossenen Lager- und Transporteinheit gekühlt. Dauert die Lagerung sehr lange, so kann es vorkommen, dass die Kühlleistung des Temperierelements nicht mehr ausreicht. Das Temperierelement kühlt nicht mehr. Das Temperiervolumen in der thermisch isolierten, geschlossenen Lager- und Transporteinheit wird wärmer. Diese Temperaturänderung kann über die Erfassungseinrichtung in Kombination mit dem wenigstens einen Sensorelement erfasst und von der Servereinheit abgefragt werden.

Entspricht der übermittelte Temperaturwert, hier sei dies beispielhaft genannt, nicht mehr den in der Datenbank hinterlegten Parametern, so erfasst dies die Servereinheit durch entsprechenden Datenabgleich. Die Servereinheit erkennt, dass die Lager- und Transporteinheit, genauer gesagt, das Temperierelement, zu warm und somit "fehlerhaft" ist.

Hierzu übermittelt die Servereinheit dem Roboter den Weg zum Lager- und Transporteinheitträger oder auch zur Lager- und Transporteinheit, in Abhängigkeit von der derzeit aktuellen Position des Roboters.

Die Software des Roboters, die auf dem Prozessor läuft, ist in der Lage diesen Weg eigenständig abzufahren, z.B. mit Hilfe der IR-Line-Arrays einer Linie zu folgen und an einer Kreuzung von Linien gemäß dem übermittelten Weg abzubiegen. Wieviel Steuerungsleistung hierbei vom Roboter erbracht wird und wieviel Steuerungsleistung der Server übernimmt, kann anwendungsspezifisch bestimmt werden.

Die Servereinheit kann vorteilhaft auch in eine Cloud eingebunden sein, über die z.B. Anfragen nach Waren, Schwellwertbestimmungen, aber auch Firmwareupdates für die Roboter oder Updates für die Software zur Steuerung des Lagers von der Servereinheit eingespielt werden können.

Die Servereinheit kann ebenfalls sicherstellen, dass Roboter nicht durch den Bereich der Vertikaltransporteinheit fahren, wenn sich auf der jeweiligen Roboterebene keine überfahrbare Platte befindet.

Der Roboter verbringt dann die "fehlerhafte" Lager- und Transporteinheit oder den Lager- und Transporteinheitträger mit der entsprechend darin angeordneten "fehlerhaften" Lager- und Transporteinheit zur dritten physischen Einheit, welche hier als Wechselstation mit wenigstens einer Wechseleinheit ausgebildet ist. Die Software des Roboters, die auf dem Prozessor läuft, ist in der Lage diesen Weg eigenständig abzufahren, z.B. mit Hilfe der IR-Line-Arrays einer Linie zu folgen und an einer Kreuzung von Linien gemäß dem übermittelten Weg abzubiegen. Wieviel Steuerungsleistung hierbei vom Roboter erbracht wird und wieviel Steuerungsleistung der Server übernimmt, kann anwendungsspezifisch bestimmt werden.

Die Servereinheit erfasst die Position der "fehlerhaften" Lager- und Transporteinheit und erfasst somit ebenfalls, wenn diese in der Wechselstation angekommen und positioniert ist.

Im nächsten Schritt aktiviert die Servereinheit durch Sendung von Befehlen an die Vertikaltransporteinheit deren Fördereinheit und die daran angeordnete Wechseleinheit, so dass die Lager- und Transporteinheit geöffnet wird. Hierzu greift die Greifeinheit zumindest abschnittsweise die Gehäusekorpusverschlusseinheit. Der Gehäusekorpus der Lager- und Transporteinheit wird daraufhin entweder durch die Vertikaltransporteinheit vertikal nach unten geführt. Alternativ wird die Gehäusekorpusverschlusseinheit über die Vertikaltransporteinheit in vertikaler Richtung nach oben gefördert. Weiterhin sendet die Servereinheit Befehle an die Vertikaltransporteinheit, wie weit die vertikale Bewegung ausgeführt werden soll.

Vorteilhaft kann auch die Vertikaltransporteinheit einen eigenen Prozessor mit geeigneter Software aufweisen. Die Hubhöhe der Gehäusekorpusverschlusseinheit kann über Raumdaten abgeglichen werden. So hat die Servereinheit die Information erfasst, welches Regenerationsfach im Regenerationsmagazin frei ist. Die Servereinheit sendet die notwendigen Daten an die Vertikaltransporteinheit, welche die Gehäusekorpusverschlusseinheit auf die entsprechende Höhe anhebt.

In diesem Zusammenhang ist es besonders relevant, dass die Wechselstation direkt benachbart zu der zweiten physischen Einheit, dem Regenerationsmagazin, angeordnet ist. Die Servereinheit kann beide physischen Einheiten parallel ansteuern, parallel Befehle an diese senden und Reaktionen auf diese Befehle erfassen. So wird vorteilhaft parallel zu der Ansteuerung der Wechselstation auch das Regenerationsmagazin angesteuert.

Vorteilhaft wird mit der Positionsveränderung der Gehäusekorpusverschlusseinheit oder des Gehäusekorpus der Lager- und Transporteinheit, das wenigstens eine Verschlusselement des Regenerationsmagazins angesteuert und der Befehl zu dessen Öffnung übermittelt.

Mit der Einnahme der endgültigen vertikalen Position ist das "fehlerhafte Temperierelement, welches es auszutauschen gilt, direkt benachbart zu dem ermittelten freien Regenerationsfach des Regenerationsmagazin angeordnet.

Über die Wechseleinheit und deren wenigstens ersten Verschiebeeinheit wird das Temperierelement aus der Positioniereinheit der Gehäusekorpusverschlusseinheit herausgeführt und zugleich in das freie Regenerationsfach des Regenerationsmagazin eingeführt.

Vorteilhaft sind die Maße des Temperierelements in der Servereinheit hinterlegt, so dass diese die Wechseleinheit entsprechend anweist, wie weit die Verschiebeeinheiten verfahren müssen, um die das Temperierelement vollständig aus der Gehäusekorpusverschlusseinheit herauszuführen und es vollständig im Regenerationsmagazin einzuführen. Sind die entsprechend gespeicherten Verfahrwege abgearbeitet, erhält die Servereinheit vorteilhaft ein entsprechendes Signal. Der Regenerationsprozess dieses Temperierelement beginnt.

Im Anschluss oder bereits während des Einführens des Temperierelements in das Regenerationsmagazin, ermittelt die Servereinheit welches Temperierelement bislang am längsten im Regenerationsmagazin angeordnet ist. Alternativ ist auch denkbar, dass ermittelt wird, welches Temperierelement bereits voll regeneriert ist. Hieraus wird das bestgeeignetste Temperierelement bestimmt.

Die Servereinheit sendet neue Positionsdaten an die Vertikaltransporteinheit, welche die Wechseleinheit mit gegriffener Gehäusekorpusverschlusseinheit wiederum vertikal positionsverändert. Die nochmalige Positionsänderung bringt die Gehäusekorpusverschlusseinheit mit der Positioniereinheit genau vor das Regenerationsfach, in welchem sich das bestgeeignetste Temperierelement befinden. Über die wenigstens eine Verschiebeeinheit wird dieses Temperierelement aus dem Regenerationsmagazin heraus, direkt in die leere Positioniereinheit eingeführt.

Die Servereinheit erfasst dieses Regenerationsfach nunmehr als "leer", sendet den Schließbefehl an die Wechselstation und zugleich an das wenigstens eine Verschlusselement des Regenerationsmagazin.

Die Lager- und Transporteinheit wird wieder verschlossen und über den Roboter an einen freien Platz im Lagersystem verbracht. Den Weg hierzu übermittelt die Servereinheit wieder an den Roboter.

Weiterhin betrifft die Erfindung auch die Verwendung des Lagersystems in nicht mit einer bestimmten Temperatur beaufschlagten Räumen, Gebäuden, Fahrzeugen, Flugzeugen und/oder anderen Transporträumen.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Ansicht des Lagerprozesses,
- Fig. 2: eine beispielhafte Lager- und Transporteinheit;
- Fig. 3: ein beispielhaftes Lager- und Transporteinheit;
- Fig. 4: eine schematische dreidimensionale Ansicht einer Ausführungsform eines Regenerationsmagazins mit interner Temperiereinheit;
- Fig. 5: eine Frontalansicht der Ausführungsform eines Regenerationsmagazins aus Fig. 1 mit geöffnetem Verschlusselement;
- Fig. 6a: einen vergrößerten Ausschnitt eines Regenerationsmagazins mit Zwischenboden;
- Fig. 6b: eine perspektivische Seitenansicht eines Gehäuseinnenraums;
- Fig. 6c: eine weitere Schnittansicht der in Fig. 5 gezeigten Frontalansicht;
- Fig. 7: eine perspektivische Ansicht einer weiteren Ausführungsform eines Regenerationsmagazins;
- Fig. 8: eine Schnittansicht einer nochmals weiteren Ausführungsform eines Regenerationsmagazins;
- Fig. 9: eine Schnittansicht einer nochmals weiteren Ausführungsform des Regenerationsmagazins;
- Fig. 10: zeigt eine Vertikaltransporteinheit in einem Lagersystem;
- Fig. 11: zeigt eine Antriebseinheit einer Vertikaltransporteinheit;
- Fig. 12: zeigt eine Antriebseinheit mit einer Fördereinheit und einem Lager- und Transporteinheitträger perspektivisch von oben;
- Fig. 13: zeigt einen Lager- und Transporteinheitträger mit einem Roboter für ein Hubkonzept;
- Fig. 14: zeigt Details eines Roboters für ein Trägerplattenkonzept;
- Fig. 15: zeigt eine Roboterebene eines an eine Säule angepasstes Lagersystem von oben;
- Fig. 16: zeigt ein modulares Lagersystem mit einer Wechselstation und einem Regenerationsmagazin für Temperierelemente perspektivisch von oben;
- Fig. 17: zeigt eine perspektivische Ansicht einer Wechseleinheit einer Wechselstation von oben;
- Fig. 18: zeigt eine perspektivische Ansicht einer Wechseleinheit einer Wechselstation von unten;
- Fig. 19: zeigt ein modulares Lagersystem mit einer Wechselstation, einem Regenerationsmagazin für Temperierelemente, einem Lager- und Transporteinheitträger und einer Lager- und Transporteinheit mit Gehäusekorpusverschlusseinheit perspektivisch von oben;
- Fig. 20: zeigt das modulares Lagersystem aus Fig. 19 mit abgehobener Gehäusekorpusverschlusseinheit;
- Fig. 21: zeigt ein modulares Lagersystem mit einer Wechselstation, einem Regenerationsmagazin für Temperierelemente, einem Lager- und Transporteinheitträger und einer Lager- und Transporteinheit mit Gehäusekorpusverschlusseinheit mit Temperierelement und einem ersten eingeschwenkten Schwenkarm perspektivisch von unten;
- Fig. 22: zeigt das modulares Lagersystem aus Fig. 6 mit einem zweiten eingeschwenkten Schwenkarm;
- Fig. 23: zeigt ein Detail einer Wechseleinheit mit einem eingeschwenkten zweiten Schwenkarm mit einem Magnetgreifer.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

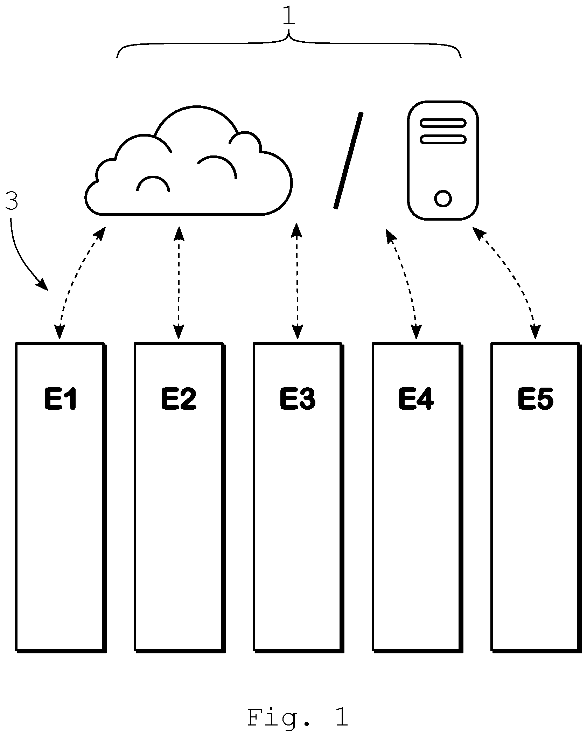

Fig. 1 zeigt ein vereinfachtes Diagramm eines Lagerprozesses mit der Servereinheit 1. Diese steht über das Kommunikationsnetzwerk 3 in Verbindung mit den physischen Einheiten E1, E2, E3, E4 und E5. Das Kommunikationsnetzwerk 3 weist eine Vielzahl an Daten- und/oder Kommunikationsverbindungen auf. E1 entspricht hier der Lager- und Transporteinheit, E2 entspricht hierbei einem Regenerationsmagazin, E3 entspricht hierbei der Wechselstation, E4 entspricht hierbei der Vertikaltransporteinheit und E5 entspricht einem Roboter. Es sei darauf hingewiesen, dass die Anzahl der einzelnen physischen Einheiten von den hier vereinfachten Beispielen abweichen kann. So kann jeweils eine Vielzahl an physischen Einheiten vorgesehen sein.

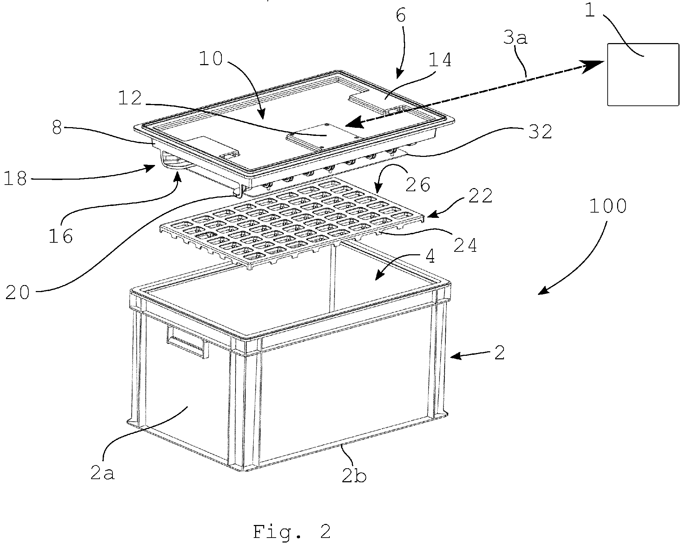

In Fig. 2 ist eine Explosionsansicht der Lager- und Transportvorrichtung 100 gezeigt. Diese weist einen Gehäusekorpus 2 auf. In diesem Ausführungsbeispiel ist der Gehäusekorpus 2 als nach oben geöffnete Kiste ausgebildet. Der Gehäusekorpus 2 wird durch die Seitenwandungen 2a und den Boden 2b räumlich begrenzt. Der Gehäusekorpus 2 spannt somit das Temperiervolumen 4 auf.

Weiterhin hat es sich als vorteilhaft erwiesen, wenn der Gehäusekorpus 2 zumindest abschnittsweise, vorteilhaft vollständig, thermisch isoliert ausgebildet ist. Dies kann beispielsweise durch übliche Dämmschäume oder Dämmmaterialien umgesetzt werden. Hierdurch kann insbesondere bei Kühlvorgabe, oder auch zum Warmhalten, die benötigte Temperatur im Temperiervolumen lange gehalten werden.

Weiterhin weist die Lager- und Transporteinheit 100 eine Gehäusekorpusverschlusseinheit 6 auf. Diese kann auch als Deckel bezeichnet werden. Die Gehäusekorpusverschlusseinheit 6 weist zunächst den Träger 8 auf. Dieser ist plattenartig ausgebildet. An der Oberseite 10 des Trägers 8 ist in diesem Ausführungsbeispiel die Erfassungseinrichtung 12 vorgesehen.

Weiterhin sind in diesem Ausführungsbeispiel zwei Griffelemente 14 an der Oberseite 10 angeordnet, mittels welchen der Träger 8 und somit die gesamte Gehäusekorpusverschlusseinheit 6, beispielsweise vertikal, abgehoben werden kann. Neben den hier gezeigten Griffelementen 14 sind auch Griffmulden, Handgriffe oder dergleichen denkbar.

Für die Stapelung mehrerer geschlossener Lager- und Transporteinheiten 100 übereinander sollten die Griffelemente allerdings nicht über den Träger 8 hinausstehen. Dies würde eine Stapelbarkeit unmöglich machen. Es hat sich daher als vorteilhaft gezeigt, die Oberseite 10 wannenartig auszubilden, so dass Griffelemente 14 und Erfassungseinrichtung 12 gleich hoch oder tiefer angeordnet sind als der eigentliche Rand des Trägers 8. Somit sind diese Bauteile effektiv angeordnet und die Lager- und Transporteinheit 100 ist weiterhin stapelbar.

An der Trägerunterfläche 16 ist die Positioniereinheit 18 angeordnet. Mit dieser Positioniereinheit 18 ist die Aufnahme von Temperierelementen 1102 und somit das Temperieren des Temperiervolumens 4 realisierbar. Damit die Positioniereinheit 18 ein Temperierelement (nicht gezeigt) aufnehmen kann, weist die Positioniereinheit 18 in diesem Ausführungsbeispiel zwei Führungselemente 20 auf. Die beiden Führungselemente 20 sind weiterhin in diesem Ausführungsbeispiel als L-förmige Leistenelemente ausgebildet. Die Leistenelemente sind fest mit der Trägerunterseite 16 verbunden, beispielsweise verschraubt. Die Leistenelemente sind zueinander beabstandet angeordnet, so dass die L-förmigen Schenkel einander zugewandt angeordnet sind.

Weiterhin weisen die beiden Leistenelemente mehrere Strömungsrippen 21 auf, welche durch Öffnungen (hier nicht gezeigt) voneinander beabstandet sind.

Weiterhin ist das Beabstandungselement 22 auf dem innenliegenden Gehäusekorpusboden 2b angeordnet. Das Beabstandungselement 22 ist gitterartig ausgebildet, so dass es eine besonders effektive Luftdurchströmung ermöglicht ist.

Weiterhin weist das Beabstandungselement 22 zahlreiche Abstandshalter 24 auf, welche auch als Füße verstanden werden können. Mit diesen Abstandshaltern 24 wird eine Beabstandung der Auflagefläche 26 des Beabstandungselements 22 gegenüber dem innenliegenden Gehäusekorpusboden 2b ausgebildet. Somit liegt das Beabstandungselement 22 nicht vollständig auf dem Gehäusekorpusboden 2b auf. Die Abstandselemente 26 verbessern nochmals die Luftzirkulation im Gebrauchszustand, wenn also der Gehäusekorpus 2 mit der Gehäusekorpusverschlusseinheit 6 verschlossen ausgebildet ist und vorteilhaft zu temperierende Güter enthalten sind. Auf der Auflagefläche 26 ist dann das in der geschlossenen Lager- und Transportvorrichtung 100 anzuordnende wenigstens eine Gut platziert.

Vorteilhaft können zur Dichtigkeitsverbesserung Dichtungen (hier nicht extra gezeigt) wie beispielsweise umlaufende Dichtungsbänder, Dichtungsringe oder dergleichen zwischen Gehäusekorpusverschlusseinheit 6 und Gehäusekorpus 2 angeordnet sein. Im einfachsten Fall sind diese mit einem der beiden Bauteile verklebt oder verschweißt.

Die beiden Führungselemente 20 werden im Fall einer Kühlung des Temperiervolumens 4 von unten mit einem Luftleitelement 32 begrenzt. Hierdurch kann eine Kältereflexion ausgebildet werden. Zudem strömt der gekühlte Luftstrom bis zu den Kanten des Luftleitelement 32 und fällt somit an den Kanten nach unten ins Temperiervolumen. Hierdurch erfolgt vorteilhaft eine indirekte Kühlung der in der Lager- und Transportvorrichtung 100 angeordneten Güter. Diese werden nicht direkt mit der gekühlten Luft beaufschlagt, wodurch sie Schaden in Qualität und Verwendung nehmen könnten.

Werden allerdings Güter in der Lager- und Transporteinheit 100 eingebracht, deren die direkte Kühlbeaufschlagung oder auch Wärmebeaufschlagung keinen Schaden zufügt, so kann auch auf das Luftleitelement 32 verzichtet werden.

Vorteilhaft wird die Erfassungseinrichtung 12 in diesem Ausführungsbeispiels direkt von der Servereinheit 1 angesteuert und steht mit dieser über Daten- und/oder Kommunikationsverbindungen 3a im Datenaustausch.

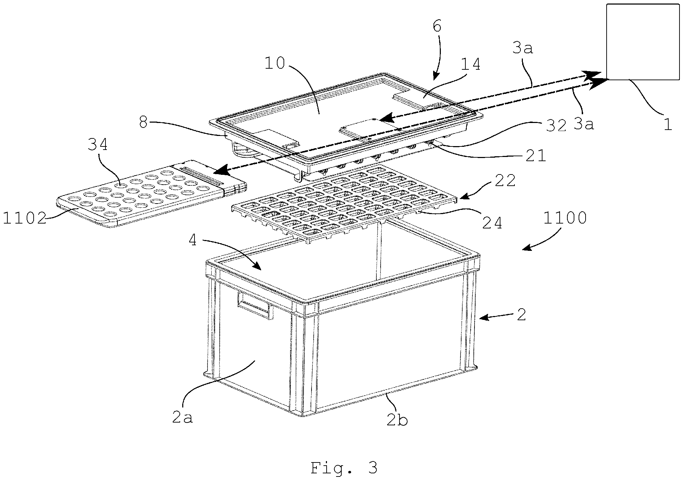

Fig. 3 zeigt nochmals die gleiche Ansicht wie Fig. 2, so dass gleiche Bauteile auch gleichen Bezugszeichen entsprechen und hier nicht nochmals erläutert werden.

Im Unterschied zu Fig. 2, zeigt nunmehr Fig. 3 das Temperiersystem 1100. Zusätzlich zu der Lager- und Transporteinheit 100 ist hier noch das in deren Positioniereinheit 18 anzuordnende Temperierelement 1102 gezeigt. Vorteilhaft ist die Position der Führungselemente 20 an der Trägerunterseite 16 durch die Geometrie des aufzunehmenden Temperierelements 1102 vorgegeben. Durch die vorteilhafte L-Form kann das Temperierelement 1102 einfach und schnell zwischen die beiden Leistenelemente eingeführt und zugleich untergriffen werden. Hierdurch kann einfach und effektiv die Positionierung des Temperierelements 1102 sichergestellt werden. Das Temperierelement 1102 weist eine regelmäßige Anzahl an Durchgangsöffnungen 34 auf. Diese erhöhen nochmals die Effektivität für die passive Temperierung des Temperiervolumens 4 und die Strömung der temperierten, beispielsweise der gekühlten oder warmhaltenden Luft innerhalb des Temperiervolumens 4.

Vorteilhaft wird die Erfassungseinrichtung 12 sowie das Temperierelement 1102, vorteilhaft dessen RFID-Tag, in diesem Ausführungsbeispiels direkt von der Servereinheit 1 angesteuert und steht mit dieser über Daten- und/oder Kommunikationsverbindungen 3a im Datenaustausch.

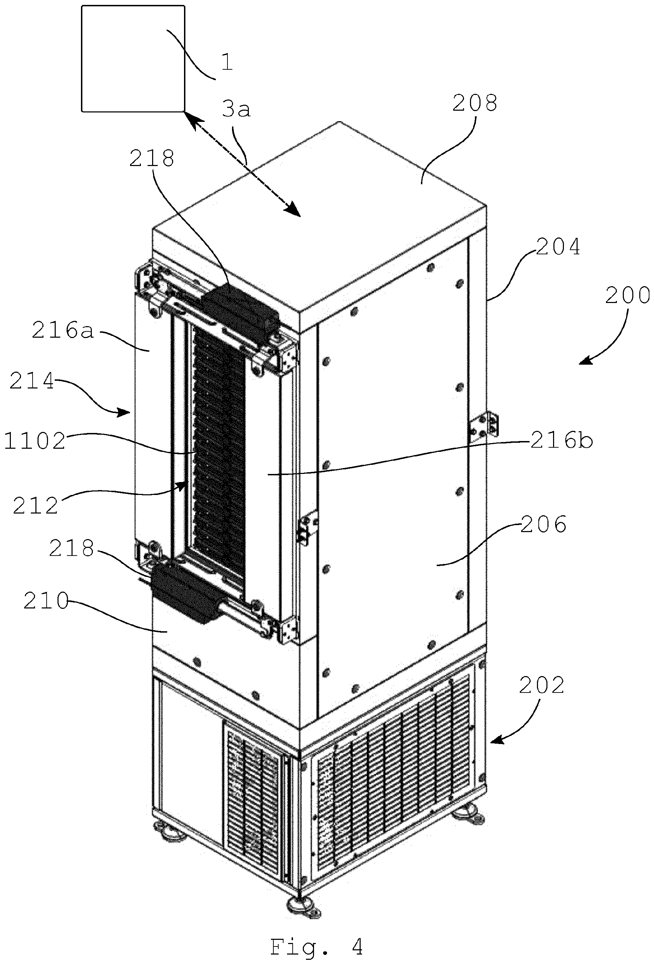

In Fig. 4 ist eine schematische dreidimensionale Ansicht eines Regenerationsmagazins 200 mit interner Temperiereinheit 202 gezeigt. Im unteren, bodennahen Abschnitt sind Teile der Temperiereinheit 202 angeordnet.

Das Gehäuse 204 ist vorteilhaft aus Metall ausgebildet und ist in diesem Ausführungsbeispiel in seiner vertikalen Längserstreckung größer ausgebildet als in seiner horizontalen Quererstreckung. Das Gehäuse 204 begrenzt über Seitenflächen 206 und Deckel 208 den Gehäuseinnenraum 224 (hier nicht explizit gezeigt). An der Frontseite 210 ist eine Öffnung 212 dargestellt, durch welche der Gehäuseinnenraum 224 erreichbar ist. Die Öffnung 212 ist mit einem Verschlusselement 214 reversibel verschließbar ausgebildet.

In dem hier gezeigten Ausführungsbeispiel ist das Verschlusselement 214 zweiflügelig ausgebildet. Es weist einen ersten Flügel 216a und einen zweiten Flügel 216b auf. Zum Öffnen der beiden Flügel 216a, 216b sind vorliegend zwei Antriebseinheiten 218 vorgesehen. Diese können beispielsweise als Stellmotor oder Elektromotor ausgebildet sein. In der hier gezeigten Ausführung sind die beiden Flügel 216a, 216b linear nach außen verstellt, so dass die Öffnung 212 frei zugänglich ist. Das Verschlusselement 214 ist geöffnet. Durch die Öffnung 214 hindurch ist die Temperierelementaufnahmeeinheit dargestellt.

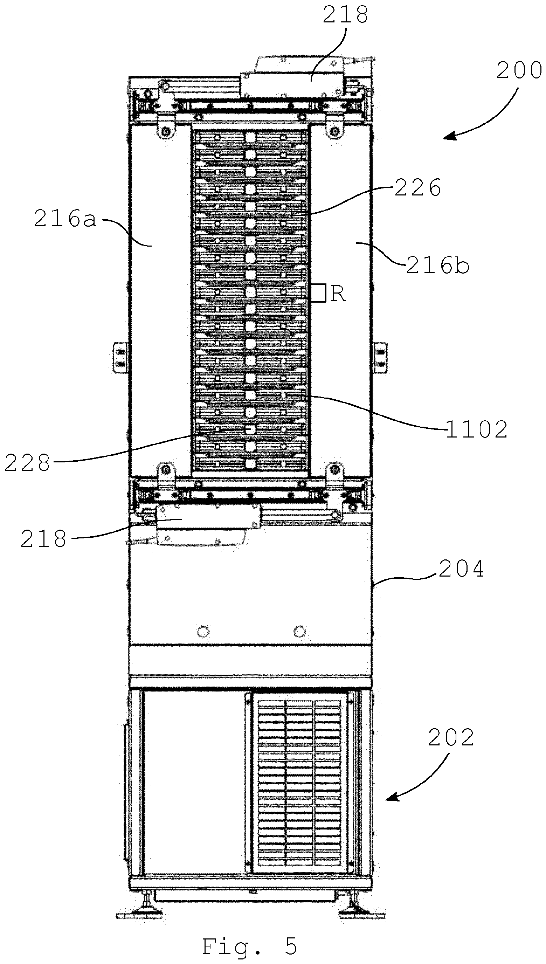

In Fig. 5 ist eine Frontansicht des Regenerationsmagazins 200 aus Fig. 4 mit geöffnetem Verschlusselement 214 dargestellt. Unten, bodennah sind wieder Teile der Temperiereinheit 202 dargestellt. Die Temperiereinheit 202 ist hier verkleidet, um sie vor Verschmutzungen zu schützen. Die Temperierelementaufnahmeeinheit 217 ist hier als Frontansicht mit den darin angeordneten Temperierelement 1102 gezeigt.

Die beiden Flügelelemente 216a, 216b sind bis in deren Endposition verfahren, so dass die Öffnung 212 vorteilhaft vollständig freigegeben ist. Die Öffnung 212 ist in ihrer Geometrie derart ausgebildet, dass die Temperierelemente 1102 durch die Öffnung 212 hindurchführbar sind, ohne dass diese während des Einführens in den Gehäuseinnenraum 224 hinein verkippt werden müssen.

Jedes Temperierelement 1102 liegt zumindest teilweise auf jeweils einem Luftführungselement 26 auf. Der Abstand zwischen zwei Luftführungselemente 226 ist als Abstand R gekennzeichnet. Jeweils zwei einander benachbart angeordnete Luftführungselemente 226 spannen zusammen mit dem Halterahmen (nicht gezeigt) oder einer Gehäuseinnenraumwandung (nicht gezeigt) durch den gegenseitigen Abstand R ein Regenerationsfach auf.

In dieses wird das Temperierelement 1102 eingeführt und während der Regeneration gelagert. Es ist optional möglich, dass die Luftführungselemente 226 an einem Halterahmen (nicht gezeigt) im Gehäuseinnenraum 224 befestigt sind. Hierdurch ergibt sich eine besonders stabile Konstruktion, welche die einzelnen Temperierelemente 1102 sicher und verlässlich aufnehmen und tragen kann.

Im hier gezeigten Beispiel sind alle Regenerationsfächer mit Temperierelementen 1102 belegt. Es gibt keine freie Position.

Weiterhin weist in diesem Beispiel jedes Temperierelement 1102 an seiner zur Öffnung 212 gerichteten Stirnseite wenigstens ein Erkennungsmittel 228 auf. Dieses kann als RFID-Tag ausgebildet sein. Hierdurch ist es möglich, dem Temperierelement 1102 spezifische, ihm zugehörige Daten zuzuweisen, um diese dann in einer Datenbank zu erfassen und/oder zu verwalten. Dies kann in der Kontrolleinheit erfolgen.

Weiterhin kann an der gleichen Stirnseite der Temperierelemente 1102 ein kraftbeaufschlagbarer Abschnitt vorgesehen sein, welcher beispielsweise magnetisch ausgebildet ist.

Jedes Temperierelement 1102 liegt zumindest abschnittsweise auf einem Luftführungselement 226 auf. Die hier eingesetzten Luftführungselement 226 sind zumindest teilweise V-förmig ausgebildet. Vorteilhaft ist die Fläche, welche sich unterhalb des darauf angeordneten Temperierelements 1102 befindet, V-förmig ausgebildet. Die V-Form läuft mittig unter dem Temperierelement 1102 zusammen, so dass eine Rinne ausgebildet wird.

Vorteilhaft weist diese Rinne (hier nicht explizit gezeigt) wenigstens eine Öffnung auf (hier nicht gezeigt), durch welche mögliches Kondenswasser, welches sich am Temperierelement 1102 während dessen Regeneration bilden kann, gezielt nach unten abgeführt werden kann.

Vorteilhaft stehen die ansteuerbaren Bauteile des Regenerationsmagazin 200 direkt mit der Servereinheit 1 in Daten- und/oder Kommunikationsverbindungen 3a. Die Servereinheit 1 steuert die Bauteile direkt an und veranlasst situationsbedingte Abläufe.

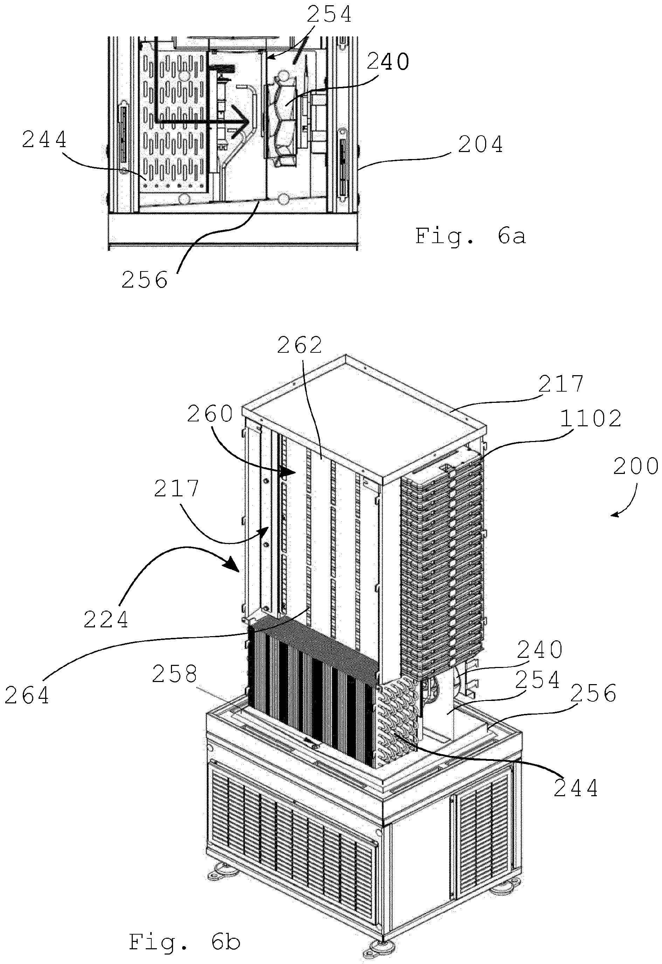

In Fig. 6a ist ein Ausschnitt eines Regenerationsmagazins 200 gezeigt. Hier ist der Abschnitt dargestellt, wo Verdampfer 244 und Luftstromführungseinrichtung 240 dargestellt sind. Vorteilhaft wird der Bereich zwischen Verdampfer 244 und Luftstromführungseinrichtung 240 mit einem Schutzelement 254, beispielsweise einem Blech überspannt und vor Tropfwasser der darüber offen angeordneten Temperierelemente (hier nicht gezeigt) geschützt. Unterhalb des Verdampfers 244 ist ein Zwischenboden 56 angeordnet. Dieser trennt den unteren Gehäusebereich mit dem Kompressor (hier vom Gehäuse verdeckt) vom restlichen Gehäuseinnenraum.

Im einfachsten Fall ist der Zwischenboden 256 geschäumt ausgebildet. Vorteilhaft ist der Zwischenboden 256 zur Seite des Verdampfers 244 nach unten geneigt ausgebildet. So kann mögliches Tropfwasser auf der Schräge ablaufen und durch geeignete Öffnungen (hier nicht gezeigt) vom Zwischenboden 256 abgeführt werden.

Um mögliches Tropfwasser vor dem Anfrieren auf dem Zwischenboden 256 zu schützen, kann der Zwischenboden 256 beheizbar ausgebildet sein. Hierzu ist wenigstens ein Heizelement (hier nicht gezeigt) im Zwischenboden 256 eingebettet und/oder auf diesem und/oder unter diesem angeordnet. Das Heizelement (hier nicht gezeigt) kann als Heizkabel ausgebildet sein. Dies ist vorteilhaft, da hierdurch der Zwischenboden 256 erwärmbar ist, so dass mögliches Tropfwasser, ausgehend von den darüber angeordneten Temperierelementen(hier nicht gezeigt), gerade nicht auf dem Zwischenboden 256 anfriert und sich dicke Eisschichten dort ausbilden. Hierdurch würde nach einer Zeit auch wenigstens die Funktion des Verdampfers 244 eingeschränkt werden. Daher ist es wichtig, das Tropfwasser auch flüssig abzuführen. Dies wird erfolgreich mit der Erwärmung des Zwischenbodens 256 erreicht.

In Fig. 6b ist eine perspektivische Ansicht des Gehäuseinnenraums 224 gezeigt. Im unteren gekammerten Bereich sind Teile der Temperiereinheit 202 angeordnet. Diese sind durch den Zwischenboden 256 vom Gehäuseinnenraum 224 räumlich getrennt. Vorteilhaft dient der Zwischenboden 256 auch zugleich als thermische Isolation, so dass keine Wärme aus dem unteren gekammerten Bereich in den Gehäuseinnenraum 224 dringen kann.

An der abgeflachten Kante des Zwischenboden 256, dem Verdampfer 244 benachbart angeordnet, ist eine Tropfwasseröffnung 258 vorgesehen. Über diese kann Tropfwasser vom Zwischenboden 256 und somit auch aus dem Gehäuseinnenraum 224 abgeführt werden.

Weiterhin ist die Temperierelementaufnahmeeinheit 217 gezeigt. Die Temperierelementaufnahmeeinheit 217 wird unten durch den Verdampfer 244 begrenzt. An deren Vorderseite sind die zahlreichen Temperierelemente 1102 eingeschoben in die Regenerationsfächer dargestellt. Die Temperierelementaufnahmeeinheit 217 weist zum seitlichen Begrenzen der Regenerationsfächer, vorteilhaft beidseitig, wenigstens einen unterbrochenen Seitenabschnitt 260 auf.

Die seitlichen, sich in vertikaler Richtung erstreckenden Seitenabschnitte 260 der Temperierelementaufnahmeeinheit 217 sind in diesem Fall nicht voll ausgebildet. Sie sind aus mehreren Streifen 262 ausgebildet, so dass sich vertikale Längsöffnungen 264 bedingen. Diese können durchgängig in vertikaler Richtung sein und/oder aber in vertikaler Richtung unterbrochen sein.

Vorteilhaft sind diese Streifen 262 aus Metall, beispielsweise aus Blech ausgebildet. Die Anordnung der Bleche 262 in Kombination mit den Längsöffnungen 64 schaffen einen einheitlichen Druckverlust und damit ein einheitliches Umspülen der Temperierelemente 1102 über die Höhe der Regenerationsfächer. Vorteilhaft können die Längsöffnungen 264 und die Streifen 262 variabel ausgebildet sein, so dass sich in Druckabhängigkeit des Temperierluftstrom unterschiedliche Durchströmbereiche zwischen den Streifen 262 ausbilden lassen.

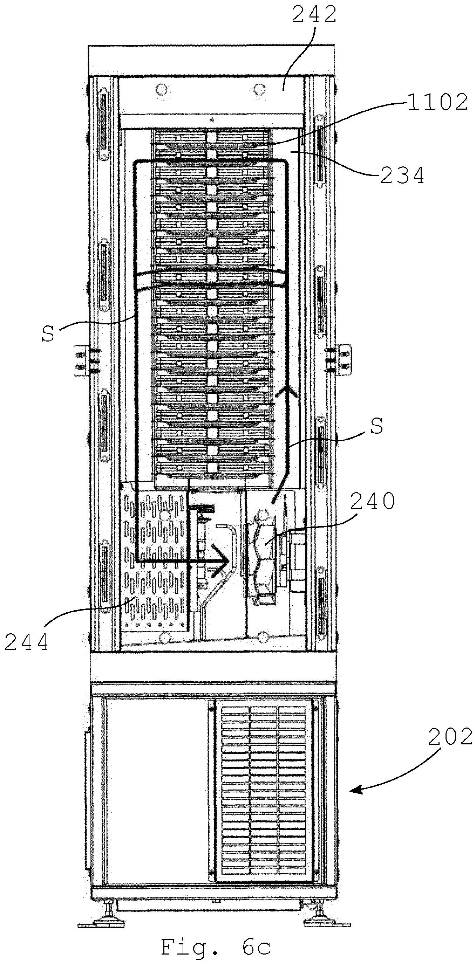

Fig. 6c zeigt die Frontansicht des Regenerationsmagazins 1 aus Fig. 5, ohne die entsprechenden Gehäusewandungen. Mittig angeordnet ist der Halterahmen 234 mit den darin angeordneten Luftführungselementen 226 und Temperierelementen 1102.

Die Luftstromführungseinrichtung 240, welche als Ventilator ausgebildet sein kann, führt, beispielsweise bläst, den temperierten Luftstrom auf dem Strömungspfad S nach oben. Durch die Ausbildung des Halterahmens 234, der Luftführungselemente 226 und des hierdurch begrenzten Gehäuseinnenraums 224 wird der temperierte Luftstrom nicht nur nach oben geführt. Der Strömungspfad S ist sowohl nach oben als auch über und/oder unter und/oder durch die Durchgangsöffnungen des Temperierelements 1102 gerichtet ausgebildet. Dieser Strömungspfad wird insbesondere dadurch bedingt, dass der Halterahmen 234 direkt am Gehäusedeckel 242 angeordnet ist. Hierdurch ist kein freies Volumen bedingt. Der temperierte Luftstrom kann sich nicht beliebig im Gehäuseinnenraum 224 verteilen, sondern wird durch das ständige Nachführen durch die Luftstromführungseinrichtung 240 durch die verbleibenden Zwischenräume geführt, beispielsweise geblasen. So strömt der temperierte Luftstrom vorteilhaft gezielt zumindest über und unter die Temperierelemente 1102, so dass diese kurzzeitig regeneriert werden können. In Frontansicht auf der linken Seite tritt der Luftstrom dann wieder aus und wird nach unten in Richtung Verdampfer 244 geführt. Diesen durchströmt die nunmehr erwärmte Luft. Hierbei wird die Luft wieder temperiert, hier zumindest gekühlt, um dann im nächsten Zirkulationsschritt wieder von der Luftstromführungseinrichtung 240 in Richtung Temperierelemente 1102 geführt zu werden. Vorteilhaft ist der Strömungspfad S insgesamt als aktiver, kontinuierlicher Luftzirkulationspfad ausgebildet.

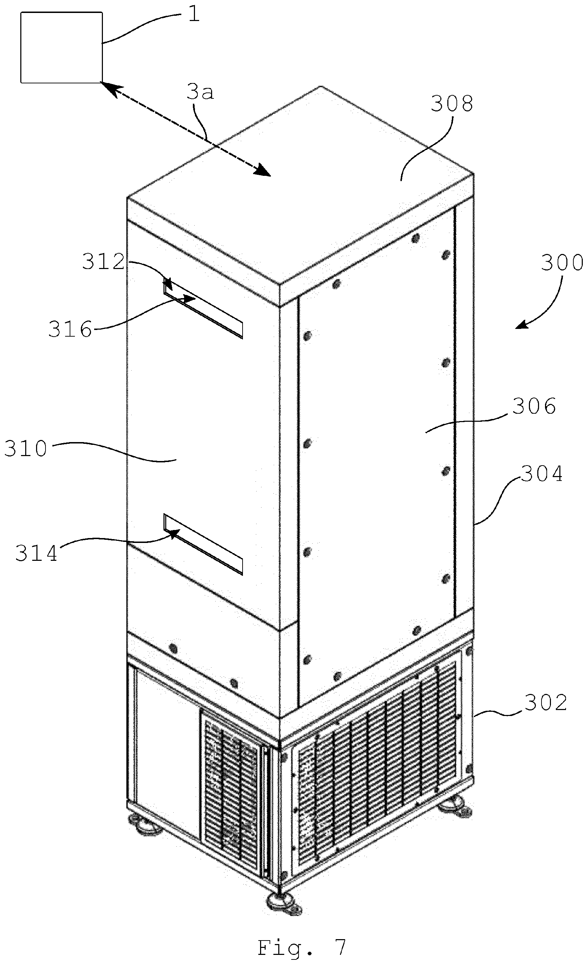

In Fig. 7 ist eine schematische dreidimensionale Ansicht einer weiteren Ausführungsform eines Regenerationsmagazins 300 mit interner Temperiereinheit 302 gezeigt. Im unteren, bodennahen Abschnitt sind Teile der Temperiereinheit 302 angeordnet.

Das Gehäuse 304 ist vorteilhaft aus Metall ausgebildet und ist in diesem Ausführungsbeispiel in seiner vertikalen Längserstreckung größer ausgebildet als in seiner horizontalen Quererstreckung. Das Gehäuse 304 begrenzt über Seitenflächen 306 und Deckel 308 den Gehäuseinnenraum (hier nicht explizit gezeigt).

An der Frontseite 310 ist sind zwei Öffnungen 312, 314 dargestellt, durch welche der Gehäuseinnenraum (nicht gezeigt) erreichbar ist. Die Öffnungen 312, 314 sind jeweils mit einem Verschlusselement reversibel verschließbar ausgebildet. Vorteilhaft sind die beiden Verschlusselemente unabhängig voneinander. Das obere Verschlusselement verschließt die Temperierelementzuführöffnung 312. Das vertikal hierzu beabstandet angeordnete zweite Verschlusselement verschließt die Temperierelementabführöffnung 314. Beide Verschlusselemente sind hier nicht gezeigt, da beide die Temperierelementzuführöffnung 312 und die Temperierelementabführöffnung 314 im geöffneten Zustand dargestellt sind. Die beiden Verschlusselemente sind nach innen in den Gehäuseinnenraum 316 verschwenkt.

Dies ist nicht beschränkend zu verstehen, so dass es auch denkbar ist, die Verschlusselemente außenliegend am Gehäuse anzubringen.

Vorteilhaft stehen die ansteuerbaren Bauteile des Regenerationsmagazin 300, beispielsweise die Verschlusselemente, direkt mit der Servereinheit 1 in Daten- und/oder Kommunikationsverbindungen 3a. Die Servereinheit 1 steuert die Bauteile direkt an und veranlasst situationsbedingte Abläufe.

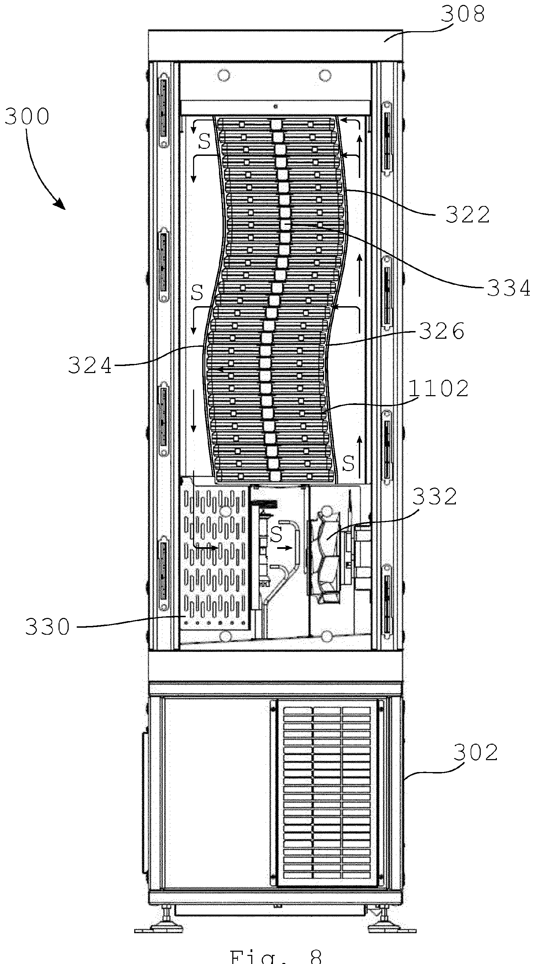

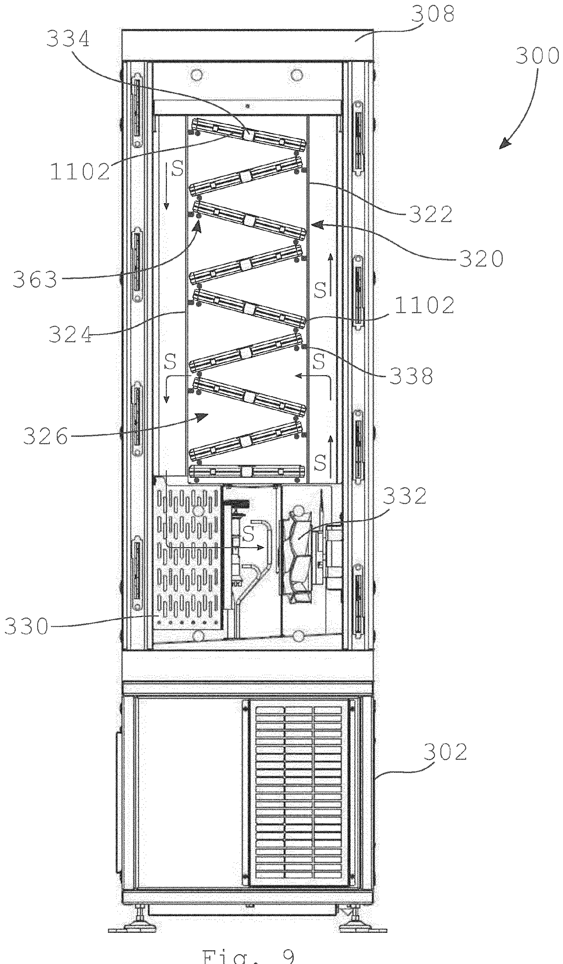

In Fig. 8 und 9 sind unterschiedliche Ausgestaltungen des Halterahmens 320 gezeigt.

Lediglich der Halterahmen 320 nimmt in vertikaler Erstreckung einen S-förmigen Verlauf ein. Die beiden seitlichen Abschnitte 322, 324 sind S-förmig gekrümmt ausgebildet. Beide Seitenabschnitte 322, 324 weisen einen deckungsgleichen Krümmungsverlauf auf.

Zwischen den beiden Seitenabschnitten 322, 324 ist der Zwischenraum 26 ausgebildet. In diesem Zwischenraum 326 können zahlreiche Temperierelemente 1102 horizontal angeordnet sein. Im hier gezeigten Beispiel ist der Zwischenraum und somit die Temperierelementaufnahmeeinheit voll bestückt mit Temperierelementen 1102 dargestellt.

Die S-Form erweist sich dahingehend als vorteilhaft, da hierdurch die senkrecht nach unten wirkende Gewichtskraft auf das unterste Temperierelement 1102 reduziert werden kann. Zudem wird ein Verkanten innerhalb des Zwischenraums 326 vermieden. Somit kann stets die korrekte Positionierung der Temperierelemente 1102 im Zwischenraum 326 sichergestellt sein.

Weiterhin weist in diesem Beispiel jedes Temperierelement 1102 an seiner zur Öffnung 312, 314 gerichteten Stirnseite wenigstens ein Erkennungsmittel 334 auf. Dieses kann als RFID-Tag ausgebildet sein. Hierdurch ist es möglich, dem Temperierelement 1102 spezifische, ihm zugehörige Daten zuzuweisen, um diese dann in einer Datenbank zu erfassen und/oder zu verwalten. Dies kann in der Kontrolleinheit erfolgen. Weiterhin kann an der gleichen Stirnseite der Temperierelemente 1102 ein kraftbeaufschlagbarer Abschnitt vorgesehen sein, welcher beispielsweise magnetisch ausgebildet ist.

Hier nicht gezeigt, aber möglich ist, dass das vorletzte Temperierelement 1102 vom letzten, untersten Temperierelement 1102 des Stapels zumindest teilweise beabstandet angeordnet ist. Beispielsweise kann das vorletzte Temperierelement 1102 schräg ausgerichtet sein. Hierdurch wird nochmals die Reibung über die Flächenlast signifikant reduziert. Das unterste Temperierelement kann somit noch leichter entnommen werden.

Unterhalb des Halterahmens 320 sind Teile der Temperiereinheit 302 gezeigt. Die Luftstromführungseinrichtung 332, welche als Ventilator ausgebildet sein kann, führt, beispielsweise bläst, einen temperierten Luftstrom, ausgehend vom Verdampfer 330, auf dem Strömungspfad S nach oben. Durch die Ausbildung des Halterahmens 320, den hierdurch begrenzten Gehäuseinnenraums 16 sowie die Form der Seitenabschnitte 322, 324 wird der temperierte Luftstrom nicht nur nach oben in Pfeilrichtung geführt. Der Strömungspfad S teilt sich und ist sowohl nach oben als auch über und/oder unter und/oder durch die Durchgangsöffnungen (hier nicht gezeigt) der im Zwischenraum 326 angeordneten Temperierelemente 1102 gerichtet ausgebildet.

Dieser Strömungspfad S wird insbesondere dadurch bedingt, dass der Halterahmen 320 am Gehäusedeckel 308 angeordnet sein kann. Hierdurch ist dort kein besonders großes, freies Volumen bedingt. Der temperierte Luftstrom kann sich nicht beliebig im Gehäuseinnenraum 316 verteilen, sondern wird durch das ständige Nachführen durch die Luftführungseinrichtung 40 durch die verbleibenden Zwischenräume der Temperierelementaufnahmeeinheit geführt, beispielsweise geblasen.

So strömt der temperierte Luftstrom vorteilhaft gezielt zumindest über und unter die Temperierelemente 1102, so dass diese kurzzeitig regeneriert, in diesem Beispiel gekühlt, werden können.

In Frontansicht auf der linken Seite der Temperierelemente 1102 tritt der Luftstrom dann in Pfeilrichtung wieder aus der Temperierelementaufnahmeeinheit heraus und wird nach unten in Richtung Verdampfer 330 geführt. Diesen durchströmt die nunmehr erwärmte Luft. Hierbei wird die Luft wieder neu temperiert, hier zumindest gekühlt, um dann im nächsten aktiven Zirkulationsschritt wieder von der Luftstromführungseinrichtung 332 in Richtung Temperierelemente 1102 geführt zu werden. Vorteilhaft ist der Strömungspfad S insgesamt als aktiver, kontinuierlicher Luftzirkulationspfad ausgebildet.

Hier ebenfalls nicht extra gezeigt, aber möglich ist, dass, zur verbesserten Führung des Temperierluftstroms zwischen den Temperierelementen 1102 hindurch und zugleich um deren Regeneration zu beschleunigen, jedes Temperierelement wenigstens drei oder mehr Abstandselemente aufweist. Diese können als Füßchen verstanden werden. Vorteilhaft weist jedes Temperierelemente 1102 wenigstens drei Abstandselemente, vorteilhaft vier oder sechs auf.

In Fig. 9 ist eine weitere mögliche Ausführungsform eines Regenerationsmagazins 300 gezeigt. Der Aufbau entspricht größtenteils der Ausführungsform aus Fig. 8. Gleiche Bezugszeichen kennzeichnen gleiche Bauteile und werden daher nicht erneut erklärt.

In diesem Ausführungsbeispiel ist der Halterahmen 320 gerade ausgebildet. Die beiden Seitenabschnitte 322, 324 restrecken sich geradlinig vertikal von oben nach unten. Dazwischen wird wieder der Zwischenraum 326 aufgespannt. Der Zwischenraum 326 ist wieder derart ausgebildet, dass Temperierelemente 1102 aufgenommen werden können. In diesem Ausführungsbeispiel sind an den Innenwandungen der beiden Seitenabschnitte 322, 324 Trennelemente 338 angeordnet. Diese können im einfachsten Fall als Vorsprung oder vorspringende Leiste ausgebildet sein. Die Trennelemente 338 ragen in den Zwischenraum 326 hinein, vorteilhaft in horizontaler Anordnung oder schräg nach unten gerichteter Anordnung in Bezug auf den jeweiligen Seitenabschnitt 322, 324. Die Trennelemente 338 sind vorgesehen, um die Temperierelemente 1102 zumindest teilweise zu untergreifen und/oder in Position zu halten. Die hier gezeigte Temperierelementaufnahmeeinheit ist nicht voll bestückt gezeigt, um die Funktion besser zu verdeutlichen.

Um auch hier die Gewichtskraft und Flächenlast von übereinander gestapelten Temperierelemente 1102 zu verringern, sind die Trennelemente 338 vorgesehen. Diese untergreifen und/oder halten ein Temperierelement 1102 an dessen einem freien Ende. Das Temperierelement 1102 selbst ist verkippt im Zwischenraum 326 angeordnet. Wird nun das unterste Temperierelement 1102 durch die Temperierelementabführöffnung (hier nicht gezeigt) entnommen, so rutschen die restlichen Temperierelemente 1102 im Zwischenraum nicht einfach geradlinig nach unten, sondern kippen in einer zick-zack-Bewegung nach. Hierdurch wird ein Verkanten innerhalb des Zwischenraums vermieden und mögliche Vereisungen der Temperierelemente 1102 werden aufgebrochen.

Zur verbesserten Führung der Temperierelemente 1102 und zugleich um deren Regeneration zu beschleunigen, weisen die Temperierelemente 1102 an ihrer Unterseite Abstandselemente 336 auf. Diese können als Füßchen verstanden werden. Vorteilhaft weist jedes Temperierelemente 1102 wenigstens drei Abstandselemente 336, vorteilhaft vier oder sechs auf. Die Abstandelemente 336 dienen auch der zusätzlichen Positionsstabilisierung währen der zickzack-Bewegung und der dann notwendigen stabilen Anordnungen im Temperierelementstapel im Zwischenraum 326.

Unterhalb des Halterahmens 320 sind Teile der Temperiereinheit 302 gezeigt. Die Luftstromführungseinrichtung 332, welche als Ventilator ausgebildet sein kann, führt, beispielsweise bläst, einen temperierten Luftstrom, ausgehend vom Verdampfer 330, auf dem Strömungspfad S nach oben. Durch die Ausbildung des Halterahmens 320, den hierdurch begrenzten Gehäuseinnenraum 316 sowie die Form der Seitenabschnitte 322, 324 wird der temperierte Luftstrom nicht nur nach oben in Pfeilrichtung geführt. Der Strömungspfad S ist sowohl nach oben als auch über und/oder unter und/oder durch die Durchgangsöffnungen (hier nicht gezeigt) der im Zwischenraum 326 angeordneten Temperierelemente 1102 gerichtet ausgebildet. Dieser Strömungspfad S wird insbesondere dadurch bedingt, dass der Halterahmen 320 direkt am Gehäusedeckel 8 angeordnet sein kann. Hierdurch ist dort kein freies Volumen bedingt. Der temperierte Luftstrom kann sich nicht beliebig im Gehäuseinnenraum 316 verteilen, sondern wird durch das ständige Nachführen durch die Luftführungseinrichtung 340 durch die verbleibenden Zwischenräume geführt, beispielsweise geblasen.

So strömt der temperierte Luftstrom vorteilhaft gezielt zumindest über und unter die Temperierelemente 1102, so dass diese kurzzeitig regeneriert werden können. In Frontansicht auf der linken Seite der Temperierelemente 1102 tritt der Luftstrom dann in Pfeilrichtung wieder aus der Temperierelementaufnahmeeinheit aus und wird nach unten in Richtung Verdampfer 330 geführt. Diesen durchströmt die nunmehr erwärmte Luft. Hierbei wird die Luft wieder temperiert, hier zumindest gekühlt, um dann im nächsten aktiven Zirkulationsschritt erneut von der Luftstromführungseinrichtung 332 in Richtung der Temperierelementaufnahmeeinheit geführt zu werden. Vorteilhaft ist der Strömungspfad S insgesamt als aktiver, kontinuierlicher Luftzirkulationspfad ausgebildet.

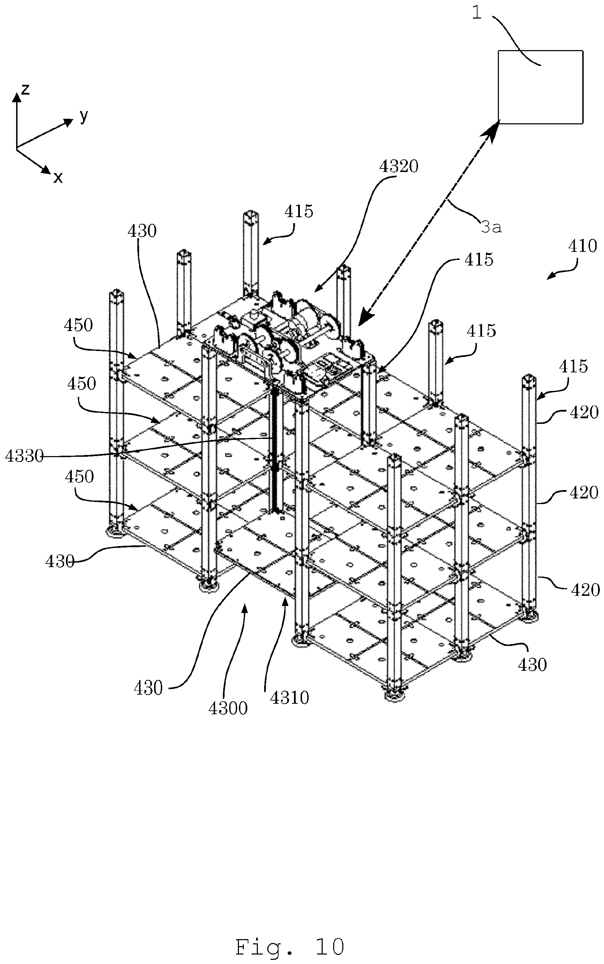

In Fig. 10 ist eine Vertikaltransporteinheit 4300 in einem Lagersystem 410 gezeigt. Eine Antriebseinheit 4320 der Vertikaltransporteinheit 4300 ist auf vier Vertikalträgern 415 angeordnet die gleichzeitig als Teil des Lagersystems 410 Bodenplatten 430 halten. Zur Befestigung der Antriebseinheit 4320 können die Teile der Fußstücke 478, z.B. Fußendstücke 4226 verwendet werden, die beim modularen Lagersystem 410 auch für die Aufstellung auf dem Boden verwendet werden. Die Vertikalträger 415 sind aus Pfeilern 420 zusammengesetzt. An vier Tragseilen 4330, von denen in Fig. 10 nur eines vor einem Vertikalträger 415 sichtbar ist, hängt die Fördereinheit 4310. Die Fördereinheit 4310 umfasst eine bearbeitete und verkleinerte Bodenplatte 430, an der in vier Ecken die Tragseile 4330 befestigt sind. Die Antriebseinheit 4320 hat einen Elektromotor 4340, der ein Getriebe 4350 antreibt, mit dem Rollen 4360 gedreht werden. Auf den Rollen 4360 können die Tragseile 4330 auf- und abgewickelt werden und damit kann die Fördereinheit 4310 nach oben gezogen oder abgesenkt werden.

Ist die Bodenplatte 430 der Fördereinheit 4310 in einer Roboterebene 450 auf der gleichen Höhe wie die Bodenplatten 430 der Roboterebene, so kann ein Roboter 480, nicht dargestellt in Fig. 10, auf oder über die Bodenplatte 430 der Fördereinheit 4310 fahren, wie auf oder über eine Bodenplatte 430 der Roboterebene 450.

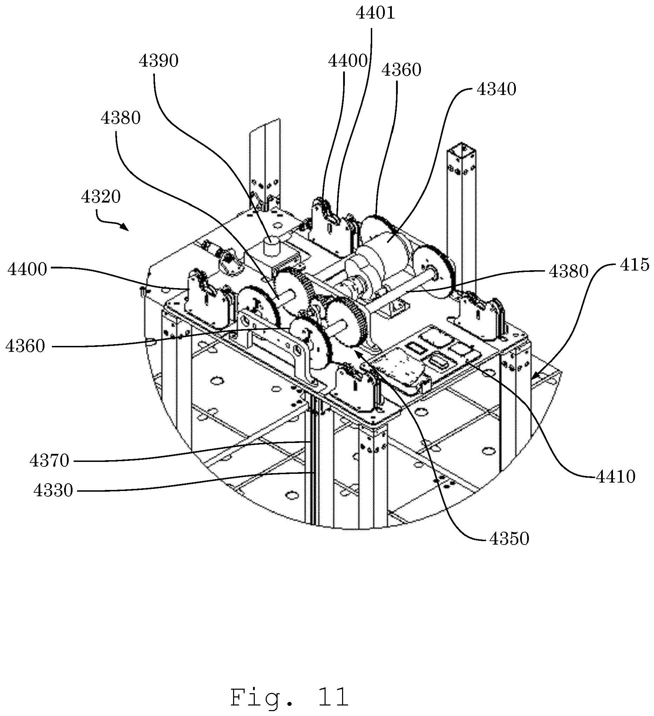

In Fig. 11 ist die Antriebseinheit 4320 der Vertikaltransporteinheit 4300 detaillierter dargestellt. Die Antriebseinheit 4320 ist auf vier Vertikalträger 415 aufgesetzt und an ihnen befestigt. Der Elektromotor 4340 treibt über das Getriebe 4350 die beiden Wellen 4380 an. Auf den Wellen 4380 befinden sich die vier Rollen 4360 mit denen die Tragseile 4330 auf- und abgewickelt werden können. Die vier Tragseile 4330 sind hierzu an den Rollen 4360 befestigt. Über Umlenker 4400 werden die vier Tragseile 4330 durch Löcher, parallel zu den Vertikalträgern 415 zur Fördereinheit 4310, in Fig. 11 nicht dargestellt, geführt. Am Umlenker angeordnet ist auch eine Spannrolle 4401. Die Position der Spannrolle 4401 kann in Vertikalrichtung (z-Richtung) eingestellt werden. Hierdurch kann eine Feinjustierung der Seillängen der Tragseile 4330 ermöglicht werden, z.B. um die Platte der Fördereinheit 4310 waagrecht in der horizontalen x-y-Ebene auszurichten. Die Antriebseinheit 4320 weist zudem einen Positionssensor 390 zur Bestimmung der Position der Fördereinheit 4310 auf. Der Positionssensor 4390 ist als Seilwegaufnehmer ausgestaltet, ein Faden 4370 verbindet den Sensor mit der Fördereinheit, der Faden 4370 ist parallel zu einem Vertikalträger 415 geführt. Durch Herausziehen oder, z.B. federkraftunterstütztes, Einholen des Fadens wird kann ein Potentiometer verstellt werden und daraus die Länge der Fadenänderung bestimmt werden alternativ kann ein Encoder, der z.B. mittels optischer Ablesung oder mittels eines Hallsensors Drehungen einer Spule des Fadens 4370 misst, ein entsprechendes Digitalsignal liefern. An der Antriebseinheit kann eine elektronische Steuerung 4410 mit z.B. Mikrokontrollern angebracht sein. Gut erkennbar in Fig. 11 ist, dass die Antriebseinheit 4320 leicht und flexibel an verschiedenen Positionen des Lagersystems 4300 auf den Vertikalträgern 415 angebracht werden kann. Werden die Bodenplatten 430 der Roboterebenen 450 des Lagersystems 4300 unterhalb der so angebrachten Antriebseinheit 4320 mit den Winkelprofilen 475 zur Befestigung entfernt, so kann die Fördereinheit 4310 zwischen den Vertikalträgern 415 nach oben und nach unten bewegt werden.

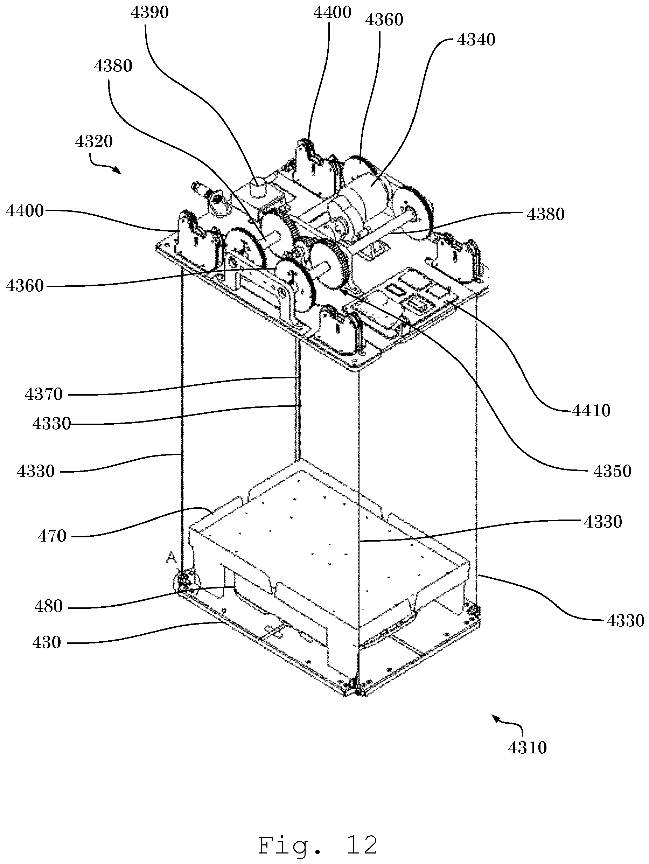

Zur besseren Erkennbarkeit ist in Fig 12 die Vertikaltransporteinheit 4300 ohne das Lagersystem 410 und ohne die Vertikalträger 415 perspektivisch von oben dargestellt. Zusätzlich zu den Details aus Fig. 11 sieht man gut die vier Tragseile 4330 und den Faden 4370. An den vier Tragseilen 4330 hängt die Fördereinheit 4310 mit der Bodenplatte 430. Auf der Bodenplatte ist ein Lager- und Transporteinheitträger 470 abgestellt unter dem sich ein Roboter 480 befindet. Der Lager- und Transporteinheitträger 470 ist so dimensioniert, dass er zwischen den Tragseilen 4330 und dem Faden 4370 auf die Fördereinheit 4310 durch den Roboter 480 bewegt werden kann.

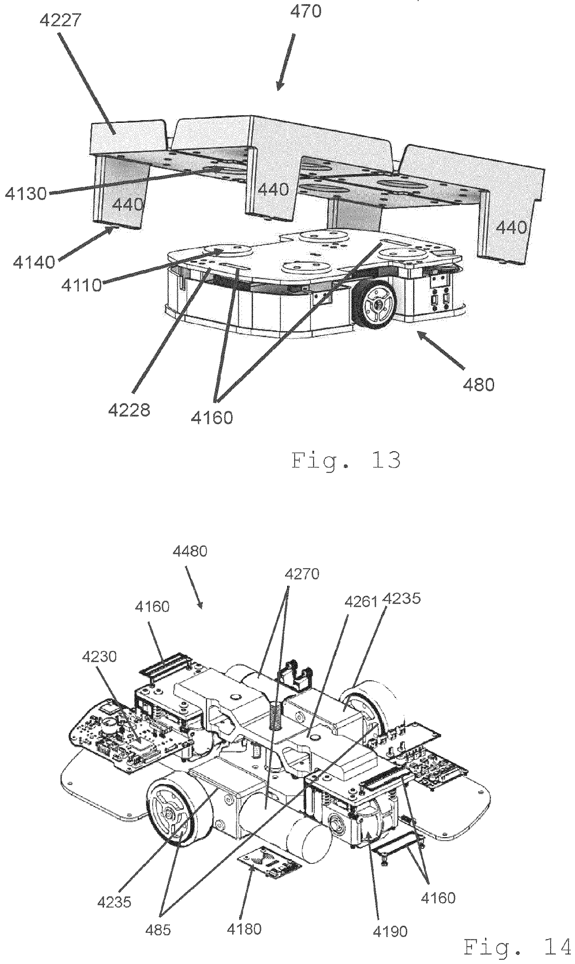

Fig. 13 zeigt das Zusammenspiel von Lager- und Transporteinheitträger 470 mit dem Roboter 480 in einer Konfiguration, in der der Roboter 480 den Lager- und Transporteinheitträger 470 und ggf. die darauf befindlichen Lager- und Transporteinheit 460 und Waren anhebt - Hubkonzept. Zur besseren Erkennbarkeit ist der Lager- und Transporteinheitträger 470 in Fig. 14 schwebend dargestellt. Der Lager- und Transporteinheitträger 470 ist als eigenständig stehendes Podest ausgebildet, welches durch den Roboter 480 unterfahren und angehoben werden kann. Die Verwendung eines Lager- und Transporteinheitträgers 470 ermöglicht die Verwendung von einer oder mehrerer Lager- und Transporteinheiten 460 unterschiedlicher Größe auf einem Lager- und Transporteinheitträger 470.

Durch die Verwendung nur eines Lager- und Transporteinheitträgers 470 mit entsprechender Ausführung ist eine zuverlässige Aufnahme der Lager- und Transporteinheit 460 durch den Roboter 480 möglich, da der Roboter 480 an die immer gleiche Schnittstelle am Lager- und Transporteinheitträger 470 andockt. Lager- und Transporteinheitträger 470 können bei Verschleiß leicht ersetzt werden oder zur Reinigung entnommen werden, ohne die Modulstruktur zu verändern.

Zur definierten Aufnahme des Lager- und Transporteinheitträgers 470 durch den Roboter 480 und somit zum positionsgenauen Absetzen an der gewünschten Position, der Sicherung gegen horizontales Verschieben oder Verdrehung aufgrund von Beschleunigungen des Roboters 480 beim Bewegen durch das Lagersystem 410, koppelt der Roboter 480 mit Hilfe von vier kegelstumpfförmigen Domen 4110 am Hebeteller 4228 des Roboters 480 in vier runde kegel-stumpfförmige komplementäre Behälterträgervertiefungen 4130 an der Unterseite des Lager- und Transporteinheitträgers 470 an. Alternativ können auch drei Vertiefungen 4130 vorhanden sein oder ein Konus und eine Verdrehsicherung oder ein Konus mit einer Verdrehsicherung. Die Ankopplung vom Roboter 480 an den Lager- und Transporteinheitträger 470 soll durch korrespondierende Formen an Hebeteller 4228 und Lager- und Transporteinheitträger 470 einen Formschluss erzeugen, der ein Verdrehen oder Verschieben des Lager- und Transporteinheitträgers 470 relativ zum Roboter 480 im angehobenen Zustand verhindert.

Der Lager- und Transporteinheitträger 470 ist an seiner Unterseite mit einem ähnlichen Linienmuster aus-gestattet, wie die Bodenplatten 430. Dieses Linienmuster kann mittels der oben am Roboter 480 angeordneten Sensoren 4160 zur Überprüfung der korrekten Positionierung des Roboters 480 unter dem Lager- und Transporteinheitträger 470 verwendet werden. Dies ist insbesondere wichtig, wenn auf Grund eines Fehlers, z.B. eines Stromausfalls oder eines Roboterdefekts ein Lager- und Transporteinheitträger 470 nicht exakt an einer definierten Position auf einer Bodenplatte 430 steht. Die Erkennung der Position erfolgt hierbei durch IR-Line-Arrays als Sensoren 4160. Die IR-Line-Arrays 4160 können am Hebeteller 4228 selbstbefestigt sein oder durch Aussparungen im Hebeteller 4228 hindurch wirken. Zusätzlich oder alternativ können Lager-und Transporteinheitträger 470 auch noch mit RFID-Tags ausgerüstet werden und die Roboter 480 mit einem weiteren RFID-Reader, z.B. auf der Oberseite.

Die Lager- und Transporteinheitträger 470 sind für den Transport oder die Lagerung stapelbar ausgeführt, d.h. die Füße 440 sind so geformt, dass sie innerhalb die Berandung 450 der Auflagefläche des Lager- und Transporteinheitträgers 470 passen. Alternativ können die Füße 440 demontierbar ausgeführt werden. Die Gesamtform der Lager- und Transporteinheitträgers 470 kann ineinander stapelbar ausgeführt sein, wobei sich die Füße 440 eines Lager- und Transporteinheitträgers 470 in von oben in die Füße 440 eines anderen Lager- und Transporteinheitträgers 470 einschieben lassen. Durch Stapeln, Demontage der Füße 440 oder ineinander Stapeln lässt sich die Packungsdichte bzw. Stabilität für den Transport oder die Lagerung der Lager- und Transporteinheitträger 470 erhöhen.

Der Hebeteller 4228 des Roboters 480 ist für den Fehlerfall mit einer Kugel-Spindel 4240 ausgestattet, sodass sich der Hebeteller 4228 im stromlosen Zustand absenkt. Tritt also ein Fehler beim Roboter 480 auf, wird der Lager- und Transporteinheitträger 470 freigegeben. Der Roboter 480 kann durch einen anderen Roboter 480 unter dem Lager- und Transporteinheitträger 470 herausgeschoben werden.

Lager- und Transporteinheitträger 470 und Roboter 480 sind so dimensioniert, dass der Roboter 480 unter dem Lager- und Transporteinheitträger 470 drehen kann und so die Bewegungsrichtung im Lagersystem 410 ändern kann. Bei einer Drehung um jeweils 90° ist die Ankopplung zwischen Lager- und Transporteinheitträger 470 und Roboter 480 gewährleistet.

Der Roboter 480 hat eine Bauhöhe von lediglich etwa 100 mm. Durch die flache Bauform wird die Platzausnutzung des Lagersystems 410 optimiert.

In Fig. 14 sind schematisch Details aus dem Inneren des Roboter 480 gezeigt. Abgebildet ist ein Roboter 480 des Trägerplattensystems, wobei dieser sich im Wesentlichen durch den Eingreifer 4261 anstelle des Hebetellers 4228 unterscheiden. Zur besseren Erkennbarkeit der Details ist das Gehäuse des Roboters 480 in Fig. 14 ausgeblendet. Brushless DC Motoren 4270 mit Inkrementengeber sorgen für den Vortrieb und das Manövrieren der Roboter 480 über die Räder 485. Die Räder 485 werden dabei über Schneckengetriebe 4235 angetrieben. Hierdurch ist ein flacher Aufbau des Roboters 480 für eine optimierte Raumausnutzung durch das Lagersystem 410 möglich. Für die Positionierung zu Linien und Mustern auf den Bodenplatten 430 oder der Unterseite der Lager- und Transporteinheitträger 470 dienen IR-Line-Arrays 4160. Die absolute Position und Ausrichtung des Roboters 480 im Lagersystem 410 kann mit Hilfe des RFID-Readers 4180 und RFID-Tags 4170 auf oder in den Bodenplatten 430 bestimmt werden.

Zur Abstützung des Roboters 480 dienen Allseitenräder 4190, die auch die Rotation des Roboters 480 um seine eigene Achse durch entgegengesetzte Drehung der Räder 485 ermöglichen.

Der Roboter 480 umfasst einen Computerchip 4230 bzw. eine Steuerplatine. Für eine Steuerung des Lagersystems 410 gibt es unterschiedliche Konzepte, wie diese auf einem Server, insbesondere verbunden mit einer Cloud, und auf den Roboter 480 selbst vorgenommen wird.

Gemäß einer Ausführungsform ist eine Servereinheit 1 im Nahbereich vorhanden, insbesondere im selben Gebäude oder Raum, wie die Roboterebenen 450 und Roboter 480. Der Server kommuniziert drahtlos mit den Robotern 480 über Standardprotokolle wie z.B. WI-FI, Bluetooth, Zigbee, Z-Wave oder 6LowPAN. Der Server kann drahtlos oder drahtgebunden mit der Vertikaltransportheit 4300 kommunizieren.

Gemäß einer Ausführungsform verarbeitet die Servereinheit 1 Daten über die Waren, Positionen von Lager- und Transporteinheitträgern 470, Lager- und Transporteinheit 460, Waren und Robotern 480 im Lagersystem 410. Auf der Servereinheit 1 wird eine Software betrieben, die den Lagerungsprozess leitet. Z.B. geht bei der Servereinheit 1 die Anfrage nach einer bestimmten Ware ein. Von der Servereinheit 1 gehen dann Befehle an einen Roboter 480 einen bestimmten Lager- und Transporteinheitträger 470 auf einer Roboterebene 450 zu einer Entnahmestelle, z.B. einem Balkon, oder zu einer Vertikaltransporteinheit 4300 zu bringen. Hierzu übermittelt die Servereinheit 1 dem Roboter 480 den Weg zum Lager- und Transporteinheitträger 470 von der Position des Roboters 480. Die Software des Roboters 480, die auf dem Prozessor 3230 läuft, ist in der Lage diesen Weg eigenständig abzufahren, z.B. mit Hilfe der IR-Line-Arrays 3160 einer Linie 3220 zu folgen und an einer Kreuzung von Linien 3220 gemäß dem übermittelten Weg abzubiegen. Wieviel Steuerungsleistung hierbei vom Roboter 380 erbracht wird und wieviel Steuerungsleistung die Servereinheit 1 übernimmt, kann anwendungsspezifisch bestimmt werden. Die Servereinheit 1 wiederum ist in eine Cloud eingebunden, über die z.B. Anfragen nach Waren, aber auch Firmwareupdates für die Roboter 480 oder Updates für die Software zur Steuerung des Lagers durch die Servereinheit 1 eingespielt werden können. Die Servereinheit 1 kann ebenfalls sicherstellen, dass Roboter 480 nicht durch den Bereich der Vertikaltransporteinheit 4300 fahren, wenn sich auf der jeweiligen Roboterebene 450 keine überfahrbare Platte befindet.

Im Raum der Roboterebenen 450 und Roboter 4480 befindet sich, insbesondere in der Nähe der Entnahme und Einlagerungsstellen, z.B. der Balkone 90, ein Display, das Bedienern Informationen über das Lagersystem 410, dessen Status oder aktuelle Vorgänge zur Verfügung stellt, und eine Bedieneinheit, mit der z.B. Einlagerungen oder Entnahmen bestätigt werden können.

Die Servereinheit 1 kann auch einen oder mehrere Pickingroboter steuern, die Waren und/oder Behälter in das Lagersystem 410 einlagern oder entnehmen.

Ein Roboter 480 kann in einer Ausführungsform der Erfindung auch zu einem Reinigungsroboter umgerüstet sein oder werden und mit Saug- und oder Wischeinheiten versehen sein oder werden, um das Lagersystem 10 in regelmäßigen oder unregelmäßigen Abständen zu reinigen.

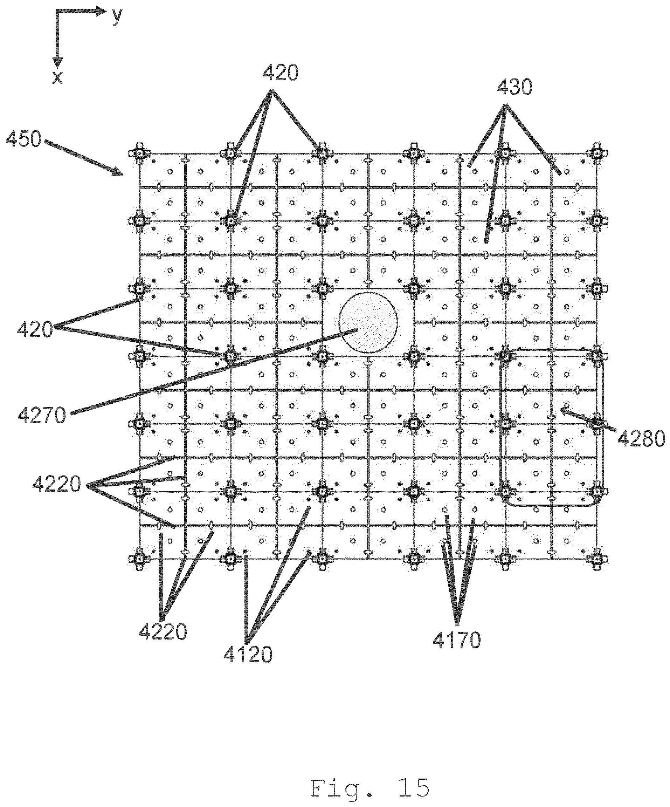

Fig. 15 zeigt eine Sicht von oben auf eine Roboterebene 450 von Bodenplatten 430 eines Lagersystems 410. Die Roboterebene 450 wird durch sechs Bodenplatten 430 in x-Richtung und fünf Bodenplatten 430 in y-Richtung gebildet. Im Inneren der Roboterebene 450 ist eine Bodenplatte 430 ausgelassen. Dadurch kann die Roboterebene 450 eine Säule 4270 einer Gebäudestruktur, in der das Lagersystem 410 eingebracht ist, umschließen. Eine größere Säule 4270 könnte durch das Auslassen von weiteren Bodenplatten 430 umbaut werden. Das Lagersystem 410 kann in entsprechender Weise an andere Grundrisse angepasst werden. Auch in z-Richtung ist eine Anpassung, z.B. an entlang der Decke laufender Rohrleitungen oder an Dachschrägen möglich.

Bei der Konfiguration des Lagersystems 410 ist darauf zu achten, dass es ungehinderte Fahrwege für die Roboter 480 in einer Roboterebene 450 gibt.

Durch die Roboterebene 450 verlaufen Linien 4220, die auf verschiedenen Bodenplatte 430 aufgebracht sind und sich auf benachbarten Bodenplatten 430 fortsetzen. Die Bodenplatten bilden im Wesentlichen eine geschlossene Roboterebene 450 aus. Benachbarte Bodenplatten 430 stoßen aneinander an oder die Abstände zwischen benachbarten Boden-platten 430 sind so gering gewählt, z.B. 2 mm, dass Roboter 480 über die Grenzen benachbarter Bodenplatten 430 fahren können. Bei geringen Abständen ist die Geräuschentwicklung reduziert und die Erschütterung der Lager- und Transporteinheitträger 470 und die Lager- und Transporteinheit 460 auf den Robotern 480 ebenfalls. Quermarkierungen 4221 auf den Bodenplatten 430 erleichtern die Zentrierung von Robotern 480 auf einer Bodenplatte 430 und damit auch die Ausrichtung relativ zu Lager- und Transporteinheitträger 470.

In Fig. 15 ist das Hubsystem dargestellt, bei dem Vertiefungen 4120 die exakte Positionierung der Lager- und Transporteinheitträger 470 auf einer Bodenplatte 430 erleichtern. Ebenfalls dargestellt sind RFID-Tags 4170 zur absoluten Positions- und Richtungsbestimmung der Roboter 480 in der Roboterebene 450.

Die Bodenplatten 430 sind an Löchern 4215 über in Fig. 15 nicht dargestellte Winkelprofile 475 mit den Pfeilern 420 verschraubt. Ein Pfeiler 420, der von vier Bodenplatten 430 um-geben ist, ist mit jeder Bodenplatte 430 an zwei Winkelprofilen 475 mit jeweils zwei Schrauben verbunden.

In Fig. 15 ist erkennbar, wie man mehrere Bodenplatten 430 in einer alternativen Ausführungsform einstückig zusammenfassen kann. Z.B. kann die Fläche 4280, die durch zwei Bodenplatten 430 gebildet ist, mit zwei Linien 4220 in y-Richtung, acht RFID-Tags 4170, acht Quermarkierungen 4221 eine einstückige Platte darstellen.

Auf dieser Platte können sich zwei Roboter 450 gleichzeitig unter zwei Lager- und Transporteinheitträgern 470 befinden. Die zwei in x-Richtung mittleren Pfeiler könnten entfallen. Eine derartige Modifikation mit mehreren Lagerplätzen auf einer Platte ist immer noch modular und kann flexibel aufgebaut werden. Je größer die Platten werden, umso geringer ist jedoch die Anpassungsfähigkeit an vorhandene Gebäudestrukturen und umso schwieriger wird der Aufbau des Lagersystems 410.

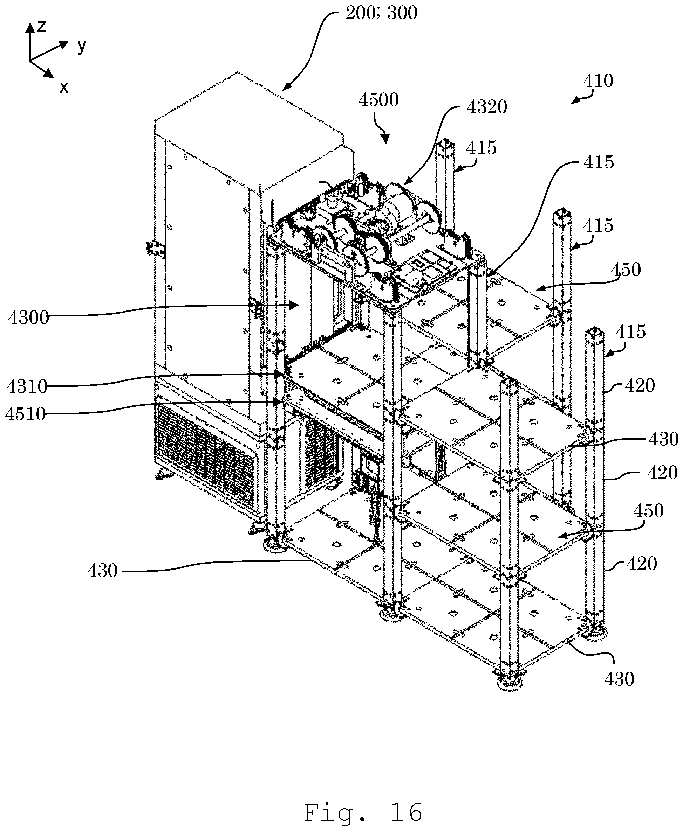

In Fig. 16 ist ein modulares Lagersystem 410 mit einer Wechselstation 500 und einem Regenerationsmagazin 200,300 für Temperierelemente 1102 perspektivisch von schräg oben dargestellt. Der Regenerationsmagazin 200, 300 ist als Temperaturschrank ausgestaltet und kann zum Kühlen von Kühlakkus als Temperierelement 1102 verwendet werden.

Kühlakkus als Temperierelement 1102 können im Regenerationsmagazin 200, 300 auf mehreren Ebenen angeordnet sein. Für das modulare Lagersystem 410 sind zwischen Vertikalträgern 415 aus Pfeilern 420 Bodenplatten 430 angeordnet. Mehrere Bodenplatten 430 bilden zusammen Roboterebenen 450 aus. Das modulare Lagersystem 410 ist nur auszugsweise dargestellt.

Im Bereich von vier Vertikalträgern 415 über einer Bodenplatte 430 ist die Wechselstation 500 in das modulare Lagersystem 410 integriert. Die Wechselstation 500 umfasst eine Vertikaltransporteinheit 4300 mit einer Antriebseinheit 4320 und einer Fördereinheit 4310. An der Fördereinheit 4310 ist eine Wechseleinheit 510 angeordnet, insbesondere verschraubt.

Mit der Vertikaltransporteinheit 4300 kann die Wechseleinheit 510 vertikal auf verschiedene Positionen bewegt werden, sodass Temperierelement 1102 aus den und in die Ebenen des Regenerationsmagazin 200, 300 mit der Wechseleinheit 510 verschoben werden können.

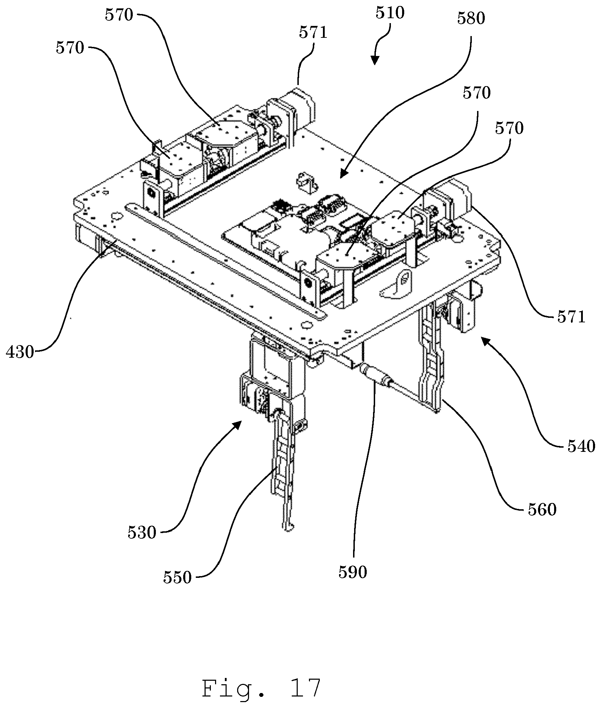

Fig. 17 zeigt eine perspektivische Ansicht einer Wechseleinheit 510 einer Wechselstation 500 von schräg oben. Eine erst Verschiebeeinheit 530 mit einem ersten Schwenkarm 550 und eine zweite Verschiebeeinheit 540 mit einem zweiten Schwenkarm 560 sind unten an der Wechseleinheit 510 angeordnet. Mehrere Bauelemente der Wechseleinheit 510, insbesondere die erste und zweite Verschiebeeinheit 530, 540 sind an einer bearbeiteten Bodenplatte 430 angeordnet, insbesondere mit dieser verschraubt.

An der Oberseite der Wechseleinheit 510 sind Greifhakenstellelemente 570 für die Greifhaken 515 angebracht, mit denen die Wechseleinheit 510 eine Gehäusekorpusverschlusseinheit 6 greifen kann. Greifhakenmotoren 571 können jeweils zwei Greifhaken 515 mit den Greifhakenstellelementen 570 aufeinander zu oder voneinander wegbewegen.

Die Wechseleinheit 510 umfasst eine Wechselsteuereinheit 580, die Mikrokontroller und Prozessoren umfassen kann und mit der Wechseleinheit 510, insbesondere in Kommunikation mit einer Servereinheit 1 des Lagersystems 410, gesteuert werden kann. Z.B. können in der Wechseleinheit 510 die notwendigen Kontrollanweisungen vorliegen, sodass bei einem Befehl der Servereinheit 1 ein Temperierelement 1102 aus dem Regenerationsmagazin 200, 300 herauszuschieben, die Wechselstation 500 mit der Wechseleinheit 510 die notwendigen Verfahrensschritte durchführen kann.

Am zweiten Schwenkarm 560 ist ein Magnetgreifer 590 angeordnet. Der Magnetgreifer 590 ist derart am zweiten Schwenkarm 560 angeordnet, dass der Magnet flexibel gelagert ist und sich gegenüber der Längsachse des Magnetgreifers 590 um mindestens 5 ° drehen kann.

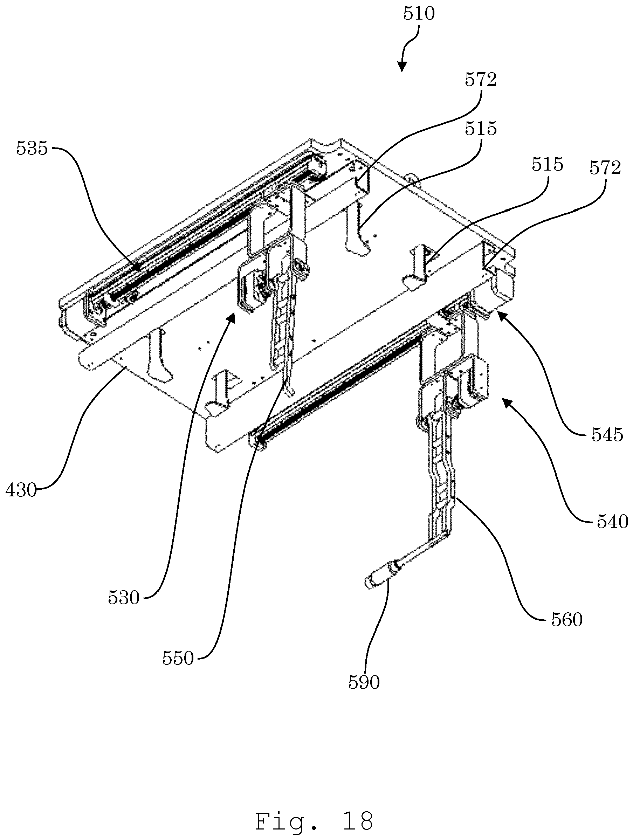

Fig. 18 zeigt eine perspektivische Ansicht einer Wechseleinheit 510 einer Wechselstation 500 von schräg unten. Zusätzlich zu den in Fig. 17 dargestellten Merkmalen der Wechseleinheit 510 sind eine erste Linearverschiebeeinheit 535 und eine zweite Linearverschiebeeinheit 545 zu sehen, mit der der erste Schwenkarm 550 und der zweite Schwenkarm 560 linear verschoben werden können.

Die Linearverschiebeeinheiten 535, 545 haben einen Spindelantrieb. Vier Greifhaken 515 können dazu dienen eine Gehäusekorpusverschlusseinheit 6 zu greifen. Je zwei Greifhaken 515 können auseinander und zusammenbewegt werden.

Wird mit der Vertikaltransporteinheit 4300 die Wechseleinheit 510 mit auseinander bewegten Greifhaken 515 herabbewegt, die Greifhaken in Aussparungen des Gehäusekorpusverschlusseinheit 6 eingeführt und die Greifhaken zusammenbewegt, so kann die Gehäusekorpusverschlusseinheit 6 gegriffen werden. Bei einem Hinaufbewegen der Wechseleinheit 510 mit der Vertikaltransporteinheit 4300 kann die Gehäusekorpusverschlusseinheit 6 von der Lager- und Transporteinheit 100 abgehoben werden.

An der Wechseleinheit 4300 sind zwei Abstandshalter 572 angebracht, mit denen ein Verkippen des gegriffenen Gehäusekorpusverschlusseinheit 6 reduziert werden kann. In den Fig. 17 und 18 sind die Schwenkarme 550, 560 nicht eingeschwenkt, sodass die Wechseleinheit 510 auf eine Lager- und Transporteinheit 100 mit einer Gehäusekorpusverschlusseinheit 6 mit der Vertikaltransporteinheit 4300 herabgelassen werden kann, ohne dass sich die Schwenkarme 550, 560 zwischen der Wechseleinheit 4300 und der Lager- und Transporteinheit 100 oder der Gehäusekorpusverschlusseinheit 6 befinden.

Die Schwenkarme 550, 560 können mit Motoren in Richtung der Unterseite der Platte 430 der Wechseleinheit 4300 geklappt werden.

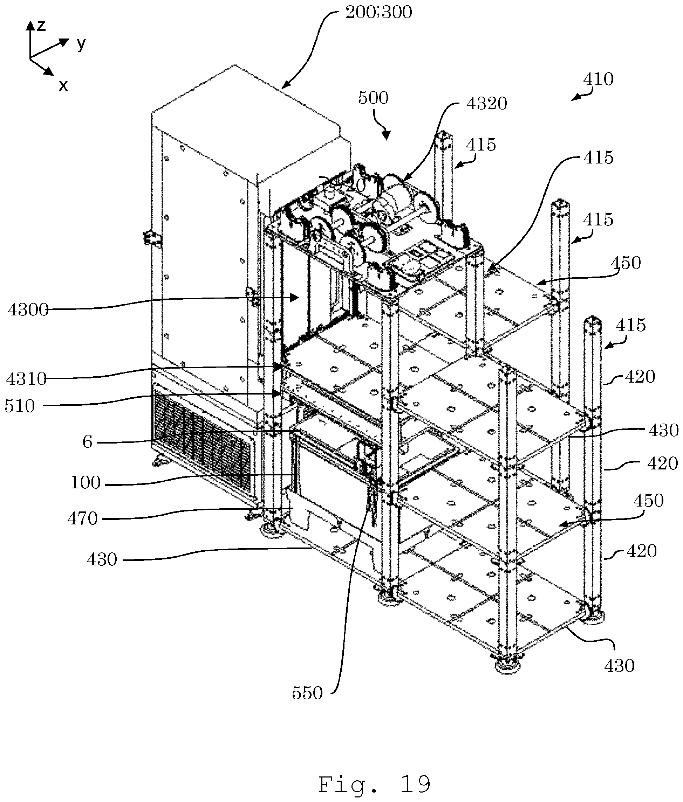

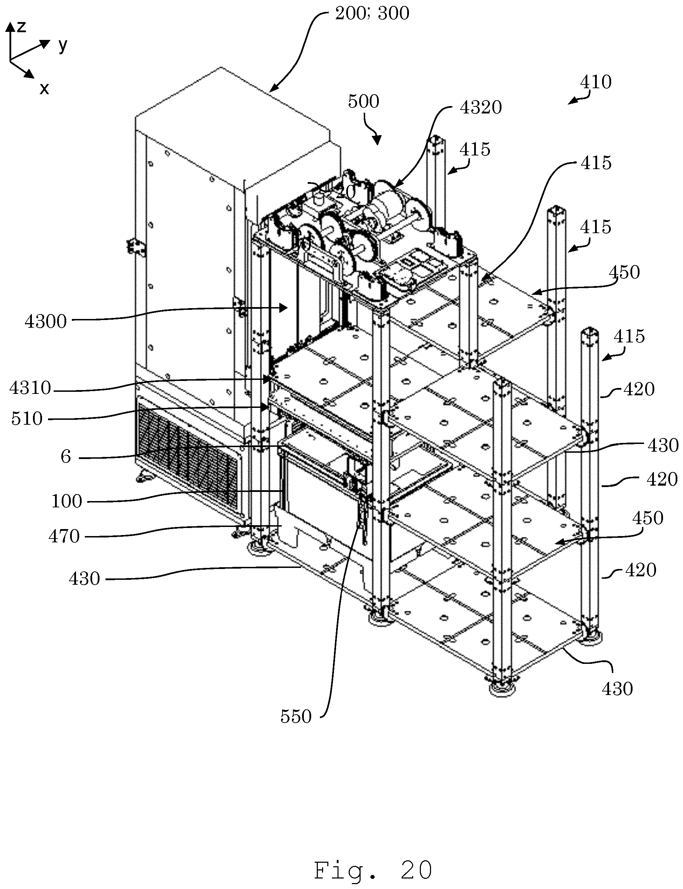

Fig. 19 zeigt ein modulares Lagersystem wie in Fig. 16 dargestellt, mit einer Wechselstation 500, einem Regenerationsmagazin 200, 300 für Temperierelemente 1102, einem Lager- und Transporteinheitträger 470 und einer Lager- und Transporteinheit 100 mit Gehäusekorpusverschlusseinheit 6 perspektivisch von oben und Fig. 20 zeigt das modulares Lagersystem aus Fig. 19 mit abgehobener Gehäusekorpusverschlusseinheit 6.

Ein Roboter 480 des Lagersystems 410 kann eine Lager- und Transporteinheit 100 auf einem Lager- und Transporteinheitträger 470 in den Bereich der Wechselstation 500 bewegen. In der Wechselstation 500 kann die Gehäusekorpusverschlusseinheit 6 von der Lager- und Transporteinheit 100 abgehoben werden, indem die Wechseleinheit 510 auf die Gehäusekorpusverschlusseinheit 6 herabgelassen wird, diese ergreift und mit der Vertikaltransporteinheit 4300 angehoben wird. Der Schwenkarm 550 der ersten Verschiebeeinheit verläuft an der Außenseite der Lager- und Transporteinheit 100.

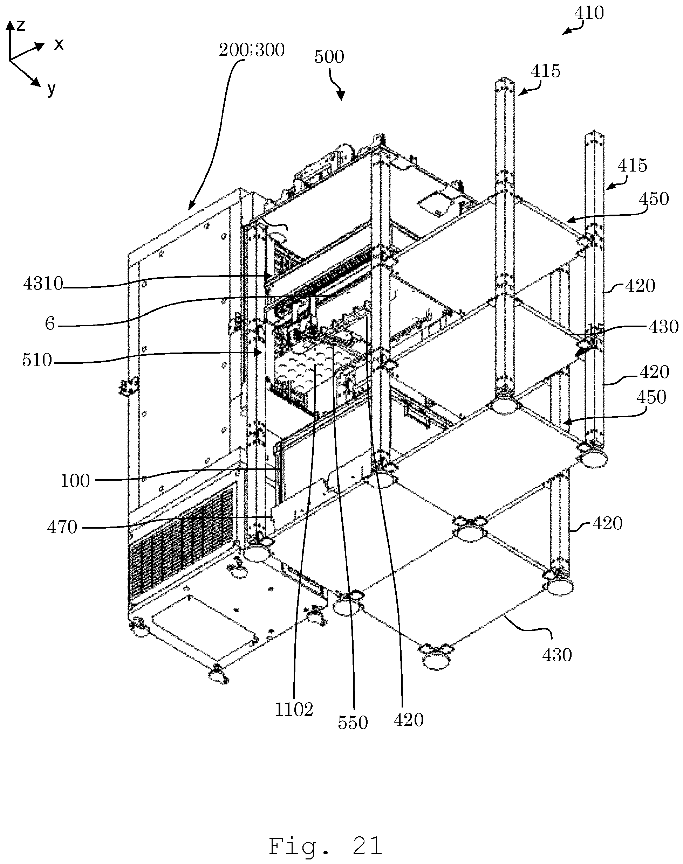

Die Fig. 20 und 21 zeigen ein intelligentes, modulares Lagersystem 410 mit einer Wechselstation 500, einem Regenerationsmagazin 200, 300 für Temperierelemente 1102, einem Lager- und Transporteinheitträger 470 und einer Lager- und Transporteinheit 100 mit angehobener Gehäusekorpusverschlusseinheit 6, wie es auch in Fig. 19 dargestellt ist, mit dem Temperierelement 1102, das teilweise vom Regenerationsmagazin 200, 300 in Führungselemente 20 an der Gehäusekorpusverschlusseinheitunterseite eingeschoben ist.

In Fig. 21 ist der erste Schwenkarm 550 eingeschwenkt, sodass die erste Verschiebeeinheit 530 mit dem ersten Schwenkarm 550 das Temperierelement 510 verschieben kann.

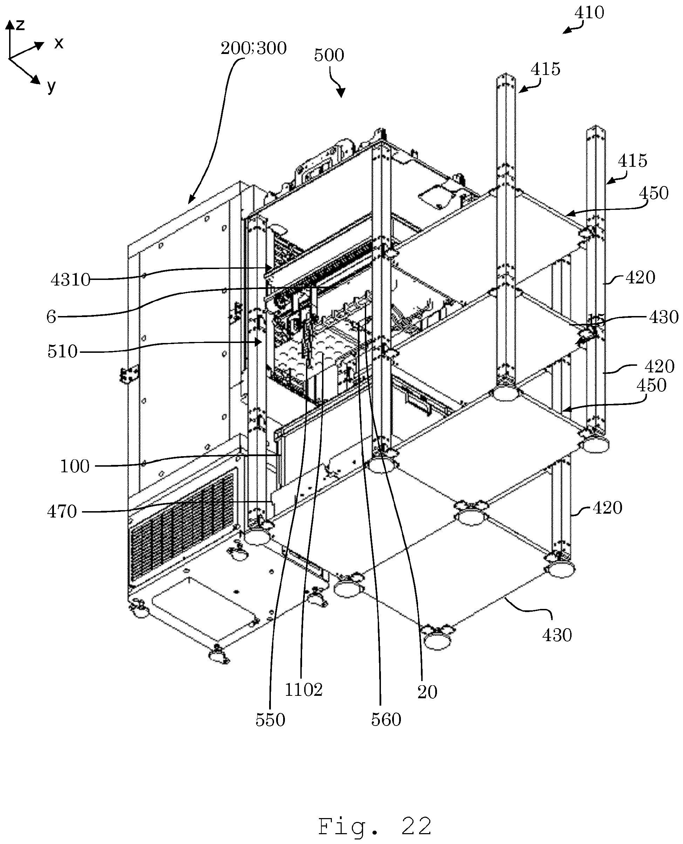

In Fig. 22 ist der zweite Schwenkarm 560 eingeschwenkt, sodass die zweite Verschiebeeinheit 540 mit dem zweiten Schwenkarm 560 das Temperierelement verschieben kann. Durch den Abstand der Wechseleinheit 4300 von der Lager- und Transporteinheit 100 können die Schwenkarme 550, 560 eingeschwenkt werden.

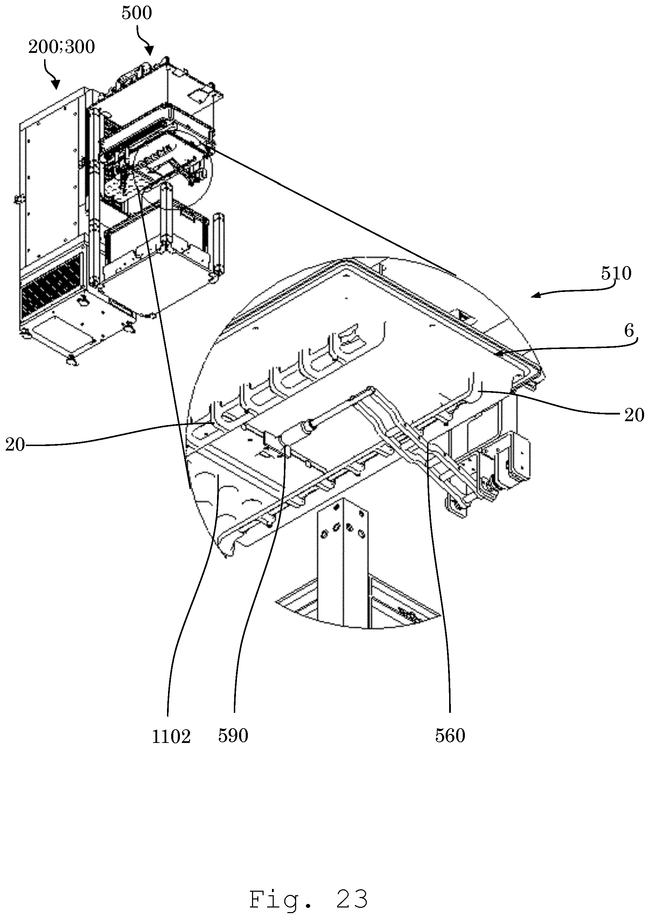

Fig. 23 zeigt ein Detail einer Wechseleinheit 510 einer Wechselstation 500 mit einem eingeschwenkten zweiten Schwenkarm 560 mit einem Magnetgreifer 590. Der Magnetgreifer 590 kann das Temperierelement 1102 an einer magnetischen Stelle fassen und durch Zug verschieben oder mechanisch durch Druck verschieben. In der Übersichtsabbildung mit der Wechselstation 500 sind zur Übersichtlichkeit verschiedene Bauelemente des Lagersystems 410 nicht dargestellt.

Es ist sichtbar, dass die ausgeschwenkten Schwenkarme 550, 560 an der Lager- und Transporteinheit 100 außen vorbeibewegt werden können. Ist die Gehäusekorpusverschlusseinheit 6 abgehoben, so können die Schwenkarme 550, 560 eingeschwenkt werden und das Temperierelement 1102 an der Deckelunterseite verschieben.

Es ist denkbar die Wechselstation in ihren Ausführungen und die Wechseleinheit in ihren Ausführungen so zu modifizieren, dass sie nur noch als Greifstation mit einer Greifeinheit zum Abheben und Auflegen für Gehäusekorpusverschlusseinheiten verwendet wird, z.B. durch Entfernen der Verschiebeeinheiten. Unter der Formulierung "im Wesentlichen" wird in allen hier benutzten Fällen, in denen diese Formulierung im Rahmen der vorliegenden Erfindung verwendet wird, eine Abweichung im Bereich von 1% bis 30 %, insbesondere von 1% bis 20 %, insbesondere 1% bis 10 %, insbesondere von 1% bis 5 %, insbesondere von 1% bis 2 % von der Festlegung, die ohne die Verwendung diese Formulierung gegeben wäre, verstanden.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombinationen aus den offenbarten Merkmalen gebildet werden.

### Bezugszeichenliste

- 1: Servereinheit
- 3: Kommunikationsnetzwerk
- 3a: Datenverbindung / Kommunikationsverbindung

- 100: Lager- und Transporteinheit
- 2: Gehäusekorpus
- 2b: Boden
- 4: Temperiervolumen
- 6: Gehäusekorpusverschlusseinheit
- 8: Träger
- 10: Oberseite
- 12: Erfassungseinrichtung
- 14: Griffelement/Greifabschnitt
- 16: Unterseite
- 18: Positioniereinheit
- 20: Führungselement
- 21: Strömungsrippen
- 22: Beabstandungselement
- 24: Abstandshalter
- 26: Auflagefläche
- 28: Isolationselement
- 30: unterer Abschnitt
- 32: Luftleitelement
- 34: Durchgangsöffnung
- 36: Dichtung
- 38: weitere Dichtung

- 1100: Temperiersystem
- 1102: Temperierelement

- 200: Regenerationsmagazin
- 202: Temperiereinheit
- 204: Gehäuse
- 206: Seitenfläche
- 208: Deckel
- 210: Frontseite
- 212: Öffnung
- 214: Verschlusselement
- 216a: erster Flügel
- 216b: zweiter Flügel
- 217: Temperierelementaufnahmeeinheit
- 218: Antriebseinheit
- 1102: Temperierelement
- 224: Gehäuseinnenraum
- 226: Luftführungselement
- 228: Erkennungsmittel
- 230: Kompressor
- 232: Auffangwanne
- 234: Halterahmen
- 236: Sensorelement
- 238: optisches Anzeigemittel
- 240: Luftstromführungseinrichtung
- 244: Verdampfer
- 34: Durchgangsöffnung
- 248: Rahmen
- 250: Tropföffnung
- 252: Rinne
- 254: Schutzelement
- 256: Zwischenboden
- 258: Tropfwasseröffnung
- 260: Seitenabschnitt
- 262: Streifen
- 264: Längsöffnungen
- S: Strömungspfad

- 300: weiteres Regenerationsmagazin
- 302: Temperiereinheit
- 304: Gehäuse
- 306: Seitenfläche
- 308: Deckel
- 310: Frontseite
- 312: Temperierelementzuführöffnung
- 314: Temperierelementabführöffnung
- 316: Gehäuseinnenraum
- 320: Halterahmen
- 322: Seitenabschnitt
- 324: weiterer Seitenabschnitt
- 326: Zwischenraum
- 330: Verdampfer
- 332: Luftstromführungseinrichtung
- 334: Erkennungsmittel
- 336: Abstandselement
- 338: Trennelement

- 410: Lagersystem
- 415: Vertikalträger
- 420: Pfeiler
- 430: Bodenplatte
- 440: Füße
- 450: Roboterebene
- 470: Lager- und Transporteinheitträger
- 475: Winkelprofile
- 476: Außenpanele
- 477: Endstück
- 478: Fußstück
- 480: Roboter
- 481: Deckpanele
- 485: Räder
- 490: Balkon
- 491: Wiegeeinheit
- 495: Trägerplattenebene
- 4100: Trägerplatten
- 4101: Nuten
- 4102: Lücke
- 4110: Dome
- 4120: Vertiefungen
- 4130: Lager- und Transporteinheitträgervertiefungen
- 4140: Erhebungen
- 4160: IR-Line-Arrays
- 4162: Akkuabdeckung
- 4165: Aufladekontakte
- 4170: RFID-Tags
- 4180: RFID-Reader
- 4190: Allseitenräder
- 4210: Positionierelemente
- 4215: Löcher
- 4220: Linien
- 4221: Quermarkierungen
- 4225: Aufstellteil
- 4226: Fußendstück
- 4227: Berandung
- 4228: Hebeteller
- 4230: Computer Chip
- 4235: Schneckengetriebe
- 4240: Kugel-Spindel
- 4241: Linearführung
- 4260: Eingreifbereich
- 4261: Eingreifer
- 4270: Motoren
- 4300: Vertikaltransporteinheit
- 4310: Fördereinheit
- 4320: Antriebseinheit
- 4330: Tragseil
- 4340: Elektromotor
- 4350: Getriebe
- 4360: Rollen
- 4370: Faden
- 4380: Welle
- 4390: Positionssensor
- 4400: Umlenker
- 4401: Spannrolle
- 4410: Elektronische Steuerung
- 4420: Endschalter

- 500: Wechselstation
- 510: Wechseleinheit
- 515: Greifhaken
- 530: Erste Verschiebeeinheit
- 535: Erste Linearverschiebeeinheit
- 540: Zweite Verschiebeeinheit
- 545: Erste Linearverschiebeeinheit
- 550: Erster Schwenkarm
- 560: Zweiter Schwenkarm
- 570: Greifhakenstellelemente
- 571: Greifhakenmotoren
- 572: Abstandshalter
- 580: Wechselsteuereinheit
- 590: Magnetgreifer

- E1: erste pyhsische Einheit
- E2: zweite pyhsische Einheit
- E3: dritte pyhsische Einheit
- E4: vierte pyhsische Einheit

## Patentansprüche

1. Lagersystem (410) mit wenigstens drei physischen Einheiten (E1; E2; E3),
a. wobei die erste physische Einheit (E1) als wenigstens eine Lager- und Transporteinheit (100) mit wenigstens einem austauschbaren, regenerierbaren Temperierelement (1102) ausgebildet ist,
b. wobei die zweite physische Einheit (E2) als wenigstens ein Regenerationsmagazin (200; 300) zur aktiven Regeneration von entladenen Temperierelementen (1102) aus Lager- und Transporteinheiten (100) ausgebildet ist, und
c. wobei die dritte physische Einheit (E3) als wenigstens eine Wechselstation (500) mit wenigstens einer Wechseleinheit (510) zum Wechseln von Temperierelementen (1102) bei Lager- und Transporteinheiten (100) ausgebildet ist.

2. Lagersystem (410) nach Anspruch 1,
**dadurch gekennzeichnet, dass**
dieses weiterhin wenigstens eine übergeordnete Servereinheit (1) aufweist, welche über wenigstens ein Kommunikationsnetzwerk (3) Daten- und/oder Kommunikationsverbindungen (3a) mit wenigstens drei physischen Einheiten (E1; E2; E3) ausbildet.

3. Lagersystem (410) nach wenigstens einem der vorgenannten Ansprüche,
**dadurch gekennzeichnet, dass**
das Lagersystem (410) vollautomatisiert ausgebildet ist.

4. Lagersystem nach wenigstens einem der vorgenannten Ansprüche,
**dadurch gekennzeichnet, dass**
dieses eine vierte physische Einheit (E4) aufweist, welche als Vertikaltransporteinheit (4300) ausgebildet ist.

5. Lagersystem (410) nach wenigstens einem der vorgenannten Ansprüche,
**dadurch gekennzeichnet, dass**
die Lager- und Transporteinheit (100) wenigstens einen Gehäusekorpus (2) sowie wenigstens eine Gehäusekorpusverschlusseinheit (6) zum Verschließen des Gehäusekorpus aufweist, wobei die Gehäusekorpusverschlusseinheit (6) wenigstens einen Träger sowie wenigstens eine daran angeordnete Positioniereinheit zur zumindest teilweisen Aufnahme wenigstens eines mobilen, regenerativen Temperierelements aufweist.

6. Lagersystem (410) nach wenigstens einem der vorgenannten Ansprüche,
**dadurch gekennzeichnet, dass**
das Regenerationsmagazin (200; 300) zur aktiven Regeneration von entladenen Temperierelementen (1102) aus Lager- und Transporteinheiten (100) wenigstens ein Gehäuse (204; 304), welches wenigstens eine Temperierelementzuführ- und/oder Temperierelementabführöffnung (212; 312, 314) für Temperierelemente (1102) aufweist, wobei die wenigstens eine Temperierelementzuführ- und/oder Temperierelementabführöffnung (212; 312, 314) mit wenigstens einem Verschlusselement (214) verschließbar ausgebildet ist, und eine im Gehäuseinnenraum (224; 316) angeordnete Temperierelementaufnahmeeinheit (217), welche über die wenigstens eine Temperierelementzuführ- und/oder Temperierelementabführöffnung (212; 312, 314) mit Temperierelementen (1102) bestückbar ausgebildet ist.

7. Lagersystem (410) nach wenigstens einem der vorgenannten Ansprüche,
**dadurch gekennzeichnet, dass**
die Wechseleinheit (510) wenigstens eine Greifeinheit, um die Lager- und Transporteinheit (100) oder einen Teil der Lager- und Transporteinheit (100), insbesondere eine Gehäusekorpusverschlusseinheit (6), zu greifen und eine erste Verschiebeeinheit (530), um das Temperierelement (1102) eine erste Strecke in einer Positioniereinheit (18) für das Temperierelement (1102) an der Lager- und Transporteinheit (100) oder der Gehäusekorpusverschlusseinheit (6) ein- oder herauszuschieben, aufweist.

8. Lagersystem nach wenigstens einem der vorgenannten Ansprüche,
**dadurch gekennzeichnet, dass**
die Vertikaltransporteinheit (4300) wenigstens eine bewegliche Fördereinheit (4310), eine Antriebseinheit (4320) zum Heben und Senken der Fördereinheit (4310), vier Vertikalträger (415) an denen die Antriebseinheit (4320) oberhalb der Fördereinheit (4310) angeordnet ist, wobei die Antriebseinheit (4320) die Fördereinheit (4310) durch vier Tragseile (4330) heben und senken kann, wobei die vier Tragseile (4330) jeweils an der Fördereinheit (4310) befestigt sind, wobei die vier Tragseile (4330) zum Heben oder Senken auf Rollen der Antriebseinheit (4320) auf- oder abgewickelt werden und wobei die Fördereinheit (4310) an einem oder mehreren der Vertikalträger (415) geführt ist, umfasst.

9. Verfahren zum Betrieb eines Lagersystem (410) nach wenigstens einem der vorgenannten Ansprüche 1 bis 8, wobei die wenigstens drei physischen Einheiten (E1; E2; E3) miteinander wenigstens ein Kommunikationsnetzwerk (3) mit Daten- und/oder Kommunikationsverbindungen (3a) ausbilden und in Abhängigkeit der über die Daten- und/oder Kommunikationsverbindungen (3a) erfassten und verarbeiteten Daten des Lagersystems (410) und/oder der einzelnen physischen Einheiten (E1; E2; E3) Aktionen bei wenigstens einer der physischen Einheiten (E1; E2; E3) ausgelöst werden.

10. Verfahren zum Betrieb eines intelligenten Lagersystems (410) nach wenigstens einem der vorgenannten Ansprüche 2 bis 8 mit wenigstens einer übergeordneten Servereinheit (1) , welche über wenigstens ein Kommunikationsnetzwerk (3) Daten- und/oder Kommunikationsverbindungen (3a) mit wenigstens drei physischen Einheiten (E1; E2; E3) unterhält, wobei die übergeordnete Servereinheit (1) alle Einheiten (E1; E2; E3) wenigstens überwacht, steuert, regelt und in Abhängigkeit der über die Daten- und/oder Kommunikationsverbindungen (3a) erfassten und verarbeiteten Daten Aktionen bei wenigstens einer der Einheiten (E1; E2; E3) auslöst.

11. Verfahren zum Betrieb eines Lagersystem nach Anspruch 9 oder 10, wenigstens weiterhin den Schritt aufweisend, dass die Aktionen der einzelnen Einheiten (E1; E2; E3) aufeinander abgestimmt werden.

12. Verwendung des Lagersystems (410) nach wenigstens einem der Ansprüche 1 bis 8 in nicht mit einer bestimmten Temperatur beaufschlagten Räumen, Gebäuden, Fahrzeugen; Flugzeugen und/oder Transporträumen.
